(19) Europäisches Patentamt
European Patent Office
Office européen des brevets

(11) **EP 2 068 488 A2**

(12) **EUROPEAN PATENT APPLICATION**

(43) Date of publication:
**10.06.2009 Bulletin 2009/24**

(51) Int Cl.:
***H04L 1/18*** *(2006.01)*     ***H04W 36/00*** *(2009.01)*

(21) Application number: **09156264.5**

(22) Date of filing: **25.04.2002**

(84) Designated Contracting States:
**DE GB IT**

(30) Priority: **26.04.2001 JP 2001129664**
             **26.02.2002 JP 2002050143**

(62) Document number(s) of the earlier application(s) in accordance with Art. 76 EPC:
**02009478.5 / 1 253 736**

(71) Applicant: **NTT DoCoMo, Inc.**
**Chiyoda-ku**
**Tokyo 100-6150 (JP)**

(72) Inventors:
• **Ohkubo, Shinzo**
  **Kanagawa 238-0011 (JP)**
• **Yoshino, Hitoshi**
  **Kanagawa 238-0026 (JP)**
• **Otsu, Toru**
  **Kanagawa 236-0057 (JP)**
• **Yamao, Yasushi**
  **Kanagawa 239-0822 (JP)**

(74) Representative: **Viering, Jentschura & Partner**
**Grillparzerstraße 14**
**81675 München (DE)**

Remarks:
This application was filed on 26-03-2009 as a divisional application to the application mentioned under INID code 62.

(54) **Data link transmission control methods, mobile communication systems, data link transmission control apparatus, base stations, mobile stations, mobile station control programs, and computer-readable recording media**

(57) A data link transmission control method performs data link transmission control comprising automatic repeat request control for transmission/reception of a packet between a mobile station (131, 231) and a plurality of base stations (102, 112, 122, 202, 212, 222), wherein a first base station (102, 202) stores (S322) and makes (S322) a copy of packet in which identification information specifying the packet has been added to packet addressed to said mobile station (131, 231), wherein said first base station (102, 202) delivers (S323) said packet copy to a second base station (112, 212), wherein said second base station stores (S324) said delivered packet copy, and wherein one or more base stations (102, 112, 202, 212) comprising said first base station (102, 202) transmit (S328) to said mobile station (131, 231) the packet accompanied by said identification information, or said delivered packet copy; wherein said mobile station (231) measures (S461) receiving qualities of signals transmitted from a plurality of base stations (202, 212, 222), and wherein, based (S462) on the receiving qualities for the respective base stations (202, 212, 222), said mobile station (231) or each base station (202, 212, 222) sends (S463) a request for a transition of a communication state to a base station (202, 212, 222) desired to make the transition of the communication state into another communication state, wherein said communication states comprise: a first state in which no packet transmission/reception is carried out to or from the mobile station (231); a second state in which a packet addressed to said mobile station (231) is provided with identification information for specifying said packet and in which the packet accompanied by the identification information can be transmitted to the mobile station (231); a third state in which a packet addressed to said mobile station (231) is provided with identification information for specifying said packet, a copy is made from the packet accompanied by the identification information, the packet copy is delivered, and the packet accompanied by the identification information can be transmitted; and a fourth state in which the packet copy is received from a base station (202, 212, 222) working in said third state and in which the packet copy can be transmitted to the mobile station (231).

    **(Cont. next page)**

Fig.18

**Description**

BACKGROUND OF THE INVEMTOPM

Field of the Invention

The present invention relates to data link transmission control methods, mobile communication systems, data link transmission control apparatus, base stations, mobile stations, mobile station control programs, and computer-readable recording media and, more particularly, to data link transmission control methods of performing data link transmission control comprising automatic repeat request control for transmission/reception of a packet between a mobile station and a plurality of base stations, mobile communication systems comprised of a mobile station and a plurality of base stations and configured to perform transmission/reception of information through a packet, data link transmission control apparatus mounted on a base station configured to perform transmission/reception of information through a packet to or from a mobile station, base stations and mobile stations making up a mobile communication system, mobile station control programs to be executed by a computer mounted on a mobile station, and computer-readable recording media.

Related Background Art

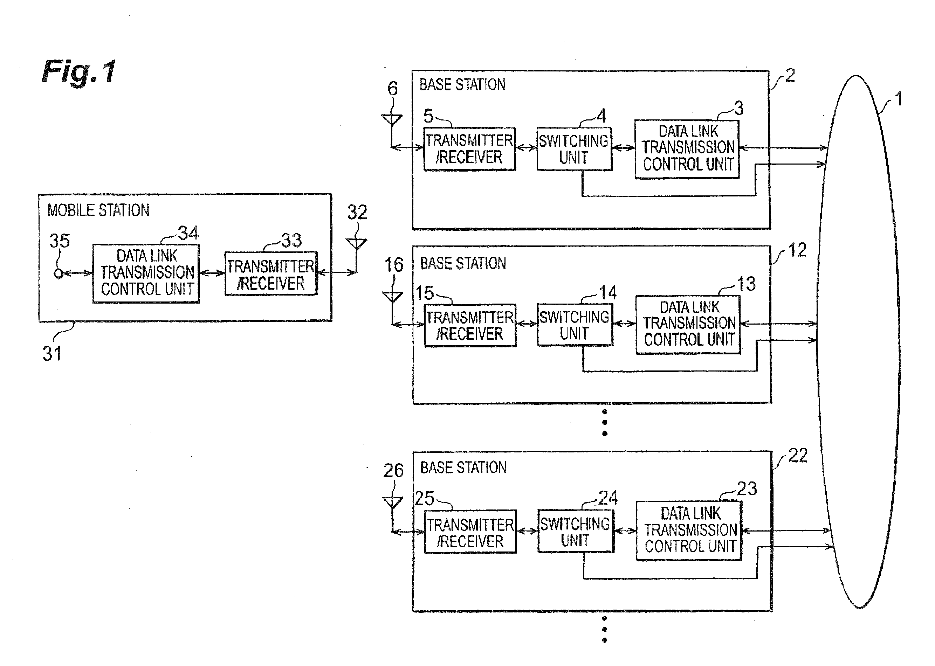

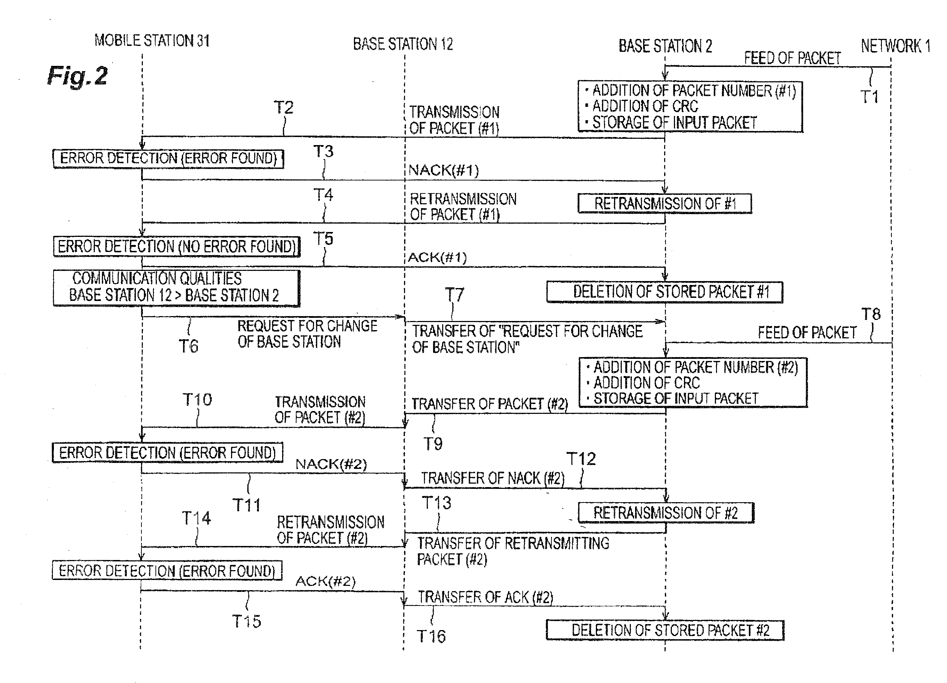

Fig. 1 and Fig. 2 are an example of a block diagram and a flowchart for illustrating a data link transmission control method comprising automatic repeat request control in a conventional mobile communication system.

At a base station 2, a data link transmission control unit 3 first accepts a packet from a network 1 at an arrow T1 in Fig. 2 and executes the data link transmission control while performing the automatic repeat request control. The data link transmission control unit 3 adds a packet number for enabling identification of the input packet, to the packet and further adds to the packet parity capable of error detection such as CRC (cyclic redundancy check) or the like in order to detect an error made during transmission. Thereafter, the packet is stored and is fed through a switching unit 4 to a transmitter/receiver 5. Then the transmitter/receiver 5 modulates the packet into a transmitting signal and then sends the transmitting signal through a base station antenna 6 to a mobile station 31 (at an arrow T2 in Fig. 2).

On the other hand, at the mobile station 31, a transmitter/receiver 33 receives the signal through a mobile station antenna 32 and thereafter outputs the received packet to a data link transmission control unit 34 to execute the data link transmission control comprising the automatic repeat request control. The data link transmission control unit 34 performs error detection using the parity added to the input packet. Wen the error detection ends in finding an error in the packet, the data link transmission control unit 34 transmits a NACK (Negative Acknowledgment) signal to the base station 2, thereby notifying the data link transmission control unit 3 of the base station 2 of a repeat request for retransmission of the packet (at an arrow T3 in Fig. 2). Then the data link transmission control unit 3 retransmits the packet according to the repeat request (at an arrow T4 in Fig. 2).

When there is no error found in the packet, the data link transmission control unit 34 outputs the packet from a data input/output terminal 35 and transmits an ACK (Acknowledgment) signal to the base station 2, thereby notifying the data link transmission control unit 3 of the base station 2 of an acknowledgment of arrival of the packet (at an arrow T5 in Fig. 2). Then the data link transmission control unit 3 deletes the packet with the packet number stored for retransmission.

Now, suppose the mobile station 31 has moved so as to deteriorate the communication quality with the base station 2 having been communicating heretofore with the mobile station 31 and improve the communication quality with another base station 12. Then the mobile station 31 sends a request for change of the communicating base station through the base station 12 to the base station 2 (at arrows T6 and T7 in Fig. 2). In response to the request, the data link transmission control unit 3 of the base station 2 changes the connection of the switching unit 4 from the transmitter/receiver 5 to the network 1 whereby a packet subjected to the automatic repeat request control can be transferred to the new base station 12 (at arrows T8 and T9 in Fig. 2). Then control is executed so as to output the packet through the switching unit 14 to the transmitter/receiver 15 without executing the automatic repeat request control at the data link transmission control unit 13 of the base station 12 (at an arrow T10 in Fig. 2).

Since this method is configured to let the single data link transmission control unit 3 continuously execute the automatic repeat request control, irrespective of the change of the communicating base station (at arrows T8 to T16 in Fig. 2), it is feasible to implement the packet transmission without reset of the packet number at every change of the base station as a communicating station.

Even if the communicating station is further changed to the base station 22 distant from the base station 2, the packet transmission can be performed under execution of the automatic repeat request control by the above method.

Concerning the handover in the conventional mobile communication systems, as described in Japanese Patent Application Laid-Open Gazette No. Hei.10-136426, a virtual zone control apparatus was employed to perform changeover between base stations upon handover, so as to decrease the handover control amount in the small radio zone scheme and reduce the hit (instantaneous interruption) time of communication line.

In the data link transmission control method in the conventional mobile communication systems as described above, however, since the data link transmission control unit 3 of the base station 2 having started the sequential packet transmission intensively performs the data link transmission comprising the automatic repeat request control, irrespective of the movement of the mobile station, the transmission delay time of a packet increases with movement of the mobile station because of increase of transfer of the packet between base stations after the data link transmission control. This increase of the transmission delay time posed a problem of degradation of throughput.

As described above, the data link transmission control method in the conventional mobile communication systems was ready for mobility of the mobile station by the configuration wherein the single base station performed the data link transmission control comprising the automatic repeat request control even on the occasion of movement of the mobile station into a cell of another base station, but had the problem of degradation of throughput due to the increase of the transmission delay time.

There is another known technique of providing a line control station for control of retransmission separately from the base stations in the mobile communication system in order to reduce the load on exchanges in the network (e.g., as also described in foregoing Japanese Patent Application Laid-Open Gazette No. Hei.10-136426).

In this technique, however, a packet coming from the network first arrives at the line control station, and the line control station produces a copy of the packet and delivers it to a packet-delivered base station. The packet-delivered base station has received a signal designating a base station to transmit the packet, from the mobile station. Then the packet-delivered base station determines whether the base station itself should transmit the packet, based on the mentioned signal. When the packet-delivered base station determines that the base station itself should transmit the packet, it transmits she packet to the mobile station. When at this time there occurs an error in the packet received by the mobile station, the mobile station sends a request for retransmission of the packet via the base station to the line control station. Since the packet was not retransmitted from the base station, but was retransmitted from the line control station as described above, there was the problem that the delay time increased for retransmission and the traffic volume increased between the line control station and the base station.

On the other hand, the system described in the foregoing Japanese Patent Application Laid-Open Gazette No. Hei.10-136426 decreased the handover control amount but still required the time of each handover and retransmission equivalent to or more than that before, thus raising the problem of interruption of communication.

SUMMARY OF THE INVENTION

The present invention has been accomplished in order to solve the above problems and an object of the present invention is to provide data link transmission control methods, mobile communication systems, data link transmission control apparatus, base stations, mobile stations, mobile station control programs, and computer-readable recording media capable of decreasing the transmission delay time of a packet to increase the throughput and enhance the performance of the entire system while adapting to movement of the mobile station.

In order to solve the above problems, a data link transmission control method according to the present invention is a data link transmission control method of performing data link transmission control comprising automatic repeat request control for transmission/reception of a packet between a mobile station and a plurality of base stations, wherein when during connection with a first base station, the mobile station sends a request for connection with a second base station to the first base station, the first base station transfers data link transmission control information to the second base station.

A mobile communication system according to the present invention is a mobile communication system comprising a mobile station and a plurality of base stations and configured to perform transmission/reception of information through a packet, wherein the mobile station comprises: mobile station transmission control means for performing data link transmission control comprising automatic repeat request control for transmission/reception of a packet to or from the base station; and connection request means for issuing a request for connection with a base station as a communicating station; wherein each the base station comprises: base station transmission control means for performing data link transmission control comprising automatic repeat request control for transmission/reception of a packet to or from the mobile station; and transferring means for transferring data link transmission control information to a second base station, wherein when the base station transmission control means receives a request for connection with a second base station from the mobile station, the base station transmission control means makes the transferring means transfer the data link transmission control information to the second base station.

A data link transmission control apparatus according to the present invention is a data link transmission control apparatus mounted on a base station for performing transmission/reception of information through a packet to or from a mobile station, comprising: transferring means for transferring to a second base station, data link transmission control information about data link transmission control comprising automatic repeat request control for transmission/reception of a packet; and base station transmission control means for, when receiving a request for connection with the second base station from the mobile station, making the transferring means transfer the data link transmission control information to the second base station.

Since the technical idea is common to the invention associated with these data link transmission control method, mobile communication system, and data link transmission control apparatus, the operation and effect will be described below on the basis of the invention associated with the data link transmission control method.

The data link transmission control method according to the present invention is a method of performing the data link transmission control comprising the automatic repeat request control for transmission/reception of a packet between the mobile station and a plurality of base stations. When the mobile station issues a request for connection with a second base station during connection with a first base station, the first base station transfers the data link transmission control information about the data link transmission control comprising the automatic repeat request control for transmission/reception of the packet, to the second base station. This causes the serial data link transmission control information to be transferred between the base stations performing the data link transmission control in accordance with movement of the mobile station, and the new base station succeeds to the data link transmission control to perform retransmission of only a packet with a negative acknowledgment.

For this reason, when compared with the conventional configuration wherein one base station continuously performs the data link transmission control, the method according to the present invention can avoid the increase of the transmission delay time of packet due to the increase of transfer of packet between base stations and thus can decrease the transmission delay time of packet to increase the throughput and enhance the performance of the entire system while adapting to movement of the mobile station.

In the data link transmission control method according to the present invention as described above, the first base station may transfer the data link transmission control information to the second base station at the same timing as the transfer timing of the packet addressed to the mobile station, to the second base station or may be transferred to the second base station at a timing different from the transfer timing of the packet addressed to the mobile station.

Namely, the mobile communication system according to the present invention can be configured so that the transferring means provided at the base stations also transfers a packet addressed to the mobile station to the second base station and the base station transmission control means makes the transferring means transfer the data link transmission controls information to the second base station at the timing identical with or different from the transfer timing of the packet addressed to the mobile station to the second base station. The data link transmission control apparatus according to the present invention can also be configured so that the transferring means also transfers a packet addressed to the mobile station to the second base station and the base station transmission control means makes the transferring means transfer the data link transmission control information to the second base station at the timing identical with or different from the transfer timing of the packet addressed to the mobile station to the second base station.

The data link transmission control method according to the present invention is desirably configured so that when the first base station as an originating station for transfer receives a packet addressed to the mobile station after having transferred to the second base station the data link transmission control information about the mobile station, or the packet addressed to the mobile station and the data link transmission control information on the basis of the request for connection with the second base station from the mobile station, the first base station transfers the received packet to the second base station. The mobile communication system according to the present invention is also desirably configured so that when the base station transmission control means provided at the base stations receives a packet addressed to the mobile station after having made the transferring means transfer the data link transmission control information about the mobile station, or the packet addressed to the mobile station and the data link transmission control information to the second base station on the basis of the request for connection with the second base station from the mobile station, the base station transmission control means makes the transferring means transfer the received packet to the second base station. The data link transmission control apparatus according to the present invention is also desirably configured so that when the base station transmission control means receives a packet addressed to the mobile station after having made the transferring means transfer the data link transmission control information about the mobile station, or the packet addressed to the mobile station and the data link transmission control information to the second base station on the basis of the request for connection with the second base station from the mobile station, the base station transmission control means makes the transferring means transfer the received packet to the second base station.

In this case, when a packet addressed to the mobile station is received at the first base station (the old base station) after the transfer to the second base station, it can be perfectly transferred to the second base station and thus the handover of the data link transmission control can be executed more securely between the base stations, which can enhance reliability of the data link transmission control.

In the data link transmission control method according to the present invention, desirably, when the second base station as a new base station receives a packet addressed to the mobile station between a time immediately after the request for connection with the second base station from the mobile station and a time of reception of the data link transmission control information about the mobile station, or the packet addressed to the mobile station and the data link transmission control information from the first base station, then second base station stores the received packet in a memory. In the mobile communication system according to the present invention, desirably, when the base station transmission control means provided at the base stations receives a packet addressed to the mobile station between a time immediately after the request for connection with the base station from the mobile station and a time of reception of the data link transmission control information about the mobile station, or the packet addressed to the mobile station and the data link transmission control information from a base station previously connected with the mobile station, the base station transmission control means stores the received packet in a memory. In the data link transmission control apparatus according to the present invention, desirably, when the base station transmission control means receives a packet addressed to the mobile station between a time immediately after the request for connection with the base station equipped with the data link transmission control apparatus, from the mobile station and a time of reception of the data link transmission control information about the mobile station, or the packet addressed to the mobile station and the data link transmission control information from a base station previously connected with the mobile station, the base station transmission control means stores the received packet in a memory.

In this case, when the second base station as a new base station receives a packet addressed to the mobile station between the time immediately after the connection request for connection with the second base station from the mobile station and the time of reception of the data link transmission control information about the mobile station, or the packet addressed to the mobile station and the data link transmission control information from the first base station, the packet is stored in the memory without being discarded at the second base station. Therefore, the handover of data link transmission control can be performed more securely between the base stations, which can enhance the reliability of data link transmission control.

In the data link transmission control method according to the present invention, desirably, when the second base station as a new base station receives a repeat request for retransmission of a packet from the mobile station and has not received the packet addressed to the mobile station from the first base station yet, the second base station transmits a transfer request for transfer of the packet addressed to the mobile station, to the first base station. In the mobile communication system according to Lhe present invention, desirably, when the base station transmission control means provided at the base stations receives a repeat request for retransmission of a packet from the mobile station and has not received the packet addressed to the mobile station from the previously connected base station yet, the base station transmission control means transmits a transfer request for transfer of the packet addressed to the mobile station, to the previously connected base station. In the data link transmission control apparatus according to the present invention, desirably, when the base station transmission control means receives a repeat request for retransmission of a packet from the mobile station and has not received the packet addressed to the mobile station from the previously connected base station yet, the base station transmission control means transmits a transfer request for transfer of the packet addressed to the mobile station, to the previously connected base station.

In this case, when the second base station as a new base station receives a repeat request for retransmission of a packet from the mobile station but has not received the packet addressed to the mobile station from the first base station as an old base station yet, the second base station transmits the transfer request for transfer of the packet addressed to the mobile station, to the first base station, whereby the packet addressed to the mobile station can be transferred quicker thereto and the processing speed for the handover can be increased, thereby increasing the throughput.

It is noted herein that the present invention is not limited to the embodiments wherein the packet addressed to the mobile station and the data link transmission control information are simultaneously transferred in the handover process of the data link transmission control from the first base station to the second base station, but can also be applied to embodiments of stepwise transfer as follows. Namely, the data link transmission control method according to the present invention may be arranged so that when the first base station receives the request for connection with the second base station from the mobile station, the first base station transfers only the data link transmission control information on the mobile station and so that when the first base station receives the transfer request for transfer of the packet addressed to the mobile station, from the second base station, the first base station transfers the packet addressed to the mobile station, to the second base station. The mobile communication system according to the present invention may also be configured so that when the base station transmission control means provided at the base stations receives the request for connection with the second base station from the mobile station, the base station transmission control means makes the transferring means transfer only the data link transmission control information on the mobile station and so that when the base station transmission control means receives the transfer request for transfer of the packet addressed to the mobile station, from the second base station, the base station transmission control means makes the transferring means transfer the packet addressed to the mobile station, to the second base station. The data link transmission control apparatus according to the present invention may also be configured so that when the base station transmission control means receives the request for connection with the second base station from the mobile station, the base station transmission control means makes the transferring means transfer only the data link transmission control information on the mobile station and so that when the base station transmission control means receives the transfer request for transfer of the packet addressed to the mobile station, from the second base station, the base station transmission control means makes the transferring means transfer the packet addressed to the mobile station, to the second base station.

When the packet addressed to the mobile station is transferred from the first base station to the second base station on the basis of reception of the transfer request for transfer of the packet addressed to the mobile station from the second base station as a new base station through communication between the first base station and the second base station as described above, the handover of data link transmission control can be executed more securely.

The packet transfer is desirably carried out either in packet units or in block units obtained by dividing each packet. By enabling the transfer in block units, it becomes feasible to implement retransmission of only blocks with negative acknowledgement between the base stations and thus provide the advantage of capability of reducing the packet transfer volume.

Incidentally, in the data link transmission control method of the present invention, desirably, a first base station encapsulates the data link transmission control information and the packets that are transmitted, records the total value of the length of the data link transmission control information and the length of the packet that is transmitted, which expresses the length of the encapsulated packet obtained by encapsulation, in the header of each encapsulated packet, and transmits these encapsulated packets, and, in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet, judges that the encapsulated packets are constructed containing data link transmission control information.

Furthermore, in the mobile communication system of the present invention, desirably, the transmitting means comprise encapsulating means for encapsulating the data link transmission control information and the packets that are transmitted, encapsulated packet transmitting means for recording the total value of the length of the data link transmission control information and the length of each packet that is transmitted, which expresses the length of the encapsulated packet that is obtained by encapsulation, in the header of each encapsulated packet, and transmitting these encapsulated packets, and construction judging means that judge that the encapsulated packets are constructed containing data link transmission control information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

Furthermore, in the data link transmission control apparatus of the present invention, desirably, the transmitting means comprise encapsulating means for encapsulating the data link transmission control information and the packets that are transmitted, encapsulated packet transmitting means for recording the total value of the length of the data link transmission control information and the length of each packet that is transmitted, which expresses the length of the encapsulated packet that is obtained by encapsulation, in the header of each encapsulated packet, and transmitting these encapsulated packets, and construction judging means that judge that the encapsulated packets are constructed containing data link transmission control information in cases where the length obtained by subtracting the length of the header of the transmitted encapsulated packet from the length of the encapsulated packet that is recorded in the header of the encapsulated packet is not equal to the length of the transmitted packet that is recorded in the header of the transmitted packet.

In these inventions, it can be reliably judged in the first base station whether or not an encapsulated packet that has been transmitted contains data link transmission control information, so that control can be smoothly performed on the basis of the data link transmission control information.

Incidentally, the present invention also permits employment of embodiments wherein the base station performing the data link transmission control transmits to the mobile station, control base station identification information, for identification of the base station performing the data link transmission control, instead of the data link transmission control information.

Namely, a data link transmission control method according to the present invention is a data link transmission control method of performing data link transmission control comprising automatic repeat request control for transmission/ reception of a packet between a mobile station and a plurality of base stations, wherein a base station performing the data link transmission control transmits to the mobile station, control base station identification information for identification of the base station performing the data link transmission control, instead of data link transmission control information, and wherein the mobile station identifies the base station performing the data link transmission control, based on the control base station identification information.

A mobile communication system According to the present invention is a mobile communication system comprising a mobile station and a plurality of base stations and configured to perform transmission/reception of information through a packet, wherein each the base station comprises: base station transmission control means for performing data link transmission control comprising automatic repeat request control for transmission/reception of a packet to or from the mobile station; and transmitting means for transmitting to the mobile station, control base station identification information for identification of the base station performing the data link transmission control, instead of data link transmission control information; and wherein the mobile station comprises: mobile station transmission control means for identifying the base station performing the data link transmission control, based on the control base station identification information, and performing data link transmission control comprising automatic repeat request control for transmission/reception of a packet to or from the base station; and connection request means for issuing a request for connection with a base station as a communicating station.

A data link transmission control apparatus according to the present invention is a data link transmission control apparatus mounted on a base station for performing transmission/reception of information through a packet to or from a mobile station, comprising: base station transmission control means for performing data link transmission control comprising automatic repeat request control for transmission/reception of a packet to or from the mobile station; and transmitting means for transmitting to the mobile station, control base station identification information for identification of the base station performing the data link transmission control, instead of data link transmission control information.

In this case, the base station performing the data link transmission control transmits to the mobile station the control base station identification information for identification of the base station performing the data link transmission control, instead of the data link transmission control information, whereby the mobile station can identify the base station performing the data link transmission control, based on the control base station identification information. This permits the mobile station to perform the data link transmission control comprising the automatic repeat request control for transmission/reception of packet (e.g., a connection request for connection with a new base station or the like) with respect to the base station performing the data link transmission control. When the mobile station and the base station perform the data link transmission control using the control base station identification information instead of the data link transmission control information in this way, the data volume of control information transmitted and received can be reduced, so as to decrease the traffic volume of the network.

Incidentally, in the data link transmission control method of the present invention, desirably, the base station encapsulates the control base station identification information and the packets that are transmitted, records the total value of the length of the control base station identification information and the length of each packet that is transmitted, which expresses the length of the encapsulated packet obtained by encapsulation, in the header of each encapsulated packet, and transmits these encapsulated packets, and, in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet, judges that the encapsulated packets are constructed containing control base station identification information.

Furthermore, in the mobile communication system of the present invention, desirably, the transmitting means comprise encapsulating means for encapsulating the control base station identification information and the packet that is transmitted, encapsulated packet transmitting means for recording the total value of the length of the control base station identification information and the length of the packet that is transmitted, which expresses the length of the encapsulated packet that is obtained by encapsulation, in the header of each encapsulated packet, and transmitting these encapsulated packets, and construction judging means that judge that the encapsulated packets are constructed containing control base station identification information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

Furthermore, in the data link transmission control apparatus of the present invention, desirably, the transmitting means comprise encapsulating means for encapsulating the control base station identification information and the packet that is transmitted, encapsulated packet transmitting means for recording the total value of the length of the control base station identification information and the length of the packet that is transmitted, which expresses the length of the encapsulated packet that is obtained by encapsulation, in the header of each encapsulated packet, and transmitting these encapsulated packets, and construction judging means that judge that the encapsulated packets are constructed containing control base station identification information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

In these inventions, it can be reliably judged in the base station whether or not an encapsulated packet that has been transmitted contains control base station identification information, so that control can be smoothly performed on the basis of the control base station identification information.

In order to achieve the abovementioned object, the data link transmission control method of the present invention is a data link transmission control method of performing data link transmission control comprising automatic repeat request control for transmission/reception of a packet between a mobile station and a plurality of base stations, wherein a first base station stores and makes a copy of packet in which identification information specifying the packet has been added to packet addressed to the mobile station, wherein the first base station delivers the packet copy to a second base station, wherein the second base station stores the delivered packet copy, and wherein one or more base stations comprising the first base station transmit to the mobile station the packet accompanied by the identification information, or the delivered packet copy.

Specifically, in this method, a first base station out of a plurality of base stations stores and makes a copy packet in which identification information (e. g., tentative numbers, letters, symbols or combinations of the) used to specify the packet has been added to packet addressed to the mobile station, and delivers the packet to the other base stations. Furthermore, in regard to the packet to which this identification information is added, the first base station may also add identification information to the packet itself, and may also receive the packet to which identification information has been added beforehand from other base stations.

Furthermore, the other base stations store the delivered packet. Afterward, one or more base stations comprising the first base station transmit the packet to which identification has been added or the delivered packet to the mobile station. Thus, since packet can be stored in the respective base stations without providing a circuit control station that performs packet delivery separately from the base stations, and since one or more base stations transmit packet to the mobile station, the traffic within the network can be reduced, and the throughput can be increased by shortening the transmission delay time of the packet, so that the performance of the overall system can be improved.

In order to accomplish the above object, a data link transmission control method according to the present invention is a data link transmission control method of performing data link transmission control comprising automatic repeat request control for transmission/reception of a packet between a mobile station and a plurality of base stations, wherein a first base station adds to a packet addressed to the mobile station, identification information for specifying the packet, wherein the first base station stores the pocket accompanied by the identification information, and makes a copy of the packet, wherein the first base station delivers the packet copy to a second base station, wherein the second base station stores the delivered packet copy, and wherein one or more base stations comprising the first base station transmit to the mobile station the packet accompanied by the identification information, or the delivered packet copy.

Namely, in this method, a first base station out of a plurality of base stations adds to a packet addressed to the mobile station, the identification information for specifying the packet (e.g., a unique number, character, symbol, or combination of these), stores the packet to which the identification information is added, makes a copy of the packet, and delivers the packet copy to a second base station. Then the second base station stores the delivered packet copy. After that, one or more base stations comprising the first base station transmit the packet accompanied by the identification information or the delivered packet copy to the mobile station. Since each base station stores the packet and one or more base stations transmit the packet to the mobile station without providing an extra line control station for delivery of packet separately from the base stations as described above, the traffic volume can be reduced in the network and the transmission delay time of packet can be reduced, which can increase the throughput and enhance the performance of the entire system.

In the data link transmission control method according to the present invention, desirably, the base stations (comprising the first base station and the second base station) perform: deleting the packet on the basis of a timeout of a timer for the packet; deleting the packet on the basis of a notification that a packet identical with the packet has arrived at the mobile station; or, on the basis of a notification of identification information for specifying a packet to be deleted, deleting the packet corresponding to the identification information. This can facilitate the process of deleting the packet under storage at the base stations.

In this case, desirably, when the first base station notifies the second base station of the identification information for specifying the packet to be deleted, the first base station employs one or a combination of two or more methods selected from a first method of providing a notification of the identification information every time a packet is deleted, a second method of providing a notification of identification information of a packet deleted last in a predetermined time, and a third method of, upon deletion of a specific packet determined based on a predetermined rule, providing a notification of identification information of the packet.

In the data link transmission control method according to the present invention, desirably, when the first base station receives a request from the mobile station that a new base station should be designated as a packet-delivered base station, the first base station makes a copy of the packet accompanied by the identification information under storage at the first base station, and delivers the packet copy to the new base station. This permits the new base station to acquire the packet with the identification information stored at the first base station and thus to operate as a packet-delivered base station according to the request from the mobile station.

In the data link transmission control method according to the present invention, desirably, when the second base station receives a request from the mobile station that the second base station should be excluded from packet-delivered base stations, the second base station deletes the packet copy addressed to the mobile station under storage at the second base station. In this configuration, the base station excluded from the packet-delivered base stations deletes the packet copy addressed to the mobile station under storage, whereby unnecessary packets can be quickly discarded. The second base station may be arranged to receive the request for the exclusion from the mobile station, directly from the mobile station or via the first base station.

In the data link transmission control method according to the present invention, desirably, when the first base station, the second base station, or both of these receive and store a packet addressed to the mobile station, the base stations send a notification of storage of the packet to the mobile station; after reception of the notification, the mobile station selects one base station out of the base stations having provided the notification and issues a request for transmission of the packet to the base station; and the base station receiving the request transmits the packet. Namely, not only the first base station, but also the second base station store the packet addressed to the mobile station and the base stations send the notification of storage of the packet to the mobile station, whereby the transmission of the packet to the mobile station is implemented from one base station selected and requested to transmit the packet by the mobile station.

In this case, desirably, when the first base station, the second base station, or both of these receive the transmission request from the mobile stations while storing a plurality of packets addressed to the mobile station, the base stations transmit the packets to the mobile station and notify the mobile station of storage of the plurality of packets addressed to the mobile station. This makes it feasible to notify the mobile station of storage of packets together and thereby reduce the load of the notification process. For example, a conceivable embodiment is such that the mobile station is notified of existence of subsequent packets to a packet transmitted from the base station in the piggyback system.

In the data link transmission control method according to the present invention, desirably, when the mobile station changes a base station desired to transmit a packet addressed to the mobile station itself, the mobile station notifies an original base station before the change of discontinuation of subsequent transmission and sends to a new base station after the change, a request for transmission of a packet addressed to the mobile station itself and identification information of the first packet of a transmitted object. In this method, the communication is interrupted with the old base station before the change and the packet transmission from the new base station after the change to the mobile station is restarted from the packet corresponding to the identification information of the first packet of the transmitted object according to the request from the mobile station, whereby the old base station can be smoothly changed to the new base station desired to transmit the packet addressed to the mobile station.

In the data link transmission control method according to the present invention, desirably, the mobile station measures receiving qualities of signals transmitted from a plurality of base stations; the mobile station selects a first base station desired to transmit a packet addressed to the mobile station itself, based on the receiving qualities for the respective base stations; and the mobile station sends a request for transmission of the packet addressed to the mobile station itself, to the first base station thus selected. This makes it feasible, for example, to select a base station with the highest receiving quality as the first base station and thus implement the transmission of packet from the selected base station to the mobile station in a good condition.

In the data link transmission control method according to the present invention, desirably, the mobile station measures receiving qualities of signals transmitted from a plurality of base stations, the mobile station selects a first base station desired to transmit a packet addressed to the mobile station itself, based on the receiving qualities for the respective base stations; the mobile station notifies the first base station thus selected, of the receiving qualities for the respective base stations; based on the receiving qualities for the respective base stations, the first base station determines for each of the other base stations whether a packet to be delivered from the first base station is to be transmitted to the mobile station; and the first base station provides instructions of transmission operation based on the result of the determination, to the other base stations. This permits the other base stations to properly perform the transmission operation or transmission avoidance operation in accordance with the operation instructions to each of the other base stations according to the result of the determination based on the receiving qualities for the respective base stations.

In the data link transmission control method according to the present invention, desirably, when the mobile station receives identical packets from respective base stations, the mobile station performs diversity reception of the packets, which can enhance the receiving quality.

In the data link transmission control method according to the present invention, desirably, the mobile station measures receiving qualities of signals transmitted from a plurality of base stations; and, based on the receiving qualities for the respective base stations, the mobile station or each base station sends a request for a transition of a communication state to a base station desired to make the transition of the communication state into another communication state. In this case, the mobile station issues a transition request for a transition into an appropriate communication state according to a time-average receiving quality, whereby the base station can be transitioned into the appropriate communication state.

Desirably, the communication states comprise: a first state in which no packet transmission/reception is carried out to or from the mobile station; a second state in which a packet addressed to the mobile station is provided with identification information for specifying the packet and in which the packet accompanied by the identification information can be transmitted to the mobile station; a third state in which a packet addressed to the mobile station is provided with identification information, for specifying the packet, a copy is made from the packet accompanied by the identification information, the packet copy is delivered, and the packet accompanied by the identification information can be transmitted; and a fourth state in which the packet copy is received from a base station working in the third state and in which the packet copy can be transmitted to the mobile station.

Furthermore, in the data link transmission control method of the present invention, desirably, a first base station encapsulates the identification information and the packets that are delivered, records the total value of the length of the identification information and the length of the delivered packet, which expresses the length of the encapsulated packet obtained by encapsulation, in the header of each encapsulated packet, and delivers these encapsulated packets, and, in cases where the length obtained by subtracting the length of the header of the encapsulated packet from the length of the encapsulated packet that is recorded in the header of the delivered encapsulated packet is not equal to the length of the delivered packet that is recorded in the header of the delivered packet, judges that the encapsulated packets are constructed containing identification information. In this case, it can be reliably judged in the base station whether or not an encapsulated packet that has been delivered contains identification information, so that control can be smoothly performed on the basis of the identification information.

Incidentally, the invention associated with the above-stated data link transmission control can also be captured as the invention of the mobile communication systems described below. Since the technical idea is common to the invention of these, the operation and effect are substantially the same.

Specifically, the mobile communication system of the present invention is a mobile communication system comprising a mobile station and a plurality of base stations and configured to perform transmission/reception of information through a packet and perform data link transmission control comprising automatic repeat request control, wherein each the base station comprises: copying means for making a copy of packet in which identification information specifying the packet has been added to packet addressed to the mobile station; delivering means for delivering the packet copy to another base station; storing means for storing the packet accompanied by the identification information at the base station of its own or a packet delivered from another base station; and transmitting means for transmitting the packet accompanied by the identification information or the delivered packet to the mobile station.

Namely, a mobile communication system according to the present invention is a mobile communication system comprising a mobile station and a plurality of base stations and configured to perform transmission/reception of information through a packet and perform data link transmission control comprising automatic repeat request control, wherein each the base station comprises: identification information adding means for adding to a packet addressed to the mobile station, identification information for specifying the packet; copying means for making a copy of the packet accompanied by the identification information; delivering means for delivering the packet copy to another base Station; storing means for storing the packet accompanied by the identification information at the base station of its own or a packet delivered from another base station; and transmitting means for transmitting the packet accompanied by the identification information or the delivered packet to the mobile station.

In this mobile communication system according to the present invention, desirably, the base station further comprises: deleting means for deleting the packet stored by the storing means.

In this method, desirably, the base station further comprises: deleted packet notifying means for notifying another base station of the identification information of the packet to be deleted, by either one method or a combination of two or more methods selected from a first method of, every time the base station deletes a packet, providing a notification of the identification information of the deleted packet, a second method of providing a notification of identification information of a packet deleted last in a predetermined time, and a third method of, upon deletion of a specific packet determined based on a predetermined rule, providing a notification of identification information of the packet.

In the mobile communication system according to the present invention, desirably, the base station further comprises: packet retransmitting means for, upon reception of a request for retransmission of a packet from the mobile station, retransmitting the packet in response to the request.

In the mobile communication system according to the present invention, desirably, the base station further comprises storage notifying means for, upon reception and storage of a packet addressed to the mobile station, sending a notification of the storage of the packet to the mobile station; the transmitting means transmits the packet to the mobile station in response to a request from the mobile station; and the mobile station further comprises: selecting means for, upon reception of the notification, selecting one base station out of base stations sending the notification; and transmission request means for sending a request for transmission of the packet to the base station selected.

In this system, desirably, the base station further comprises: notification control means performing such control that, when receiving a transmission request from the mobile station while storing a plurality of packets addressed to the mobile station, the notification control means makes the transmitting means transmit the packets to the mobile station and makes the storage notifying means send a notification of storage of the plurality of packets addressed to the mobile station, thereto.

In the mobile communication system according to the present invention, desirably, the mobile station further comprises: change occasion notifying means for, when the mobile station changes a base station desired to transmit a packet addressed to the mobile station itself, to another base station, sending a notification of discontinuation of subsequent transmission to the original base station before the change and sending to the new base station after the change, a request for transmission of a packet addressed to the mobile station of its own and identification information of the first packet of a transmitted object.

In the mobile communication system according to the present invention, desirably, the mobile station further comprises: measuring means for measuring receiving qualities of signals transmitted from a plurality of base stations; selecting means for selecting a first base station desired to transmit a packet addressed to the mobile station of its own, based on the receiving qualities for the respective base stations; and transmission requesting means for sending a request for transmission of a packet addressed to the mobile station of its own to the first base station selected.

In the mobile communication system according to the present invention, desirably, the mobile station further comprises: measuring means for measuring receiving qualities of signals transmitted from a plurality of base stations; selecting means for selecting a first base station desired to transmit a packet addressed to the mobile station of its own, based on the receiving qualities for the respective base stations; and receiving quality notifying means for notifying the first base station selected of the receiving qualities for the respective base stations; and the base station further comprises: determining means for, when the base station of its own is selected as the first base station, determining for each of other base stations whether a packet to be delivered from the base station of its own is to be transmitted to the mobile station, based on the receiving qualities for the respective base stations; and instructing means for providing instructions of transmission operation based on the result of the determination, to the other base stations.

In the mobile communication system according to the present invention, desirably, the mobile station further comprises: diversity reception means for, upon reception of identical packets from respective base stations, performing diversity reception of the packets.

In the mobile communication system according to the present invention, desirably, the mobile station further comprises measuring means for measuring receiving qualities of signals transmitted from a plurality of base stations; decision means for making a decision about in which communication state each base station is out of a plurality of predetermined communication states, based on the receiving qualities for the respective base stations; and state transition request means for sending a request for a transition of a communication state to a base station desired to make the transition of the communication state into another state, based on the result of the decision.

In this system, desirably, the plurality of predetermined communication states comprise; a first state in which no packet transmission/reception is carried out to or from the mobile station; a second state in which a packet addressed to the mobile station is provided with identification information for specifying the packet and in which the packet accompanied by the identification information can be transmitted to the mobile station; a third state in which a packet addressed to the mobile station is provided with identification information for specifying the packet, a copy is made from the packet accompanied by the identification information, the packet copy is delivered, and the packet accompanied by the identification information can be transmitted; and a fourth state in which the packet copy is received from a base station working in the third state and in which the packet copy can be transmitted to the mobile station.

Furthermore, in the mobile communication system of the present invention, desirably, the delivering means comprise encapsulating means for encapsulating the identification information and the packets that are delivered, encapsulated packet delivering means for recording the total value of the length of the identification information and the length of the packet that is delivered, which expresses the length of the encapsulated packet obtained by encapsulation, in the header of each encapsulated packet, and delivering these encapsulated packets, and construction judging means that judge that the encapsulated packets are constructed containing identification information in cases where the length obtained by subtracting the length of the header of the encapsulated packet from the length of the encapsulated packet that is recorded in the header of the delivered encapsulated packet is not equal to the length of the delivered packet that is recorded in the header of the delivered packet.

Incidentally, the essence of the invention associated with the above-stated data link transmission control and mobile communication systems can also be captured as the invention of the base stations and mobile stations described below. Since the technical idea is common to the invention of these, the operation and effect are substantially the same.

Specifically, the base station of the present invention is A base station, together with a mobile station, making up a mobile communication systems configured to perform transmission/reception of information through a packet and perform data link transmission control comprising automatic repeat request control, the mobile communication system comprising a plurality of base stations, the base station comprising: copying means for making a copy of packet in which identification information specifying the packet has been added to packet addressed to the mobile station; delivering means for delivering the packet copy to another base station; storing means for storing the packet accompanied by the identification information at the base station of its own and a packet delivered from another base station; and transmitting means for transmitting the stored packets to the mobile station.

Namely, a base station according to the present invention is a base station, together with a mobile station, making up a mobile communication system configured to perform transmission/reception of information through a packet and perform data link transmission control comprising automatic repeat request control, the mobile communication system comprising a plurality of base stations, the base station comprising: identification information adding means for adding to a packet addressed to the mobile station, identification information for specifying the packet; copying means for making a copy of the packet accompanied by the identification information; delivering means for delivering the packet copy to another base station; storing means for storing the packet accompanied by the identification information at the base station of its own and a packet delivered from another base station; and transmitting means for transmitting the stored packets to the mobile station.

In this case, desirably, the base station is configured to further comprise: determining means for, when the mobile station configured to select a first base station desired to transmit a packet addressed to the mobile station, based on receiving qualities of signals transmitted from a plurality of base stations, and notify the first base station of the receiving qualities for the respective base stations, selects the base station of its own as the first base station, determining for each of other base stations whether a packet to be delivered from the base station of its own is to be transmitted to the mobile station, based on the receiving qualities for the respective base stations; and instructing means for providing instructions of transmission operation based on the result of the determination, to the other base stations.

Furthermore, in the base station of the present invention, desirably, the delivering means comprise encapsulating means for encapsulating the identification information and the packets that are delivered, encapsulated packet delivering means for recording the total value of the length of the identification information and the length of the packet that is delivered, which expresses the length of the encapsulated packet obtained by encapsulation, in the header of each encapsulated packet, and delivering these encapsulated packets, and construction judging means that judge that the encapsulated packets are constructed containing identification information in cases where the length obtained by subtracting the length of the header of the encapsulated packet from the length of the encapsulated packet that is recorded in the header of the delivered encapsulated packet is not equal to the length of the delivered packet that is recorded in the header of the delivered packet.

A mobile station according to the present invention is a mobile station, together with a plurality of base stations, making up a mobile communication system configured to perform transmission/reception of information through a packet and perform data link transmission control comprising automatic repeat request control, the mobile station comprising: measuring means for measuring receiving qualities of signals transmitted from a plurality of base stations; selecting means for selecting a first base station desired to transmit a packet addressed to the mobile station of its own, based on the receiving qualities for the respective base stations; and transmission request means for sending a request for transmission of the packet addressed to the mobile station of its own to the first base station selected.

Another mobile station according to the present invention is a mobile station, together with a plurality of base stations, making up a mobile communication system configured to perform transmission/reception of information through a packet and perform data link transmission control comprising automatic repeat request control, the mobile station comprising: measuring means for measuring receiving qualities of signals transmitted from a plurality of base stations having a function of determining for each of other base stations whether a packet to be delivered from the base station of its own is to be transmitted to the mobile station, based on the receiving qualities for the respective base stations, and providing instructions of transmission operation based on the result of the determination, to the other base stations; selecting means for selecting a first base station desired to transmit a packet addressed to the mobile station of its own, based on the receiving qualities for the respective base stations; and receiving quality notifying means for notifying the first base station selected, of the receiving qualities for the respective base stations.

Another mobile station according to the present invention is a mobile station, together with a plurality of base stations, making up a mobile communication system configured to perform transmission/reception of information through a packet and perform data link transmission control comprising automatic repeat request control, the mobile station comprising: measuring means for measuring receiving qualities of signals transmitted from a plurality of base stations; decision means for making a decision about in which communication state each base station is out of a plurality of predetermined communication states, based on the receiving qualities for the respective base stations; and state transition request means for sending a request for a transition of a communication state to a base station desired to make the transition of the communication state into another state, based on the result of the decision.

In this case, desirably, the plurality of predetermined communication states comprise: a first state in which no packet transmission/reception is carried out to or from the mobile station; a second state in which a packet addressed to the mobile station is provided with identification information for specifying the packet and in which the packet accompanied by the identification information can be transmitted to the mobile station; a third state in which a packet addressed to the mobile station is provided with identification information for specifying the packet, a copy is made from the packet accompanied by the identification information, the packet copy is delivered, and the packet accompanied by the identification information can be transmitted; and a fourth state in which the packet copy is received from a base station working in the third state and in which the packet copy can be transmitted to the mobile station.

The above-stated each mobile station is desirably configured to further comprise diversity reception means for, upon reception of identical packets from respective base stations, performing diversity reception of the packets.

Incidentally, the invention associated with the above-stated mobile stations can also be described as mobile station control programs to be executed by a computer mounted on the mobile stations, which will be described below.

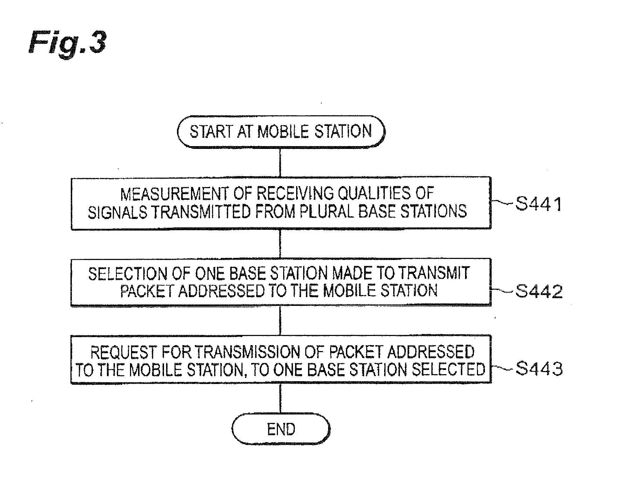

Namely, a mobile station control program according to the present invention is a mobile station control program to be executed by a computer mounted on a mobile station, together with a plurality of base stations, making up a mobile communication system configured to perform transmission/reception of information through a packet and perform data link transmission control comprising automatic repeat request control, as shown in Fig. 3, the computer being configured to execute: a measuring step S441 of measuring receiving qualities of signals transmitted from a plurality of base stations; a selecting step 5442 of selecting a first base station desired to transmit a packet addressed to the mobile station of its own, based on the receiving qualities for the respective base stations; and a transmission request step S443 of sending a request for transmission of the packet addressed to the mobile station of its own to the first base station selected.

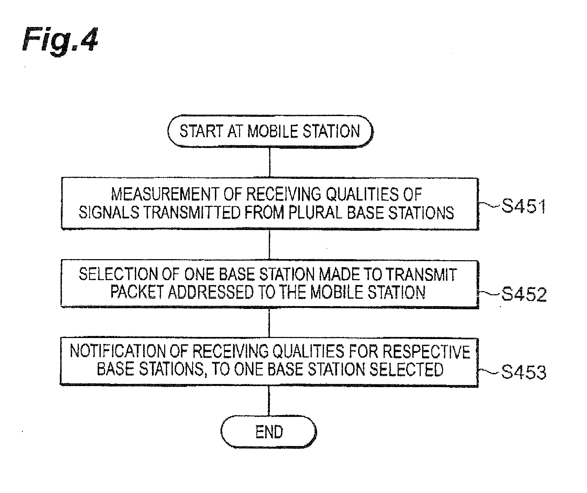

Another mobile station control program according to the present invention is a mobile station control program to be executed by a computer mounted on a mobile station, together with a plurality of base stations, making up a mobile communication system configured to perform transmission/reception of information through a packet and perform data link transmission control comprising automatic repeat request control, as shown in Fig. 4, the computer being configured to execute: a measuring step S451 of measuring receiving qualities of signals transmitted from a plurality of base stations having a function of determining for each of other base stations whether a packet to be delivered from the base station of its own is to be transmitted to the mobile station, based on the receiving qualities for the respective base stations, and providing instructions of transmission operation based on the result of the determination, to the other base stations; a selecting step S452 of selecting a first base station desired to transmit a packet addressed to the mobile station of its own, based on the receiving qualities for the respective base stations; and a receiving quality notifying step S453 of notifying the first base station selected, of the receiving qualities for the respective base stations.

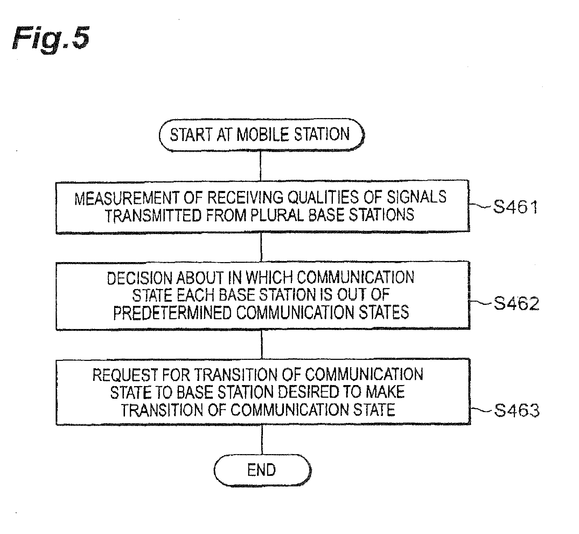

Another mobile station control program according to the present invention is a mobile station control program to be executed by a computer mounted on a mobile station, together with a plurality of base stations, making up a mobile communication system configured to perform transmission/reception of information through a packet and perform data link transmission control comprising automatic repeat request control, as shown in Fig. 5, the computer being configured to execute: a measuring step S461 of measuring receiving qualities of signals transmitted from a plurality of base stations; a decision step S462 of making a decision about in which communication state each base station is out of a plurality of predetermined communication states, based on the receiving qualities for the respective base stations; and a transition request step S463 of sending a request for a transition of a communication state to a base station desired to make the transition of the communication state into another state, based on the result of the decision.

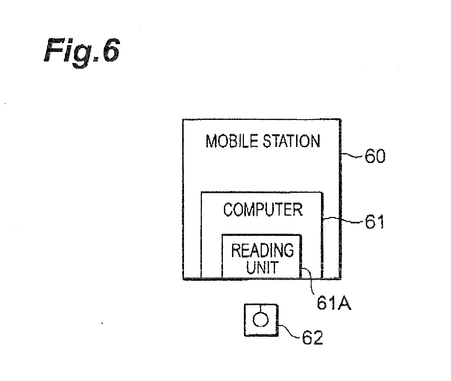

Computer-readable recording media according to the present invention are **characterized in that** either one of the above-stated mobile station control programs is recorded therein. As shown in Fig. 6, the mobile station control program recorded in the recording medium 62 is readable by reading part 61A of computer 61 mounted on a mobile station 60.

BRIEF DESCRIPTION OF THE DRRWINGS

Fig. 1 is a system block diagram of the conventional mobile communication system.

Fig. 2 is a time chart for illustrating the operation of the data link transmission control method in the conventional mobile communication system.

Fig. 3 is a flowchart showing a first embodiment of the mobile station control program according to the present invention.

Fig. 4 is a flowchart showing a second embodiment of the mobile station control program according to the present invention.

Fig. 5 is a flowchart showing a third embodiment of the mobile station control program according to the present invention.

Fig. 6 is a block diagram of a recording medium. storing the mobile station control program and a peripheral device thereof.

Fig. 7 is a system block diagram of the mobile communication system associated with the first and second embodiments.

Fig. 8 is a time chart for illustrating the operation of the first embodiment.

Fig. 9 is an operation correlation chart for specifically illustrating the operation in the first embodiment.

Fig. 10A is a diagram showing a packet configuration at the data link transmission control unit in the first embodiment.

Fig. 10B is a diagram showing packet and block configurations at the data link transmission control unit in the second embodiment.

Fig. 11 is a system block diagram of the mobile communication system associated with the third embodiment.

Fig. 12 is a diagram showing functional blocks constituting the data link transmission control unit in the base stations in the third embodiment.

Fig. 13 is a diagram showing functional blocks constituting the data link transmission control unit in the mobile station in the third embodiment.

Fig. 14A is a state transition diagram for illustrating the method of transmission control associated with the third embodiment.

Fig. 14B is a table showing state transitions at respective events.

Fig. 15 is a diagram for illustrating positions of the mobile station in the third embodiment.

Fig. 16 is a diagram for illustrating the processing carried out when a packet arrives at a base station in a packet transmissible state.

Fig. 17 is a diagram for illustrating the processing carried out when a packet arrives at a base station in an idle state.

Fig. 18 is a diagram for illustrating the processing carried out when a packet arrives at a base station in a packet copying and transmissible state.

Fig. 19A is a drawing for illustrating a first method of providing a notification of a packet number of a deleted object every time the base station 202 deletes a packet .

Fig. 19B is a drawing for illustrating a second method of providing a notification of a number of a packet deleted last in a predetermined time.

Fig. 19C is a drawing for illustrating a third method of providing a notification of a number of a packet deleted last every time ten packets are deleted.

Fig. 20 is a diagram for illustrating an example adopting a timer as a trigger for deleting a packet stored at each base station in the processing of Fig. 18.

Fig. 21 is a diagram for illustrating an example wherein the base stations 202, 212 transmit identical packets to the mobile station in Fig. 18.

Fig. 22 is a diagram for illustrating the operation of the object base stations and the mobile station in Event A.

Fig. 23 is a diagram for illustrating the operation of the object base station and the mobile station in Event B.

Fig. 24 is a diagram for illustrating the operation of the object base stations and the mobile station in Event C.

Fig. 25 is a diagram for illustrating the operation of the object base stations and the mobile station in Event D.

Fig. 26 is a diagram for illustrating the operation of the object base stations and the mobile station in Event E.

Fig. 27 is a table for illustrating the operation of handover transmission control in packet transmission in the fourth embodiment.

Fig. 28 is a system block diagram of the mobile communication system associated with the fifth embodiment.

Fig. 29 is a diagram for illustrating the operation in the initial state in the fifth embodiment.

Fig. 30 is a diagram for explaining the operation carried out when packets are transmitted from a plurality of base stations to the mobile station in a transition state in the fifth embodiment.

Fig. 31 is a diagram for explaining the operation carried out when packets are transmitted from a single base station to the mobile station in the transition state in the fifth embodiment.

Fig. 32 is a system structural diagram of a mobile communication system embodying the first method of the sixth embodiment.

Fig. 33A is a functional block diagram of the encapsulating and transmitting part.

Fig. 33B is a functional block diagram of the encapsulating and delivering part.

Fig. 34 is a diagram showing the construction of the IP packet in the first method of the sixth embodiment.

Fig. 35 is a flow chart showing the processing procedures in the first and second methods of the sixth embodiment.

Fig. 36 is a system structural diagram of a mobile communication system embodying the second method of the sixth embodiment.

Fig. 37 is a diagram showing the construction of the IP packet in the second method of the sixth embodiment.

DESCRIPTION OF THE PREFERRED EMBODIMENTS

Various embodiments will be described below as to the data link transmission control methods and mobile communication systems according to the present invention.

[First Embodiment]

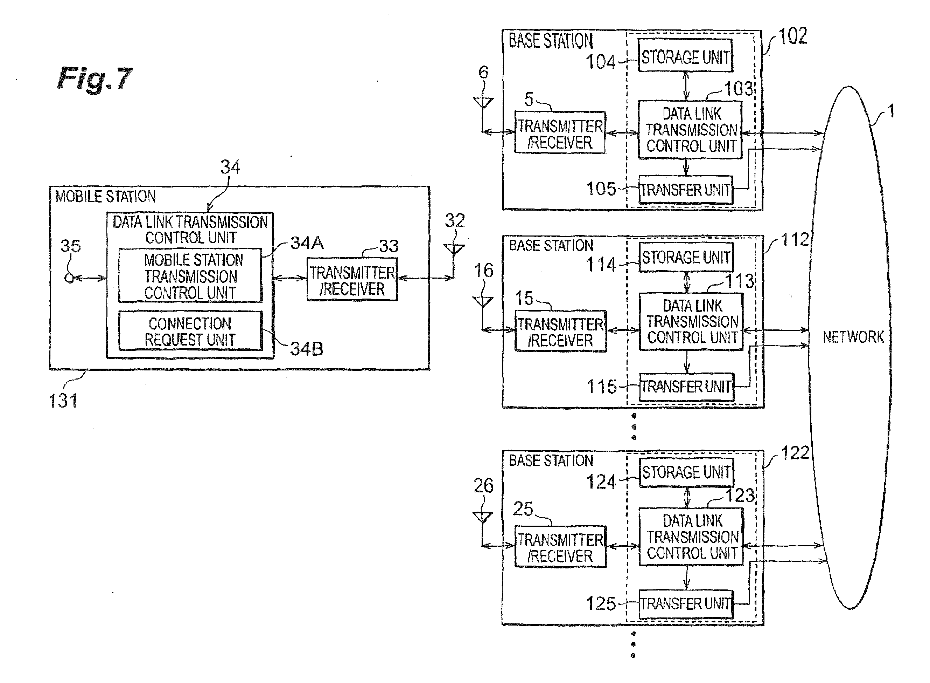

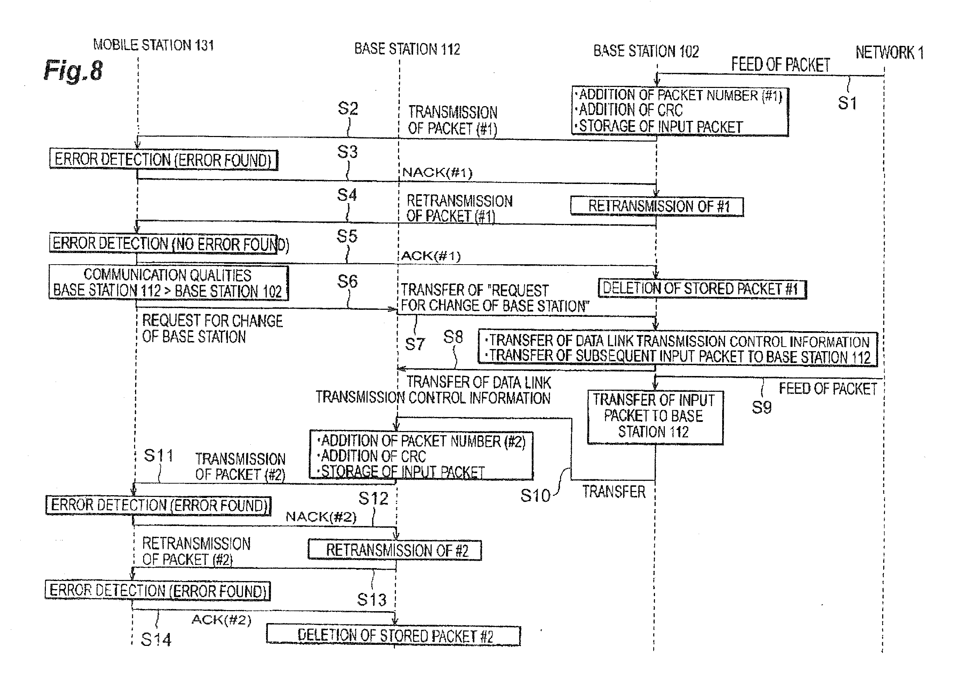

First, the first embodiment of the present invention will be described referring to Fig. 7 and Fig. 8. At the start, the configuration of the mobile communication system in the first embodiment will be described on the basis of Fig. 7. The present mobile communication system of the first embodiment is comprised of a mobile station 131 and a plurality of base stations 102, 112, 122, each base station being communicable with other base stations through a network 1.

The mobile station 131 is composed of a transmitter/receiver 33 configured to receive data from the radio network and transmit data to the radio network through a mobile station antenna 32; a data link transmission control unit 34 configured to perform the data link transmission control comprising the automatic repeat request control described hereinafter; and a data input/output terminal 35 as an input/output terminal of packet data. Among these components, the data link transmission control unit 34 is composed of a mobile station transmission control unit 34A configured to perform the data link transmission control comprising the automatic repeat request control for transmission/reception of packets to or from the base station; and a connection request unit 34B configured to issue a request for connection with the base station as a communicating station.

The base station 102 is comprised of a transmitter/receiver 5 configured to receive data from the radio network and transmit data to the radio network through a base station antenna 6; a data link transmission control unit 103 configured to perform the data link transmission control comprising the automatic repeat request control described hereinafter and control each of the constitutive units in the base station 102; a transfer unit 105 configured to transmit data link transmission control information to a base station as a new station after change, e.g., when receiving a request for change of the base station; and a storage unit 104 functioning as a temporary storage area of packet data and others for the data link transmission control unit 103. The other base stations 112, 122 are also constructed in similar structure to that of the base station 102.

Next, the operation in the first embodiment will be described. Let us suppose wherein that the mobile station monitors communication qualities witch one or more neighboring base stations and the mobile station issues a request for change of the base station if it determines that it can perform communication with better communication quality with another base station than with the base station currently under communication. Let us also assume that the mobile station 131 is first communicating with good communication quality with the base station 102 and is in a communicable state only with the base station 102.

At the base station 102, the data link transmission control unit 103 accepts a packet from the network 1 at an arrow S1 in Fig. 8 and performs the data link transmission control comprising the automatic repeat request control. The data link transmission control unit 103 first adds a packet number for enabling identification of the packet, thereafter stores the packet, and then outputs the packet to the transmitter/receiver 5.

If the packet can be identified by a packet number described at the header of the packet fed into the data link transmission control unit 103, the control unit 103 stores the packet as it is and outputs it to the transmitter/receiver 5, without adding the new packet number as described above. Then the trazasmitter/receiver 5 modulates the input packet into a transmitting signal and thereafter transmits the transmitting signal through the base station antenna 6 to the mobile station 131 (at an arrow S2 in Fig. 8).

On the other hand, at the mobile station 131, the transmitter/receiver 33 receives the signal through the mobile station antenna 32 and thereafter the data link transmission control unit 34 accepts the received packet to perform the data link transmission control comprising the automatic repeat request control. The data link transmission control unit 34 performs the error detection using the parity added to the input packet. When the detection results in finding an error in the packet, the data link transmission control unit 34 sends a NACK (Negative Acknowledgment) signal to the base station 102, thereby notifying the data link transmission control unit 103 of a repeat request for retransmission of the packet (at an arrow S3 in Fig. 8). Then the data link transmission control unit 103 retransmits the packet with the packet number stored (at an arrow S4 in Fig. 8).

When there is no error found in the packet, the data link transmission control unit 34 outputs the packet through the data input/output terminal 35 and transmits an ACK (Acknowledgment) signal to the base station 102, thereby notifying the data link transmission control unit 103 of the base station 102 of an acknowledgment of arrival of the packet (at an arrow S5 in Fig. 8). Then the data link transmission control unit 103 deletes the packet with the packet number stored for retransmission.

When movement of the mobile station 131 results in deteriorating the communication quality with the base station 102 having been communicating heretofore with the mobile station 131 and making that with another adjacent base station 112 better, the mobile station 131 first transmits a request for change of the base station through the base station 112 to the data link transmission control unit 103 of the base station 102 (at arrows S6 and S7 in Fig. 8). The present embodiment employs a method of notifying the base station of a number of the new base station after the change along with the request for the change of the base station.

Receiving the request for change of the base station, the data link transmission control unit 103 of the base station 102 transmits the data link transmission control information through the transfer unit 105 to the base station 112 designated as a new base station (at an arrow S8 in Fig. 8). The present embodiment will describe a method of using a packet number without an acknowledgment of arrival and the latest packet number as the data link transmission control information. Then the data link transmission control unit 103 deletes all the stored packets for the mobile station 131 and terminates the packet transmission. When a packet addressed to the mobile station 131 arrives thereafter at the data link transmission control unit 103 as at an arrow S9 in Fig. 8, the control unit makes the transferring unit 105 transfer the packet to the base station 112 as it is, as indicated by an arrow S10.

If the data link transmission control unit 113 of the base station 112 designated as a new base station receives a packet addressed to the mobile station 131 before the reception of the data link transmission control information from the base station 102, the storage unit 114 temporarily stores the packet until input of the data link transmission control information. After receiving the data link transmission control information, the control unit 113 adds a number subsequent to the latest packet number as the data link transmission control information to the packet stored in the storage unit 114 and thereafter performs the processing described heretofore to transmit the packet (at arrows S11, S12, S13, S14).

When the mobile station further moves into a cell of another base station, the data link transmission control method of the present invention can also be implemented according to the above operation.

Since the method according to the present invention does not have to execute the procedure of resetting the packet number and permits use of the data link transmission control unit of the base station directly communicating with the mobile station as described above, the data link transmission control can be always carried out through the shortest path, irrespective of movement of the mobile station, and the transfer delay time of packet can be shorter than before.

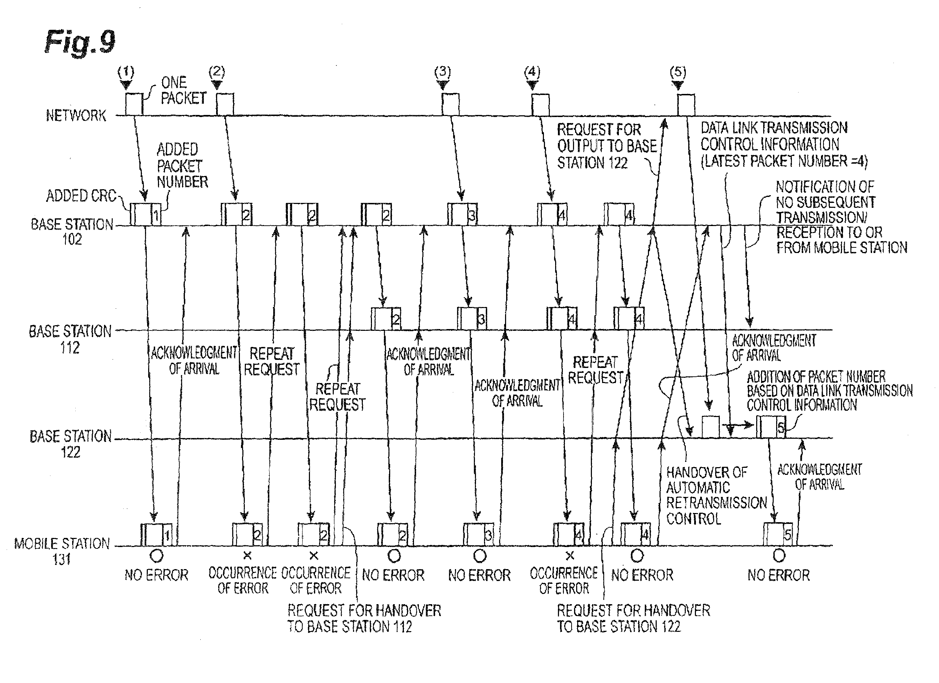

The above operation will be described in further detail with reference to Fig. 9.

Let us first suppose that the mobile station 131 is in a good state of communication quality with the base station 102 as an old base station before the change. When the base station 112 as a new base station after the change is a base station adjacent to the base station 102 performing the data link transmission control, retransmission causes little influence on increase of traffic or increase of delay time. Thus the operation will be described as an embodiment wherein in that case the old base station 102 continues to perform the data link transmission control comprising the automatic repeat request control and wherein when the new base station is the base station 122 distant from the base station 102 performing the data link transmission control, the packet addressed to the mobile station and the data link transmission control information are transferred to the new base station 122 and the new base station 122 performs the data link transmission control comprising the automatic repeat request control.

At the point (1) of Fig. 9, the base station 102 receives a packet addressed to the mobile station from the network. The base station 102 adds a packet number 1 and the CRC code to the input packet, stores the packet, and thereafter transmits the packet to the mobile station 131. Since the mobile station 131 detects no error in the received packet, the mobile station 131 transmits an acknowledgment of arrival to the base station 102. Then the base station 102, receiving the acknowledgment of arrival of the packet number 1, deletes the packet of the packet number 1 stored.

At the next point (2) of Fig. 9, a packet addressed to the mobile station is fed into the base station 102. The base station 102 adds a packet number 2 and the CRC code to the packet, stores the packet, and thereafter transmits the packet to the mobile station 131. Since the mobile station 131 detects an error in the received packet this time, the mobile station 131 transmits a NACK (Negative Acknowledgment) signal to the base station 102, thereby requesting the base station 102 to retransmit the packet of the packet number 2. The base station 102 retransmits the packet of the packet number 2 in response to the repeat request. However, since the mobile station 131 again detects an error in the packet thus received, the mobile station 131 again transmits a repeat request for retransmission of the packet number 2 to the base station 102. At this point, the communication quality with the base station 112 becomes better than that with the base station 102, and thus the mobile station 131 sends a request for change of the base station through the base station 112 to the base station 102. Since the base station 112 is a base station adjacent to the base station 102, the base station 102 continues to perform the data link transmission control comprising the automatic repeat request control and controls the base station 112 to transmit a packet as it is. Then the base station 102 transmits the packet of the packet number 2 as the retransmitted packet through the base station 112 to the mobile station 131. Since the mobile station 131 detects no error in the received packet, the mobile station 131 transmits an ACK (Acknowledgment) signal through the base station 112 to the base station 102, thereby transmitting an acknowledgment of arrival to the base station 102. Since the base station 102 receives the acknowledgment of arrival of the packet of the packet number 2, the base station 102 deletes the packet of the packet number 2 stored.

A next packet is fed into the base station 102 at the point (3) of Fig. 9. The base station 102 adds a packet number 3 and the CRC code to the packet, stores the packet, and thereafter transmits the packet through the base station 112 to the mobile station 131. Since the mobile station 131 detects no error in the received packet, the mobile station 131 transmits an acknowledgment of arrival through the base station 112 to the base station 102. After the base station 102 receives the acknowledgment of arrival of the packet number 3, the base station 102 deletes the packet of the packet number 3 stored.

A next packet is fed into the base station 102 at a point (4) in Fig. 9. Just as described above, the base station 102 adds a packet number 4 and the CRC code to the packet, stores the packet, and thereafter transmits it through the base station 112 to the mobile station 131. Since the mobile station 131 detects an error in the received packet herein, the mobile station 131 issues a request for retransmission of the packet number 4 through the base station 112 to the base station 102. At this point the communication quality with the base station 122 becomes better than that with the base station 112, and thus the mobile station 131 issues a request for change of the base station through the base station 122 to the base station 102. Since the new base station is not a base station adjacent to the base station 102, the base station 102 notifies the base station 122 of handover of the data link transmission control comprising the automatic repeat request control.

If the mobile station 131 is configured to notify the base station 122 of the base station number of the base station currently performing the data link transmission control, the base station 122 can recognize that it has to succeed to the data link transmission control over the mobile station 131 since then. In this case, the base station 102 does not have to provide the notification. Then an apparatus for switching between packet receiving stations in the network is requested to supply a subsequent packet addressed to the mobile station hereinafter to the base station 122. This apparatus has a function capable of switching between the packet receiving stations by the use of location registration information or the like of the mobile station 131. Since the timing of receiving the request for the base station change at the base station 102 is immediately after transmission of the retransmitting packet of the packet number 4, the base station 102 has not received an acknowledgment of arrival or a request for retransmission of the packet of the packet number 4 from the mobile station 131 yet. Accordingly, the base station 102 does not send the data link transmission control information to the base station 122 until it receives a notification of an acknowledgment of arrival or a repeat request of the retransmitting packet. Therefore, the base station 122 at this point keeps storing a packet addressed to the mobile station, fed at the point (5) in Fig. 9.

Let us suppose that the mobile station 131 detects no error in the retransmitted packet. Thus the mobile station 131 sends an acknowledgment of arrival of the packet number 4 through the base station 122 to the base station 102. The base station 102 recognizes the arrival of the packet number 4 of the retransmitted packet, and then the base station 102 notifies the base station 122 as a new base station only that the latest packet number is 4 as the data link transmission control information. If there is a packet without an acknowledgment of arrival at this point, the base station 102 notifies the base station 122 of a packet number of the packet without an acknowledgment of arrival and the latest packet number. Since there is no packet addressed to the mobile station, to be transmitted or received through the base station 112 hereinafter, the base station 102 notifies the base station 112 of this fact. This allows the base station 112 to release the resources of the base station 112 allocated to the mobile station 131.

On the basis of the latest packet number being 4 as the data link transmission control information from the base station 102, the base station 122 adds a packet number 5 to the packet fed and stored at the point (5) in Fig. 9, adds the CRC code thereto, stores the packet, and transmits it to the mobile station 131. Since the mobile station 131 detects no error in the received packet, the mobile station 131 transmits an acknowledgment of arrival to the base station 122. Receiving the acknowledgment of arrival of the packet number 5, the base station 122 deletes the packet of the packet number 5 stored.

As described above, repetition of the foregoing operation enables the data link transmission control method of the present invention, regardless of movement of the mobile station 131.

Since the first embodiment as described above does not have to execute the procedure of resetting the packet number and allows use of the data link transmission control unit of the base station directly communicating with the mobile station 131, the data link transmission control can be always performed through the shortest path, regardless of the movement of the mobile station 131, and the transmission delay time of packet can be shorter than before, so as to increase the throughput of the system.

[Second Embodiment]

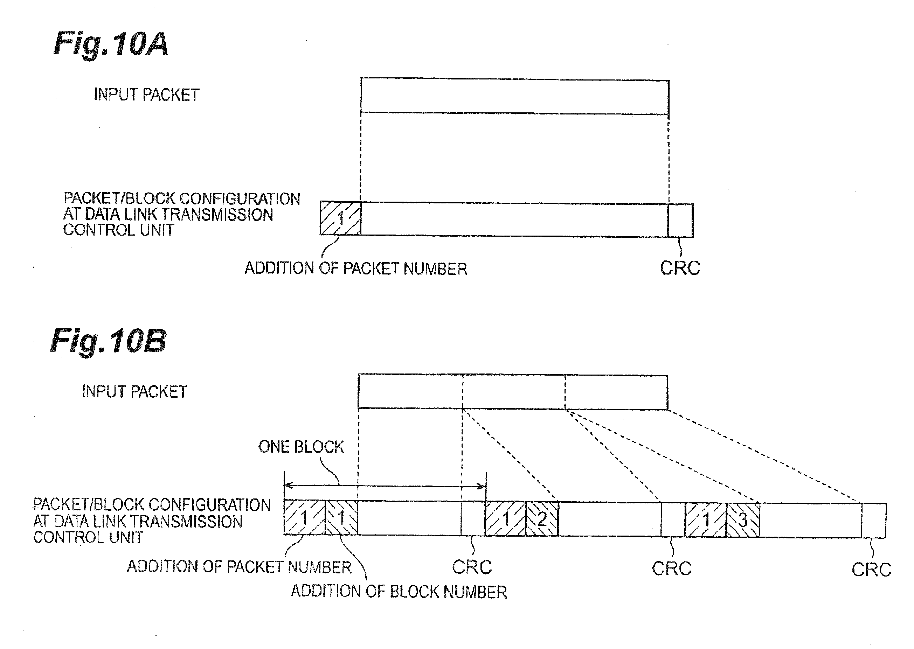

The following will describe the second embodiment of the present invention with reference to Fig. 7 and Fig. 10B. Suppose the mobile station 131 is first in a good state of communication quality with the base station 102. Namely, the mobile station 131 is in a communicable state only with the base station 102.

At the base station 102, the data link transmission control unit 103 accepts a packet from the network 1 and performs the data link transmission control comprising the automatic repeat request control. The present embodiment will describe a case wherein a packet is sent as divided into a plurality of blocks to match radio frames. As expressly shown in Fig. 10B, the data link transmission control unit 103 divides an input packet into plural blocks, adds to the blocks, respective block numbers for maintaining the sequence of the split blocks and a packet number for identification of the packet before divided, thereafter adds error-detectable parity such as the CRC code or the like to allow detection of an error occurring during transmission, and then outputs the blocks to the transmitter/receiver 5. The transmitter/receiver 5 modulates each input block into a transmitting signal and thereafter transmits the transmitting signal through the base station antenna 6 to the mobile station 131. Fig. 10A shows a packet configuration at the data link transmission control unit in the first embodiment.

On the other hand, at the mobile station 131, the transmitter/receiver 33 receives the signal through the mobile station antenna 32 and thereafter outputs the received block to the data link transmission control unit 34. Then the data link transmission control unit 34 performs the error detection using the parity added to the input block. When the detection results in finding no error in the block, the data link transmission control unit 34 notifies the data link transmission control unit 103 of the base station 102 of an acknowledgment of arrival of the block. When there is an error in the block, the data link transmission control unit 34 notifies the data link transmission control unit 103 of the base station 102 of a repeat request for retransmission of the block. Then the data link transmission control unit 103 retransmits the block stored. After all the blocks for one packet have been received with no error in this way, the data link transmission control unit 34 combines the blocks into one packet by the operation reverse to the division operation into the blocks at the data link transmission control unit 103, and thereafter outputs the packet from the data input/output terminal 35.

The following will describe a case where movement of the mobile station 131 raises a need for change of the base station. In the present embodiment, there is no limit to the number of base stations simultaneously communicating with the mobile station and the mobile station can receive packets simultaneously from a plurality of base stations. It is a matter of course that the present embodiment can also be applied to the case where the number of simultaneously communicating base stations with the mobile station is one, as described in the first embodiment.

Suppose the communication quality with the base station 102 having been communicating heretofore with the mobile station 131 becomes a little deteriorated and that of the adjacent base station 112 is improved to enable communications with two base stations, the base station 102 and the base station 112. In this case, the mobile station 131 issues a request for connection with the base station to the data link transmission control unit 103 of the base station 102. Since the communication quality is only slightly deteriorated, the mobile station 131 is in a state communicating with the two stations of the base station 102 and the base station 112, different from the first embodiment. The data link transmission control unit 103 of the base station 102, receiving the connection request, notifies the base station 112 of the request for the connection from the mobile station 131. Then the data link transmission control unit 103 makes correspondence of part of subsequently fed packets addressed to the mobile station 131 to packet numbers and then sends then through the transfer unit 105 to the base station 112. The data link transmission control unit 113 performs the automatic repeat request control for each block, while the data link transmission control unit at either of the base stations performs the correspondence to packet numbers for maintaining the sequence of packets received at the mobile station. In the present embodiment the data link transmission control unit 103 of the base station 102 is assumed to perform the correspondence to the packet numbers. The data link transmission control unit 113 of the base station 112 divides each packet from the base station 102 into blocks, thereafter adds to the blocks, block numbers and a packet number before the division, as provided with the correspondence at the data link transmission control unit 103, further adds the parity thereto, and then transmits the blocks to the mobile station 131.

Suppose the communication quality between the mobile station 131 and the base station 102 is further deteriorated and the mobile station 131 becomes capable of communication only with the base station 112. In this case, the mobile station 131 issues a request for discontinuation of packet transmission from the base station 102 through the base station 112 with good communication quality to the data link transmission control unit 103 of the base station 102. Receiving the request, the data link transmission control unit 103 of the base station 102 transmits a packet including a block without an acknowledgment of arrival, a packet number of the pertinent packet, a block number of the block without an acknowledgment of arrival, and the latest packet number as the data link transmission control information through the transfer unit 105 to the data link transmission control unit 113 of the base station 112. Then the blocks or packets addressed to the mobile station 131 are stored as they are, until the base station 102 receives a request for transfer of the blocks or packets addressed to the mobile station 131, from the base station 112. Further, the base station 102 also stores a packet addressed to the mobile station from the network 1 as it is, before it receives the transfer request.

At a certain timing the base station 112 sends a request for transfer of the packets or blocks addressed to the mobile station, to the base station 102 that has sent the data link transmission control information. This timing may be a time when the base station 112 receives a signal to hasten the data transmission from the mobile station. Receiving the transfer request, the data link transmission control unit 103 of the base station 102 transfers the stored blocks or packets addressed to the mobile station 131 to the base station 112 and thereafter deletes all the blocks or packets. When a packet addressed to the mobile station 131 arrives thereafter at the base station 102, it is transferred to the base station 112 as it is. The data link transmission control unit 113 of the base station 112 divides the packet including the block without an acknowledgment of arrival, which was transferred from the base station 102, into blocks and thereafter retransmits only the block under the request for retransmission to the mobile station 131. Since the blocks are fixed-length blocks, it is possible to retransmit only a necessary block if an input packet, a packet number thereof, and a block number of the block are given. When a new packet addressed to the mobile station 131 is supplied thereafter to the base station 112, it is provided with a packet number based on the latest packet number notified of. The data link transmission control unit 103 can also transfer only necessary blocks.

The operation as described above makes it feasible to implement the data link transmission control method of the present invention.

Since the data link transmission control unit of the base station communicating with the mobile station can be used without reset of the packet number as described above, the data link transfer control can be always performed through the shortest path, regardless of movement of the mobile station, and the transfer delay time of packet can be shorter than before, so as to increase the throughput of the system.

The aforementioned data link transmission control information can be items described below, either of which can be adopted. Namely, it is possible to employ either of the following items: (1) a packet number without an acknowledgment of arrival, (2) a packet number with an acknowledgment of arrival, (3) a packet number under a repeat request, (4) the latest packet number, (5) a block number without an acknowledgment of arrival, (6) a block number with an acknowledgment of arrival, (7) a block number under a repeat request, (8) the latest block number, and (9) combination of the foregoing items (1) to (8).

[Third Embodiment]

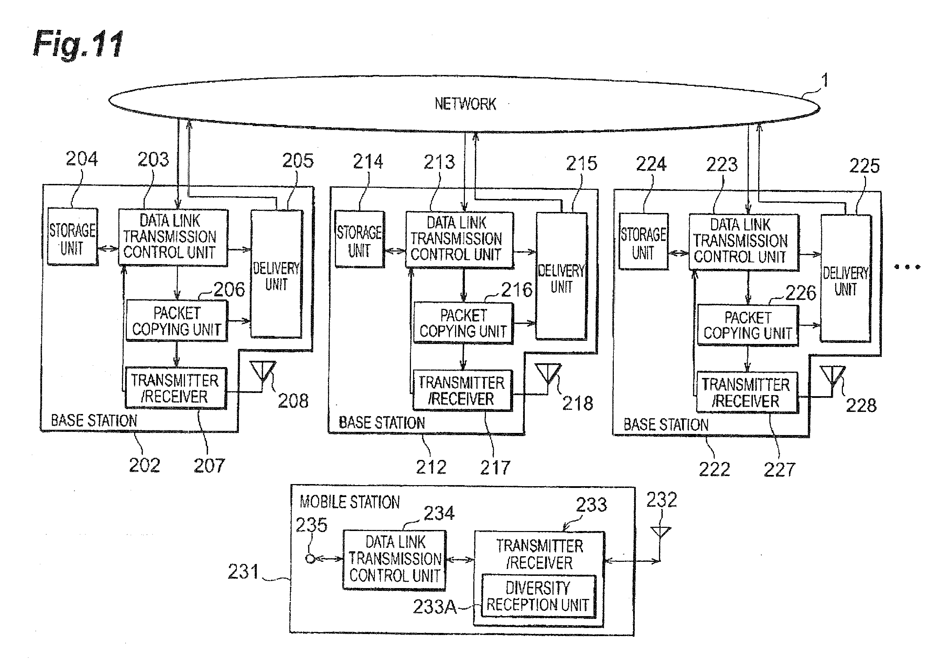

The third embodiment of the present invention will be described below. The configuration of the mobile communication system in the third embodiment will be first described on the basis of Figs. 11, 12, and 13. The mobile communication system of the third embodiment is comprised of a mobile station 231 and a plurality of base stations 202, 212, 222, as shown in Fig. 11, each base station being communicable with other base stations through the network 1.

The mobile station 231 is composed of a transmitter/receiver 233 configured to receive data from the radio network and transmit data to the radio network through a mobile station antenna 232; a data link transmission control unit 234 configured to perform the data link transmission control comprising the automatic repeat request control, described hereinafter; and a data input/output terminal 235 as an input/output terminal of packet data.

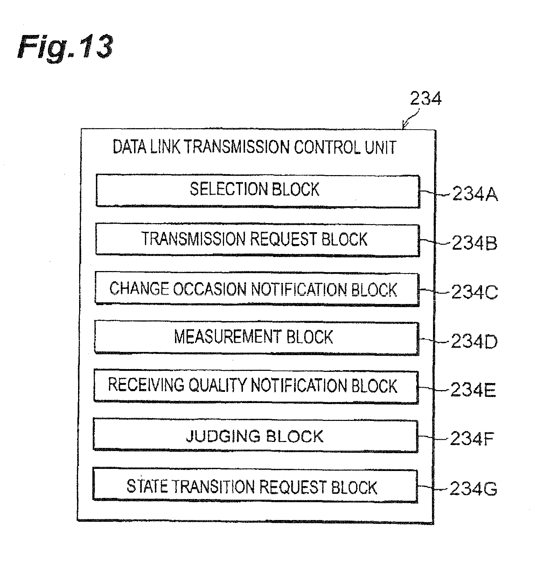

Among these components, the data link transmission control unit 234 is functionally composed of functional blocks shown in Fig. 13. Namely, the data link transmission control unit 234 is composed of a selection block 234A configured to select one base station out of the base stations upon reception of packet storage notification from base stations and select one base station desired to transmit a packet addressed to the mobile station of its own, based on receiving qualities for the respective base stations; a transmission request block 234B configured to issue a request for transmission of a packet to the base station selected; a change occasion notification block 234C configured to, on the occasion of change of the base station designated as a base station for transmitting the packet addressed to the mobile station of its own, notify an old base station of discontinuation of transmission and notify a new base station of a transmission request and an initial packet number of an object; a measurement block 234D configured to measure receiving qualities of signals transmitted from a plurality of base stations; a receiving quality notification block 234E configured to notify a base station at a location selected based on the receiving qualities, of the receiving qualities for the respective base stations; a judging block 234F which judges whether or not each base station is in one of a plurality of specified communication states on the basis of the reception quality for each base station; and a state transition request block 234G which sends a request for transition of the communication state to base station for which a transition of the communication state is desired, on the basis of the results of the abovementioned judgement. The transmitter/receiver 233 incorporates a diversity reception unit 233A configured to perform the diversity reception of packets upon reception of identical packets from respective base stations.

On the other hand, the base station 202, as shown in Fig. 11, is composed of a transmitter/receiver 207 configured to receive data from the radio network and transmit data to the radio network through a base station antenna 208; a data link transmission control unit 203 configured to perform the data link transmission control comprising the automatic repeat request control, e.g., a process of adding a unique number as identification information to each packet for execution of automatic repeat control described hereinafter, and to control each of the components in the base station 202; a packet copying unit 206 configured to copy a packet; a delivery unit 205 configured to deliver the packet copy to another base station; and a storage unit 204 functioning as a temporary storage area of packet data and others for the data link transmission control unit 203.

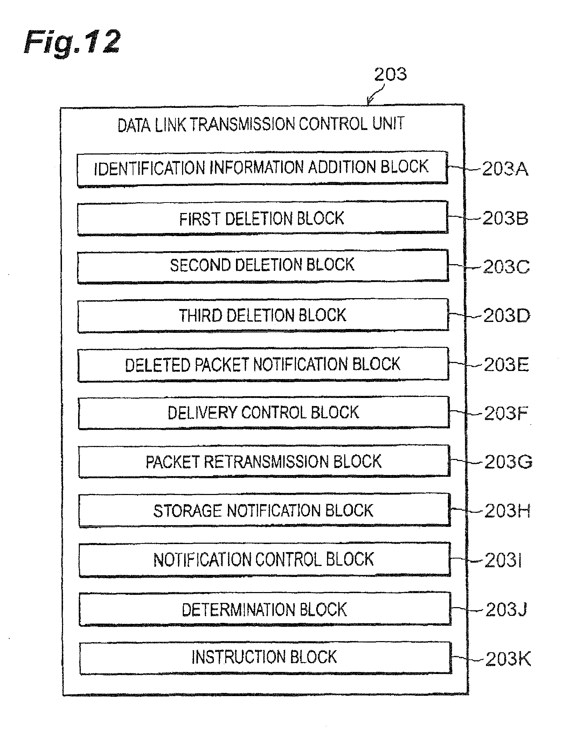

Among these units, the data link transmission control unit 203 is functionally composed of the functional blocks shown in Fig. 12. Namely, the data link transmission control unit 203 is comprised of an identification information addition block 203A configured to add to a packet addressed to the mobile station, identification information for specifying the packet; a first deletion block 203B configured to delete a packet on the basis of a timeout of a timer or a packet arrival notification from the mobile station; a second deletion block 203C configured to delete a packet on the basis of a timeout of a timer or a notification of a number of a deleted packet from another base station; a third deletion block 203D configured to delete a packet addressed to the mobile station under storage at its own base station on the basis of a requests from the mobile station that the base station of its own is excluded from packet-delivered base stations; a deleted packet notification block 203E configured to notify another base station of a number of a packet to be deleted; a delivery control block 203F configured to deliver a packet to a base station designated as a new packet-delivered base station; a packet retransmission block 203G configured to retransmit a packet according to a repeat request from the mobile station; a storage notification block 203H configured to, upon reception and storage of a packet addressed to the mobile station, notify the mobile station of the storage of the packet; a notification control block 203I configured to perform such control that when a transmission request is received from the mobile station during storage of a plurality of packets addressed to the mobile station, the packets are transmitted to the mobile station and the mobile station is notified of the storage of the plurality of packets; a determination block 203J configured to determine for each of other base stations whether a packet to be delivered from its own base station is to be transmitted to the mobile station, based on the receiving qualities for the respective base stations; and an instruction block 203K configured to provide instructions of transmission operation based on the result of the determination to the other base stations. The other base stations 212, 222 are also constructed in similar structure to that of the base station 202.

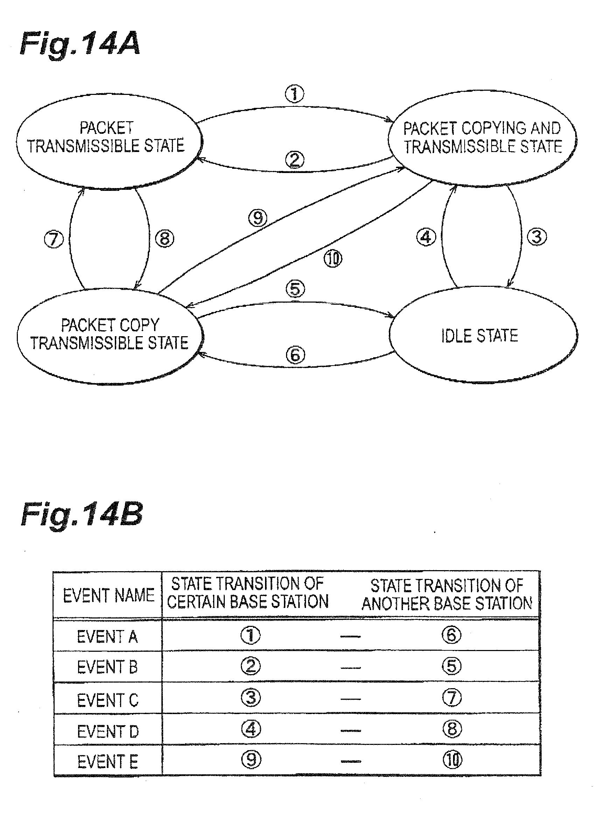

Incidentally, each of the base stations stays in either of the four states shown in Fig. 14A, relative to the mobile station 231, and makes a transition into either state according to a request from the mobile station 231. These four states will be described below.

The first state is an idle state. This state is a state in which the base station transmits or receives no packet to or from the mobile station 231.

The second state is a packet transmissible state. This state is a state in which when the base station receives a packet from the network 1, the base station can transmit the packet to the mobile station after addition of a unique number to the packet. This state is a state that can be assumed by only either one base station at a certain time (i.e., a plurality of base stations cannot stand simultaneously in this state), and the other base stations are in the idle state.

The third state is a packet copying and transmissible state. This state is a state in which a base station performs sequential operation as follows. Namely, when the base station receives a packet from Lhe network 1, it adds a unique number to the packet, thereafter makes a copy of the packet including the number, and delivers the copy of the packet (hereinafter referred to as a "packet copy") to another base station according to a request from the mobile station 231. When the base station then receives a request for packet transmission from the mobile station 231, the base station transmits the packet to the mobile station 231. This sequential operation is carried out in the third state. This state is also a state that can be assumed by only either one base station at a certain time (i.e., a plurality of base stations cannot stand simultaneously in this state), and the other base stations are in a packet copy transmissible state described below, or in the idle state.

The fourth state is a packet copy transmissible state. This state is a state in which when a base station, receives a packet copy from a base station in the packet copying and transmissible state and receives a request for packet transmission from the mobile station 231, the base station can transmit the packet copy to the mobile station. This state is a state into which, in the case of a certain base station making a transition into the packet copying and transmissible state, another base station goes.

The operation of the third embodiments will be described below. First described are operations of the base stations and the mobile station 231 in each of the above states.

(1) Operation of mobile station and base stations in packet transmissible state

When Eq (1) below holds, the i-th base station of $\psi_i = 1$ 1 is in the packet transmissible state with respect to the mobile station 231 and the other base stations of $\psi_j = 0$ (i ≠ j) are in the idle state.

[Eq. 1]

$$\sum_{i=1}^{N} \psi_i = 1 \qquad (1)$$

$$\psi_i = \begin{cases} 1 & \left(P_{med\_max} - P_{med}(i) \le Th, i = 1, \cdots, N\right) \\ 0 & \left(P_{med\_max} - P_{med}(i) > Th, i = 1, \cdots, N\right) \end{cases}$$

$$P_{med\_max} = \max\left(P_{med}(1), \cdots, P_{med}(N)\right)$$

In the equation herein, Pmed(i) represents a time-average received power (e.g., a median of received power in a short interval or the like), or a ratio of the time-average received power to interference power (hereinafter referred to as "time-average received power to interference power ratio") about a broadcast signal or a common pilot signal or the like transmitted from the i-th base station. Pmed_max represents a maximum time-average received power or a maximum time-average received power to interference power ratio among those of the first to the N-th base stations. $\Psi_i$ represents either of binary numbers (1 or 0) which are results of comparison of a difference between Pmed_max and Pmed(i) with a predetermined threshold Th. The present embodiment will describe a case of N = 3 and the base station 202, base station 212, and base station 222 in Fig. 11 will be described as the first base station, the second base station, and the third base station, respectively.

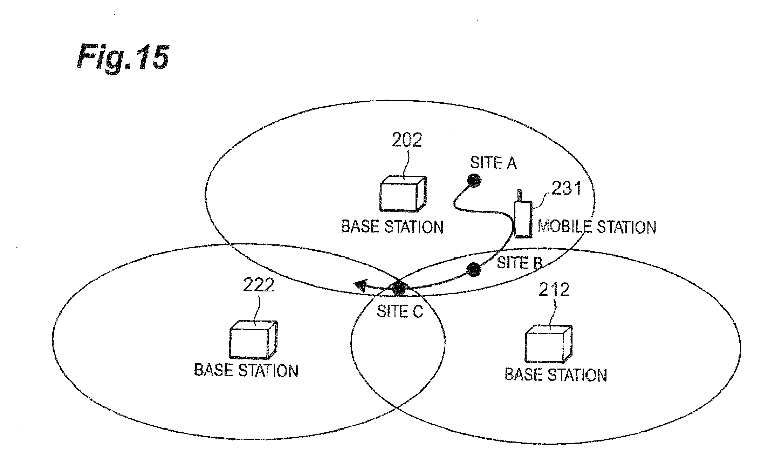

Eq (1) above holds when only one measurement is large among time-average received powers or received power to interference power ratios of broadcast signals, common pilot signals, or the like transmitted from a plurality of base stations (the base station 202 to the base station 222 in the present embodiment), which are measured at the mobile station 231, e.g., when the mobile station 231 is located at a site A in Fig. 15. This occurs, for example, in the case of $\Psi_1 = 1$, $\Psi_2 = 0$, and $\Psi_3 = 0$, wherein the base station 202 is in the packet transmissible state with respect to the mobile station 231 and wherein the base station 212 and the base station 222 are in the idle state.

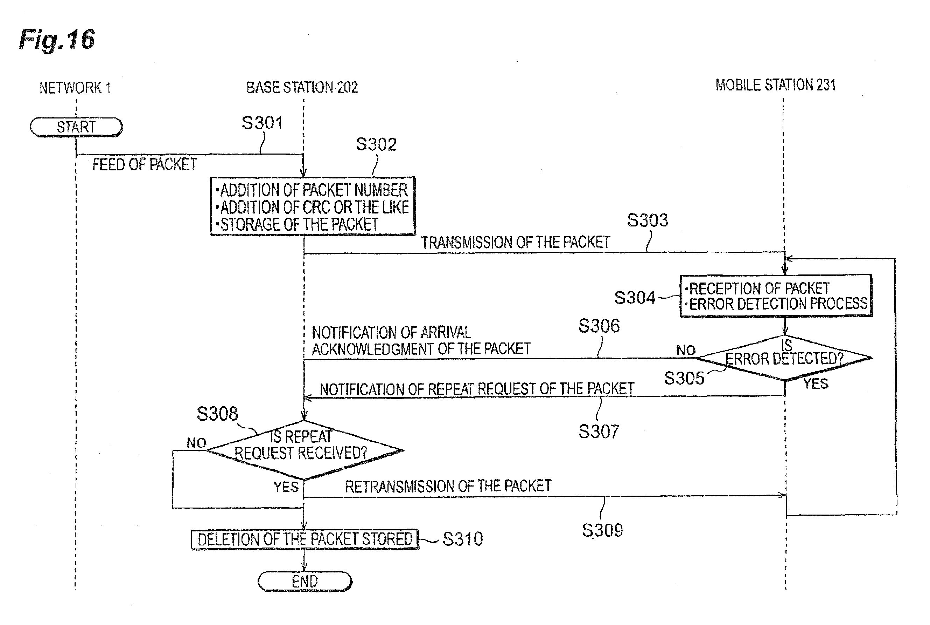

The following will describe processing carried out when a packet arrives at the base station in the packet transmissible state, referring to Fig. 16. At the base station 202, the data link transmission control unit 203 adds a unique number to the packet coming from the network 1, adds the CRC code or the like for the error detection of the received packet at the mobile station, and stores the packet (S301 and S302 in Fig. 16). Then the data link transmission control unit 203 controls the packet copying unit 206 so as to output the packet to the transmitter/receiver 207 as it is, thereby transmitting the packet to the mobile station 231 (S303). The mobile station 231 performs an error detection process of the received packet (S304). When no error is detected, the mobile station 231 notifies the base station 202 of an acknowledgment of arrival of the packet (S305 and S306). When an error is detected, the mobile station 231 notifies the base station 202 of a repeat request for retransmission of the packet (S305 and S307). When the notification from the mobile station 231 is an acknowledgment of arrival, the base station 202 deletes the stored packet corresponding to the unique number (S308 and S310). When the notification from the mobile station 231 is the repeat request, the base station 202 retransmits the packet corresponding to the unique number (S308 and S309).

(2) Operation of mobile station and base stations in idle state

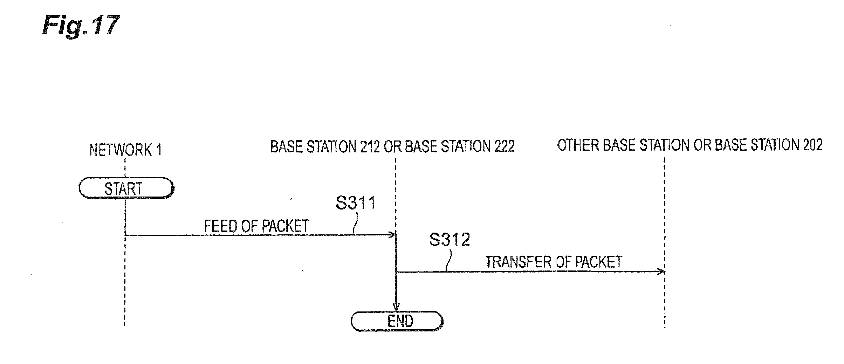

As described previously, the j-th base station of $\psi_j = 0$ is in the idle state with respect to the mobile station.
The following will describe processing carried out when a packet arrives at the base station in the idle state, referring to Fig. 17. Let us suppose herein that the base station 212 and the base station 222 are in the idle state. At the base station 212 in the idle state, the data link transmission control unit 213 controls the delivery unit 215 so as to transfer the packet addressed to the mobile station 231 directly to another base station or to the base station 202 in the packet transmissible state as it is. Therefore, when the packet arrives at the base station 212, the base station 212 transfers the packet to another base station or the base station 202 as a receiver base station (S311 and S312 in Fig. 17).
Since the base stations 212, 222 are constructed in much the same structure, the same operation as above will be carried out when the packet arrives at the base station 222.

(3) Operation of mobile station and base stations in packet copying and transmissible state and in packet copy transmissible state

When Eq (2) below holds, either one base station out of a plurality of base stations of $\Psi_i = 1$ goes into the packet copying and transmissible state with respect to the mobile station 231, and each base station demonstrating $\Psi_i = 1$ and not being in the packet copying and transmissible state goes into the packet copy transmissible state.

$$[Eq. \; 2]$$

$$\sum_{i=1}^{N} \psi_i \geq 2 \qquad\qquad (2)$$

$$\psi_i = \begin{cases} 1 & \left( P_{med\_max} - P_{med}(i) \leq Th, i = 1, \cdots, N \right) \\ 0 & \left( P_{med\_max} - P_{med}(i) > Th, i = 1, \cdots, N \right) \end{cases}$$

$$P_{med\_max} = \max\left( P_{med}(1), \cdots, P_{med}(N) \right)$$

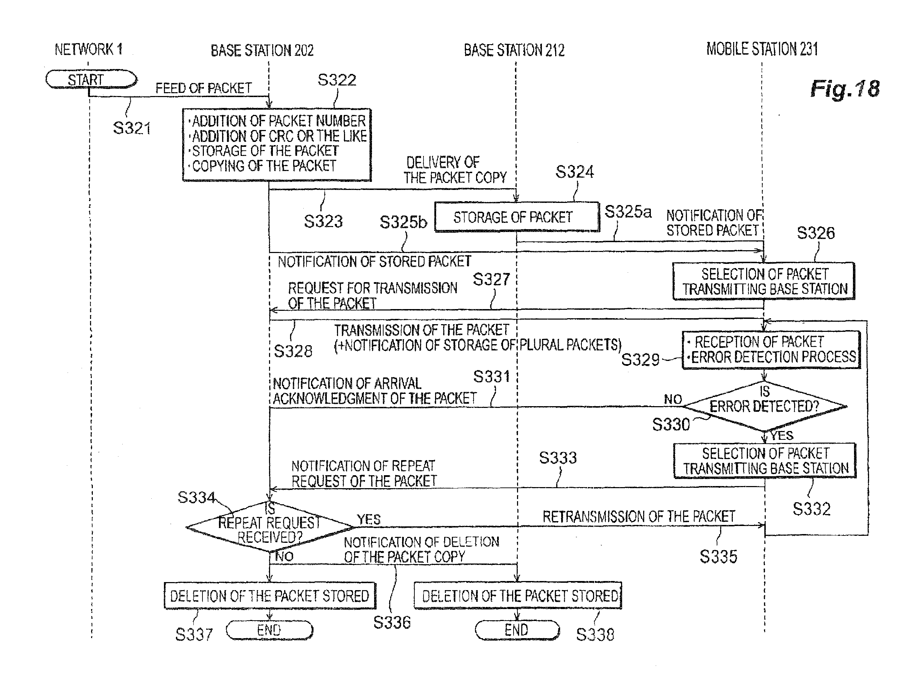

The symbols used herein are the same as in Eq (1).
Eq (2) holds when two or more time-average received powers or time-average received power to interference power rations measured at the mobile station 231 are large, as in the case where the mobile station 231 is located at a site B in Fig. 15; for example, it occurs in the case of $\psi_1 = 1$, $\psi_2 = 1$, and $\psi_3 = 0$ as in the present embodiment, wherein either one base station, the base station 202 or the base station 212, is in the packet copying and transmissible state. This either one base station can be a base station in the packet transmissible state or a base station with a large time-average received power or time-average received power to interference power ratio before the transition. The present embodiment will be further described on the assumption that the base station 202 is in the packet copying and transmissible state and the base station 212 in the packet copy transmissible state.
The following will describe precessing carried out when a packet arrives at the base station 202 in the packet copying and transmissible state, referring to Fig. 18. The base station 202 adds a unique number to the packet coming from the network 1, adds the CRC code or the like for the error detection of the received packet at the mobile station, thereafter stores the packet, and makes a copy of the packet including the number (S321 and S322 in Fig. 18). Then the base station 202 delivers the packet copy to the base station 212 in the packet copy transmissible state (S323), and the base station 212 stores the delivered packet (S324). Further, the base station 202 notifies the mobile station 231 of the storage of the packet addressed to the mobile station 231 (S325b).

The mobile station 231 requests the base station with the maximum time-average received power or time-average received power to interference power ratio to make a state transition into the packet copying and transmissible state, as described previously. This can limit the number of base stations providing a notification of a new packet to the mobile station 231, to one. This can be implemented by making the base station with the maximum time-average receiving quality provide the notification. In this case, it becomes feasible to reduce extra power for the notification and suppress interference.

However, if influence of the interference is weak, it is also possible to employ a Method of making each packet receiving base station (the base station in the packet copying and transmissible state or the base station in the packet copy transmissible state) notify the mobile station 231, as indicated at S325b and S325a in Fig. 18.

The mobile station 231 receiving the notification selects a base station with a maximum instantaneous received power or instantaneous received power to interference power ratio among signals of broadcast signals, common pilot signals, or the like transmitted from a plurality of base stations at that point (two stations of the base station 202 and base station 212 in the present embodiment) (S326), and requests the selected base station to transmit the packet to the mobile station 231 (S327). A specific method of this request can be a method of sending a request to the base station by sending a base station number for specifying the base station and a number of the packet notified.

For the method of the request, it is possible to employ a method of sending the request directly to the selected base station through an uplink or a method of notifying the selected base station of the request received at a base station not selected, through the network between the base stations. The reason for it is that an uplink and a downlink exhibit different instantaneous receiving qualities between the mobile station and each base station and that while the maximum receiving quality is yielded through the downlink between the selected base station and the mobile station, the maximum receiving quality can be yielded through the uplink between another base station and the mobile station.

Then the base station receiving the request (the base station 202 in the present embodiment) transmits the packet to the mobile station 231 (S328). At this time, the base station 202 may notify the mobile station 231 of storage of two or more packets addressed to the mobile station 231. The reason is that this can obviate a need for further notification of subsequent packets under storage from the base station.

The mobile station 231 performs the error detection process of the received packet (S329). When no error is detected, the mobile station 231 notifies the base station 202 in the packet copying and transmissible state of an acknowledgment of arrival of the packet (S330 and S331). This notification may be performed directly to the base station 202 or through the base station 212. When an error is detected, the mobile station 231 selects a base station with a maximum instantaneous or time-average receiving quality at that point (S332) and notifies the base station of a repeat request for retransmission of the packet (S333).

Receiving the acknowledgment of arrival, the base station 202 deletes the stored packet corresponding to the unique number (S334 and S337). The base station 202 notifies the base station 212 in the packet copy transmissible state of the number of the packet (S336). Receiving the notification, the base station 212 deletes the packet copy stored according to the notification (S338).

On the other hand, when the base station 202 receives a repeat request, it retransmits the packet corresponding to the unique number (S333, 5334, and S335).

Since the system is configured so that each base station stores a packet and one or more base stations send the packet to the mobile station without providing the line control station for delivery of packet separately from the base stations, as described above, the traffic volume can be reduced in the network and the transmission delay time of packet can be decreased, so as to increase the throughput and enhance the performance of the entire system.

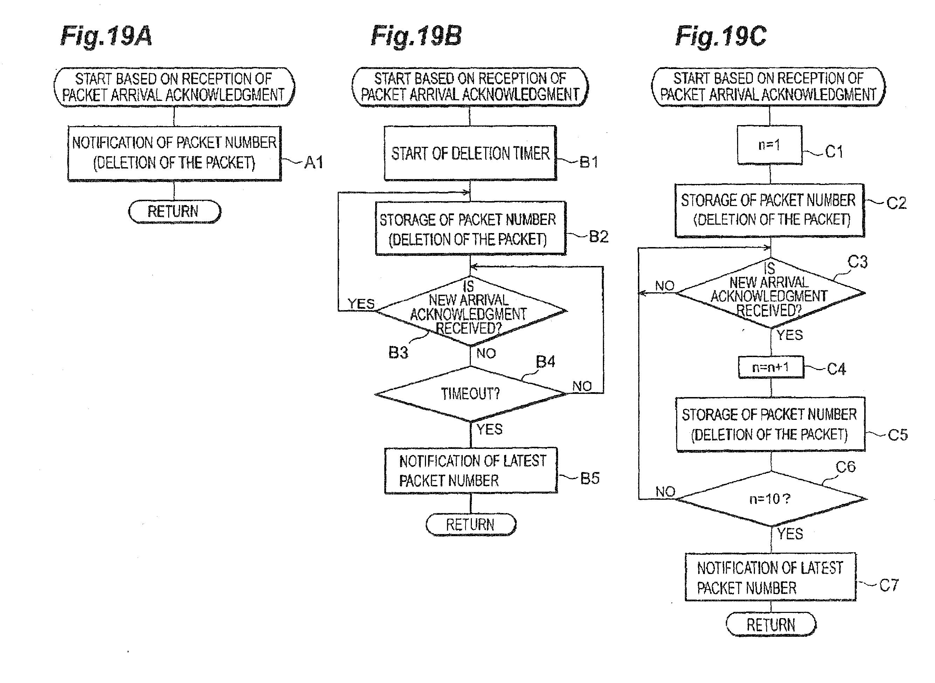

For the notification of deletion of the packet copy at S336 from the base station 202 to the base station 212 in Fig. 18, it is possible to employ either of three methods shown in Fig. 19A, 19B, and 19C.

Namely, in the first method, as shown in Fig. 19A, every time the base station 202 receives an acknowledgment of arrival from the mobile station at S331, the base station 202 notifies the base station 212 of a unique packet number of a packet to be deleted (A1). At this time the pertinent packet stored in the base station 202 may be deleted at the same time as the notification.

In the second method, the base station 202 notifies the base station 212 of the latest packet number in a prescribed time. Namely, the base station 202 starts the processing shown in Fig. 19B upon reception of the arrival acknowledgment from the mobile station at S331, starts a deletion timer in which a time of a prescribed deletion interval is set (B1), and stores a packet number corresponding to the foregoing arrival acknowledgment (B2). At this time, the base station 202 may delete the pertinent packet stored therein at the same time. When the base station 202 receives a new arrival acknowledgment thereafter (yes at B3), the base station stores a packet number corresponding to the arrival acknowledgment (B2). When a timeout occurs at the deletion timer (yes at B4), the base station 202 notifies the base station 212 of the latest packet number out of packet numbers stored at that point, i.e., a number of the latest packet out of packets corresponding to received arrival acknowledgments within the prescribed time counted at the timer (B5).

Further, in the third method, the base station 202 performs notification on the basis of deletion of a specific packet (e.g., every ten packets deleted). Namely, the base station 202 starts the processing shown in Fig. 19C upon reception of the arrival acknowledgment from the mobile station at S331, resets a counter to n = 1 (C1), and stores a packet number corresponding to the foregoing arrival acknowledgment (C2). The base station 202 may delete the pertinent packet stored therein at the same time as the storage (the same will also apply to C5). When the base station 202 receives a new arrival acknowledgment thereafter (yes at C3), the counter n is counted up by one (C4) and a packet number corresponding to the arrival acknowledgment is stored (C5). At the time when the counter n reaches 10, i.e., when the base station 202 receives arrival acknowledgments for ten packets, C6 results in yes, and the base station 202 notifies the base station 212 of the latest packet number out of packet numbers stored at that point (C7).

Among the above methods, the first method has the disadvantage of high traffic volume for the notification because of high notification frequency but the advantage of easy buffer management. The second method generally has the disadvantage of complicated buffer management because of low notification frequency but the advantage of low traffic volume for the notification. The third method is generally placed at an intermediate position between the first and second methods in terms of the traffic volume and buffer management.

The present embodiment permits the traffic volume and buffer management both to be controlled in a good balance by properly employing the three methods described above.

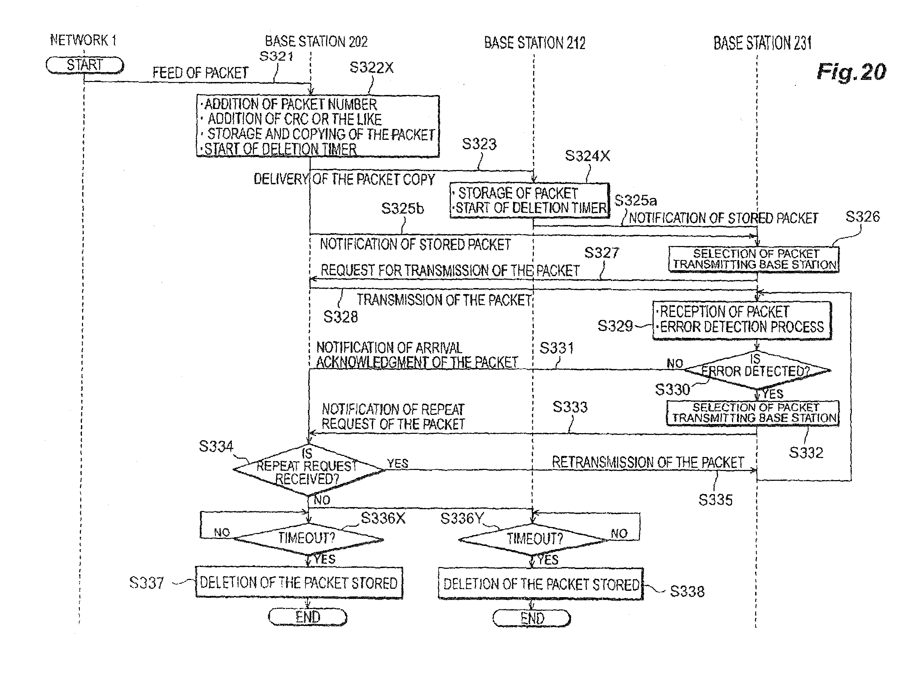

Incidentally, a timer may be adopted as a trigger for deleting the packet stored at the base stations 202, 212 in Fig. 18. This example will be described below on the basis of Fig. 20.

Namely, as shown in Fig. 20, the base station 202 adds a unique number to a packet coming from the network 1, adds the CRC code or the like for the error detection of the received packet at the mobile station, thereafter stores the packet, and makes a copy of the packet including the number (S321 and S322X in Fig. 20). At this time the base station 202 starts a deletion timer for counting a deletion timing for the stored packet, using the input of the packet at the base station 202 as a trigger. The base station 202 may start the deletion timer at the time when it first sends the objective packet.

Then the base station 202 delivers the packet copy to the base station 212 in the packet copy transmissible state (S323). The base station 212 stores the delivered packet and starts the deletion timer for counting the deletion timing for the stored packet, using the input of the packet at the base station 212 as a trigger (S324X). Further, the base station 202 notifies the mobile station 231 of the storage of the packet addressed to the mobile station 231 (S325b).

The mobile station 231 requests a base station with a maximum time-average received power or time-average received power to interference power ratio to make a state transition into the packet copying and transmissible state, as described above, whereby the number of base stations providing the notification of a new packet to the mobile station can be limited to one. This becomes feasible, because the notification is performed from the base station with the maximum time-average receiving quality. In this case, the extra power for the notification can be reduced and interference can be suppressed.

However, if influence of the interference is weak, it is also possible to employ such a method that each packet receiving base station (the base station in the packet copying and transmissible state, or the base station in the packet copy transmissible state) notifies the mobile station 231, as indicated at S325b and S325a in Fig. 18.

Receiving the notification, the mobile station 231 selects a base station with a maximum instantaneous received power or instantaneous received power to interference power ratio among the signals of broadcast signals, common pilot signals, or the like transmitted from two or more base stations (two stations of the base station 202 and base station 212 herein) at that point (S326), and the mobile station 231 issues a request for transmission of the packet to the selected base station (S327). A specific method of this request can be a method of requesting the base station by sending a base station number for specifying the base station and a packet number notified of.

For the method of the request, it is possible to employ a method of sending the request directly to the selected base station through an uplink or a method of notifying the selected base station of the request received at a base station not selected, through the network between the base stations. The reason for it is that an uplink and a downlink exhibit different instantaneous receiving qualities between the mobile station and each base station and that while the maximum receiving quality is yielded through the downlink between the selected base station and the mobile station, the maximum receiving quality can be yielded through the uplink between another base station and the mobile station.

Then the base station receiving the request (the base station 202 herein) transmits the packet to the mobile station 231 (S328). At this time, the base station 202 may notify the mobile station 231 of the storage of two or more packets addressed to the mobile station 231.

The mobile station 231 performs the error detection process of the received packet (S329). When no error is detected, the mobile station 231 notifies the base station 202 in the packet copying and transmissible state of an acknowledgment of arrival of the packet (S330 and S331). This notification may be performed directly to the base station 202 or through the base station 212. When an error is detected, the mobile station 231 selects a base station with a maximum instantaneous or time-average receiving quality at that point (S332) and notifies the base station of a repeat request for retransmission of the packet (S333).

When the base station 202 thereafter receives a repeat request from the mobile station 231, it retransmits the packet corresponding to the unique number (S333, S334, and S335).

In the example of Fig. 20, when a timeout occurs at the deletion timer started at S322X, the base station 202 deletes the stored packet corresponding to the timer (S336X and S337). The base station 212 also deletes the stored packet corresponding to the timer when a timeout occurs at the deletion timer started at S324X (S336Y and S338).

Since the processing of Fig. 20 as described above obviates the need for deletion notification (S336 in Fig. 18), it can suppress increase of the traffic in the network between the base stations due to control packets for the deletion notification. Since the acknowledgment of arrival of the packet from the mobile station (S331 in Fig. 20) is not always necessary, the traffic volume can be further reduced. The timeout value of the deletion timer in Fig. 20 is assumed to be set at a time conceivably enough to accept of the repeat request for retransmission of the packet.

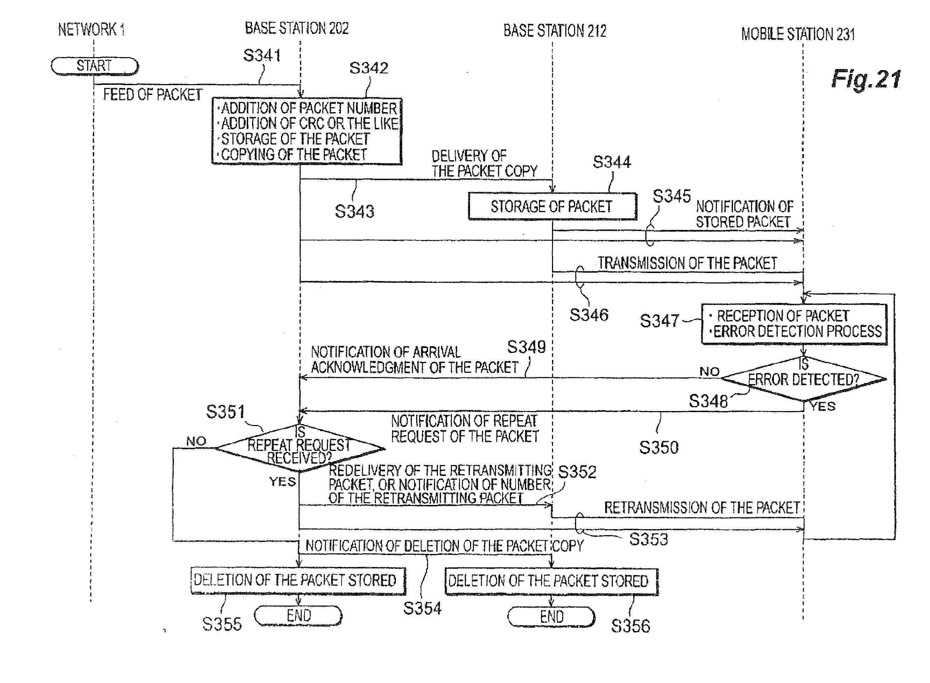

Incidentally, the present embodiment described the cases of one base station transmitting the packet (Fig. 18 and Fig. 20), but it is also possible to employ a configuration wherein the base station 202 and the base station 212 both transmit identical packets if interference or the like is not so significant or if the receiving quality can be enhanced by the diversity reception at the mobile station receiving the identical packets from two or more base stations. This example will be specifically described below referring to Fig. 21.

The base station 202 adds a unique number to the packet coming from the network 1, adds the CRC code or the like for the error detection of the received packet at the mobile station, thereafter stores the packet, and makes a copy of the packet including the number (S341 and S342 in Fig. 21). Then the base station 202 delivers the packet copy to the base station 212 in the packet copy transmissible state (S343), and the base station 212 stores the delivered packet (S344).

Next, each of the base station 202 and the base station 212 notifies the mobile station of the presence of the stored packet (S345). If the mobile station is in a packet receivable state, the notification at S345 can be omitted. Then each of the base station 202 and the base station 212 transmits the stored packet to the mobile station (S346).

The mobile station 231 performs the error detection process (S347) for the received packets. At this time, the mobile station can also perform the diversity reception of identical packets sent from two or more base stations. A method of the diversity reception can be selected from a first method of combining identical bits of the received identical packets bit by bit as they are, a second method of combining the received packets weighted by received powers or received power to interference power ratios bit by bit, and a third method of selecting a packet with no error detected out of packets after the error detection. When no error is detected, the mobile station 231 sends an acknowledgment of arrival of the packet to the base station 202 in the packet copying and transmissible state (S348 and S349).

Receiving the arrival acknowledgment, the base station 202 deletes the stored packet corresponding to the unique number (S351 and S355). The base station 202 also notifies the base station 212 in the packet copy transmissible state of the number of the packet (S354). Receiving the notification, the base station 212 deletes the stored packet copy according to the notification (S356). It is possible to omit the notification at S354 if the system employs the aforementioned method using the timer as shown in Fig. 20.

When an error is detected at S348 on the other hand, the mobile station sends a repeat request for retransmission of the packet to either the base station 202 or the base station 212 (S350). If the base station 202 receives the repeat request, the base station 202 redelivers the retransmitting packet to the base station 212, or notifies the base station 212 of the number of the retransmitting packet (S352). Then each of the base station 202 and the base station 212 retransmits the requested packet (S353).

Further, when the mobile station 231 moves to near a site C in Fig. 15 and gains a large time-average received power or time-average received power to interference power ratio in addition, e.g., in the case of $\Psi_1 = 1$, $\Psi_2 = 1$, and $\Psi_3 = 1$, the base station 202 similarly delivers a copy of a packet arriving at the base station 202 to the base station 212 and the base station 222.

The following will describe the operation of the base stations and the mobile station in a variety of events of transition from a certain state to another state as shown in Fig. 14B.

(4) Description of Event A

The event A is defined so that at the mobile station a transition occurs from the aforementioned Eq (1) holding state to the Eq (2) holding state and the mobile station 231 requests the base station in the packet transmissible state (the i-th base station of $\Psi_1 = 1$) to make a transition into the packet copying and transmissible state and requests the base station in the idle state, newly having turned to $\Psi_i = 1$, to make a transition into the packet copy transmissible state (cf. Fig. 14A and Fig. 14B).

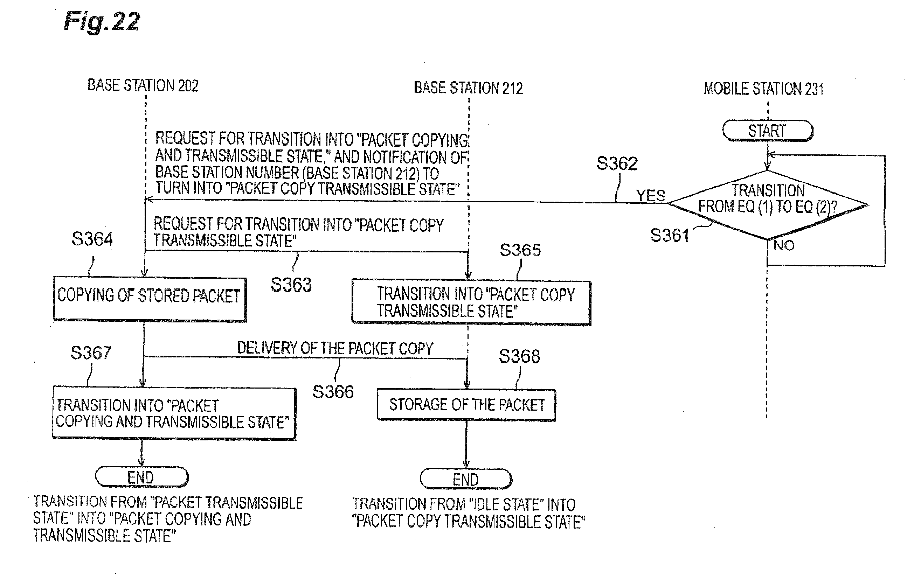

The event A will be specifically described below with reference to Fig. 22 on the assumption that the base station 202 is the base station making the transition from the packet transmissible state into the packet copying and transmissible state and the base station 212 is the base station making the transition from the idle state into the packet copy transmissible state.

When the mobile station 231 moves from the Eq (1) holding state into the Eq (2) holding state, the mobile station 231 sends a request for a transition into the packet copying and transmissible state to the base station 202 and notifies the base station 202 of a base station number for specifying the base station 212 newly having turned to $\Psi_1 = 1$ (S361 and S362 in Fig. 22).

Receiving the notification, the base station 202 requests the base station 212 to make a transition into the packet copy transmissible state (S363), makes a copy of a packet addressed to the mobile station 231, stored at that point (S364), and delivers the packet copy to the base station 212 (S366). Then the base station 202 makes a transition into the packet copying and transmissible state (S367).

In response to the transition request from the base station 202, the base station 212 makes a transition into the packet copy transmissible state (S365). The base station 212 stores the packet copy delivered (S368), This permits the base station 212 to retransmit the packet copy instantly even if the base station 212 receives a request for retransmission of the packet.

Then a packet arriving thereafter at the base station 202 is copied by the base station 202 and the packet copy is delivered to the base station 212, as described above.

(5) Description of Event B

The event B is defined so that at the mobile station a transition occurs from the Eq (2) holding state to the Eq (1) holding state where the base station in the packet copy transmissible state has turned to $\Psi_i = 0$ and only the base station in the packet copying and transmissible state stays in the state of $\Psi_1 = 1$ (the other base stations with $\Psi_i = 0$) and that the mobile station 231 requests the base station in the packet copying and transmissible state to make a transition into the packet transmissible state and requests the base station in the packet copy transmissible state to make a transition into the idle state (cf. Fig. 14A and Fig. 14B).

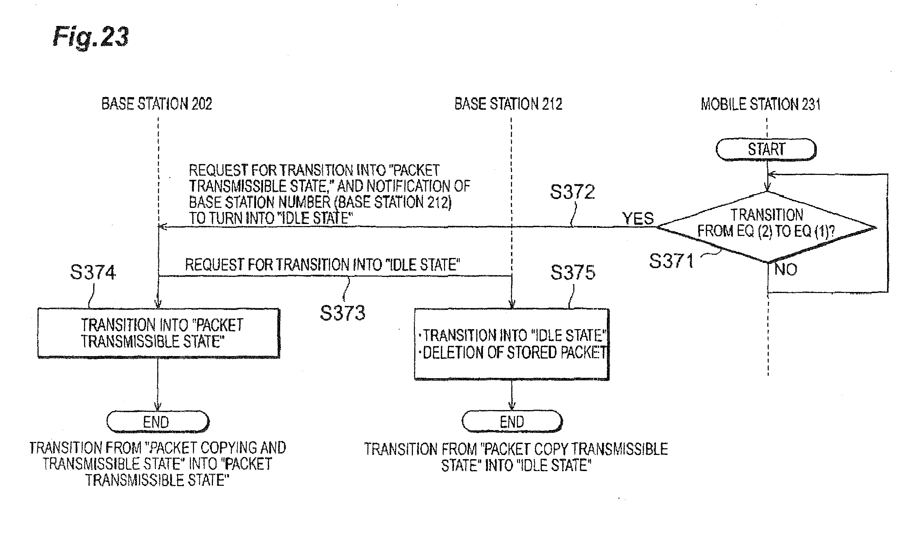

The event B will be specifically described be low with reference to Fig. 23 on the assumption that the base station 202 is the base station making the transition from the packet copying and transmissible state into the packet transmissible state and the base station 212 is the base station making the transition from the packet copy transmissible state into the idle state.

When the mobile station 231 moves from the Eq (2) holding state into the Eq (1) holding state, the mobile station 231 sends a request for a transition into the packet transmissible state to the base station 202 and notifies the base station 202 of a base station number for specifying the base station 212 with $\Psi_i = 0$, i.e., the base station to make a transition into the idle state (S371 and S372 in Fig. 23). Since the two base stations are handing packets addressed to the mobile station, it is also possible to employ a method of sending the request to the base station 212. This method can be implemented in such a manner that the mobile station sends the request for the transition into the idle state to the base station 212 and notifies the base station 212 of the number of the base station (base station 202) to make the transition into the packet transmissible state. The present embodiment will be further described assuming the former method.

Receiving the notification, the base station 202 sends a request for a transition into the idle state to the base station 212 (S373) and makes a transition into the packet transmissible state (S374)

The base station 212 makes a transition into the idle state and deletes the packet stored (S375). The base station 202 does not perform the copying operation of a packet arriving thereafter and does not perform the delivery of the copy thereof to another base station, either.

(6) Description of Event C

The event C is defined so that at the mobile station a transition occurs from the Eq (2) holding state to the Eq (1) holding state to yield $\Psi_i = 0$ for the base station in the packet copying and transmissible state and $\Psi_1 = 1$ for the base station in the packet copy transmissible state and that the mobile station 231 requests the base station in the packet copying and transmissible state to make a transition into the idle state and requests the base station in the packet copy transmissible state to make a transition into the packet transmissible state.

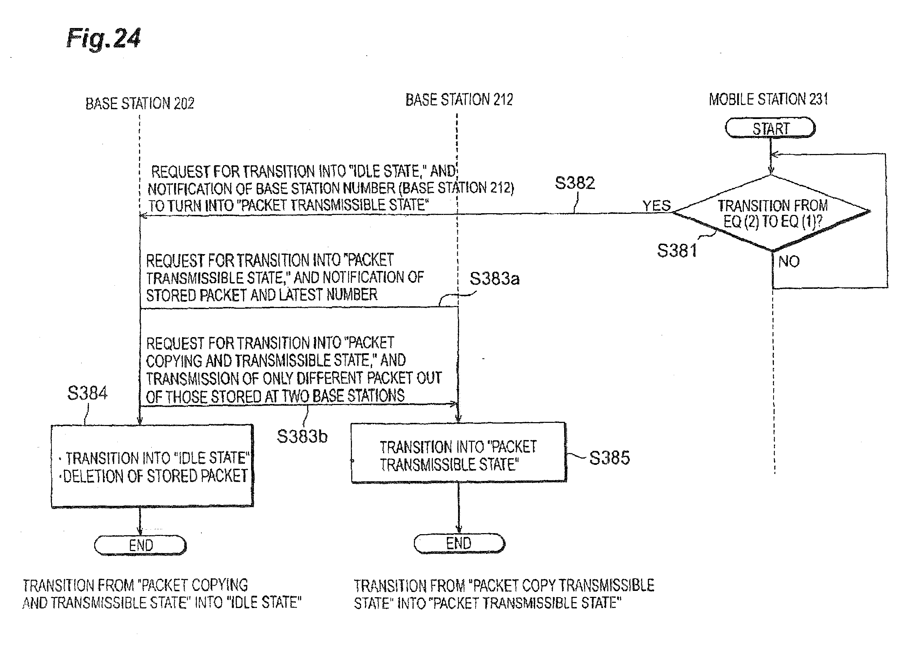

The event C will be specifically described below with reference to Fig. 24 on the assumption that the base station 202 is the base station making the transition from the packet copying and transmissible state into the idle state and the base station 212 is the base station making the transition from the packet copy transmissible state into the packet transmissible state.

When the mobile station 231 moves from the Eq (2) holding state into the Eq (1) holding state, the mobile station 231 sends a request for the transition into the idle state to the base station 202 and notifies the base station 202 of the base station number for specifying the base station 212 to make the transition into the packet transmissible state (S381 and S382 in Fig. 24).

Receiving the notification, the base station 202 sends a request for the transition into the packet transmissible state to the base station 212. Since the base station for adding the unique number is switched over to another, the base station 202 further notifies the base station 212 of a number of a packet currently stored (a packet without an acknowledgment of arrival) and the latest unique number to be added to the packet (S383a), as expressly described in the first embodiment. Since the base station 212 also stores packets at the time of occurrence of this event, it is also feasible to employ a method of referring to the base station 212 and transmitting only a different packet between those stored at the two base stations (S383b). Therefore, either method S383a or S383b is carried out.

Then the base station 202 transitions into the idle state and deletes the stored packet (S384). When the base station 202 in the idle state receives a packet addressed to the mobile station 231, it performs the control to transfer the packet to the base station 212 as it is, as described in the foregoing section "(2) Operation of mobile station and base stations in idle state."

On the other hand, the base station 212 transitions into the packet transmissible state according to the transition request from the base station 202 (S385).

(7) Description of Event D

The event D is defined so that at the mobile station a transition occurs from the Eq (1) holding state to the Eq (2) holding state and, for example, a base station newly having turned into $\Psi_1 = 1$ gives a maximum time-average received power or time-average received power to interference power ratio whereby the mobile station 231 requests the base station in the packet transmissible state (the i-th base station with $\Psi_i = 1$ heretofore) to make a transition into the packet copy transmissible state and also requests the base station in the idle state, newly having turned into $\Psi_1 = 1$, Lo make a transition into the packet copying and transmissible state.

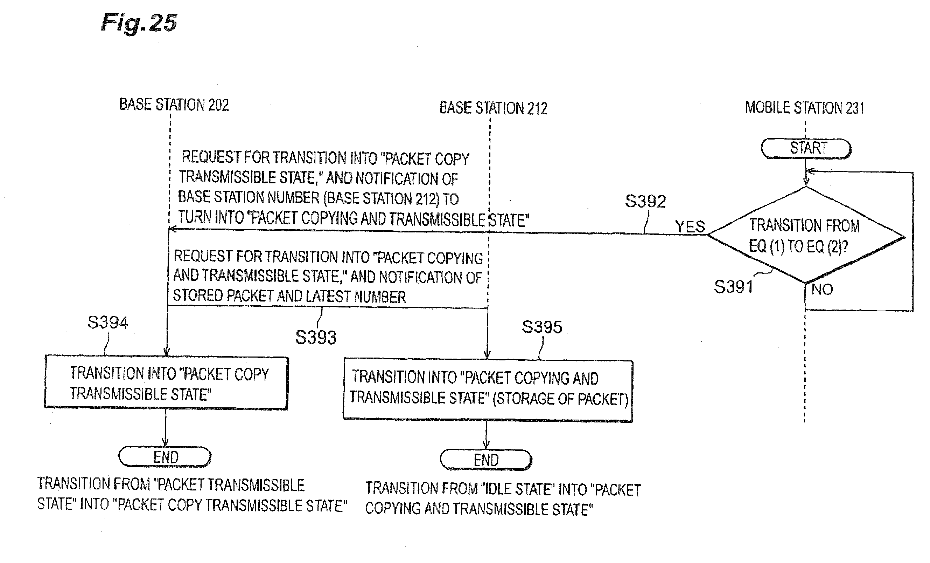

The event D will be specifically described below with reference to Fig. 25 on the assumption that the base station 202 is the base station making the transition from the packet transmissible state into the packet copy transmissible state and the base station 212 is the base station making the transition from the idle state into the packet copying and transmissible state.

When the mobile station 231 moves from the Eq (1) holding state into the Eq (2) holding state, the mobile station 231 sends a request for the transition into the packet copy transmissible state to the base station 202 and notifies the base station 202 of a base station number for specifying the base station newly making the transition into the packet copying and transmissible state (S391 and S392 in Fig. 25).

Receiving the notification, the base station 202 sends a request for the transition into the packet copying and transmissible state to the base station 212. Since the base station for adding the unique number is switched over to another, the base station 202 further notifies the base station 212 of a number of a packet currently stored at the base station 202 (a packet without an acknowledgment of arrival) and the latest unique number to be added to the packet (S393), as expressly described in the first embodiment. This is because the base station 212 makes a transition from the idle state without storage of any packet addressed to the mobile station. Then the base station 202 makes a transition into the packet copy transmissible state (S394).

Based on the notification of these, the base station 212 makes a transition into the packet copying and transmissible state and stores the packet sent from the base station 202 (S395). Then the base station 212 performs such control as to make a copy of a packet newly arriving at the base station 212 and deliver the packet copy to the base station 202.

(8) Description of Event E

The event E is defined so that at the mobile station Eq (2) holds and, for example, the base station with the maximum time-average received power or time-average received power to interference power ratio is changed over to another whereby the mobile station 231 requests the base station in the packet copying and transmissible state to make a transition into the packet copy transmissible state and requests the base station in the packet copy transmissible state to make a transition into the packet copying and transmissible state.

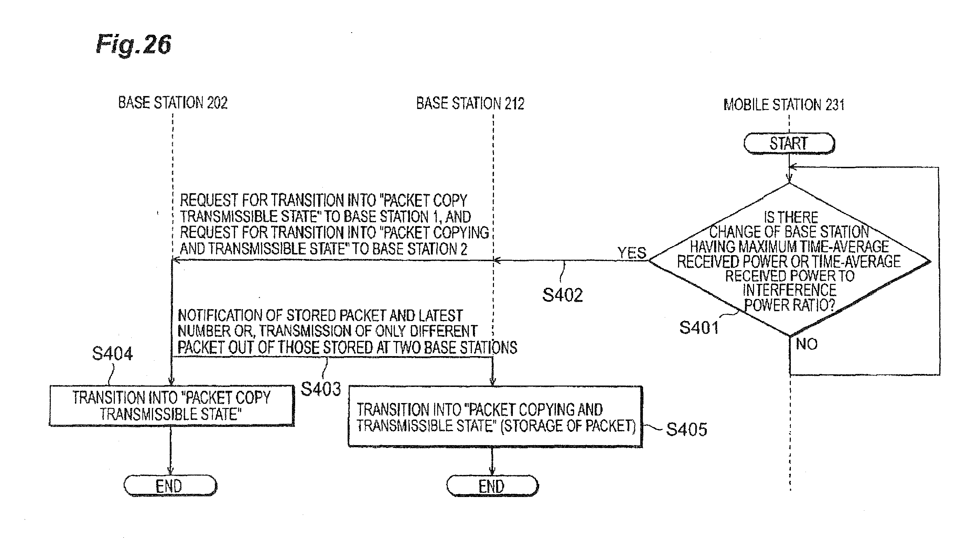

The event E will be specifically described below with reference to Fig. 26 on the assumption that the base station 202 is the base station making the transition from the packet copying and transmissible state into the packet copy transmissible state and the base station 212 is the base station making the transition from the packet copy transmissible state into the packet copying and transmissible state.

When the base station with the maximum time-average received power or time-average received power to interference power ratio is changed over from the base station 202 to the base station 212, the mobile station 231 sends a request for the transition into the packet copy transmissible state to the base station 202 and a request for the transition into the packet copying and transmissible state to the base station 212 (S401 and S402 in Fig. 26).

Receiving the notification, the base station 202 makes the transition into the packet copy transmissible state (S404). Since the base station for adding the unique number is changed over to another, the base station 202 notifies the base station 212 of a number of a packet currently stored (a packet without an acknowledgment of arrival) and the latest unique number to be added to the packet, as expressly described in the first embodiment. Since the base station 212 also stores packets, it is also implemented by such a method that the base station 202 refers to the base station 212 and transmits only a different packet between those stored at the two base stations (S403). The packets stored at the base station 202 are continuously stored as they are, but in the case of the deleting method based on the timeout, the deletion timer is started at this point for all the packets stored.

Based on the notification of these, the base station 212 makes the transition into the packet copying and transmissible state (S405). Then the base station 212 performs such control as to make a copy of a packet newly arriving at the base station 212 and deliver the packet copy to the base station 202.

Since the third embodiment as described above is configured to store packets at respective base stations and transmit packets from one or more base stations to the mobile station without provision of the line control station for delivery of packets separately from the base stations, the traffic volume can be reduced in the network and the transmission delay time of packet can be shorter, so as to increase the throughput and enhance the performance of the entire system.

[Fourth Embodiment]

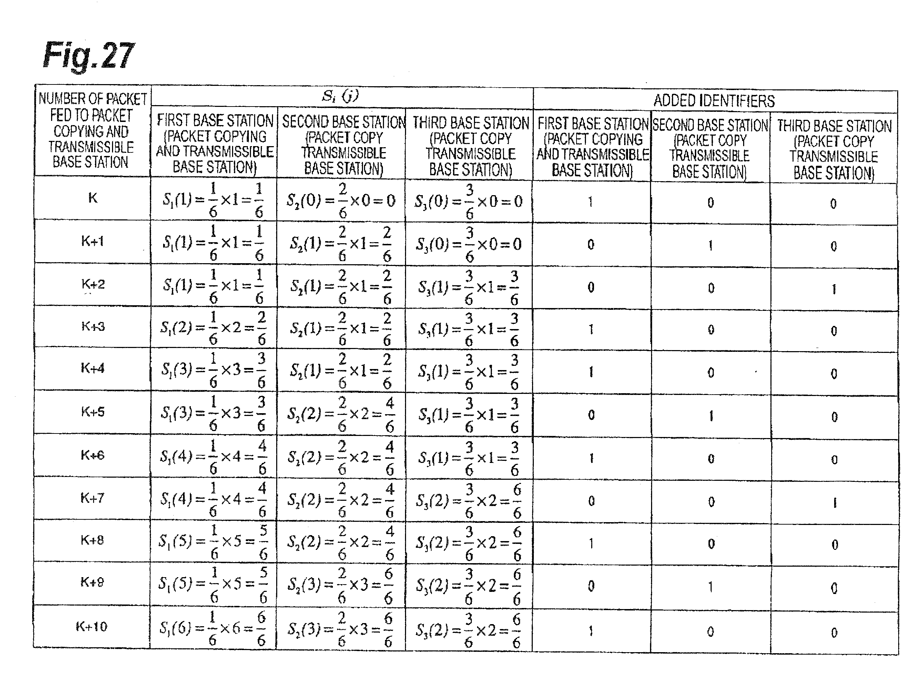

The following will describe the operation concerning handover transmission control with reference to Fig. 27. The configuration of the mobile communication system is the same as the configuration of Fig. 11 as in the third embodiment.

The mobile station receives broadcast signals, common pilot signals, or the like transmitted from a plurality of base stations to determine time-average receiving qualities (e.g., propagation losses herein) between the mobile station and the base stations. Then the mobile station notifies the base station in the packet copying and transmissible state to add the unique number, of the time-average receiving qualities thus determined. Based on the plurality of time-average receiving qualities thus notified of, the base station in the packet copying and transmissible state instructs each of the base stations in the packet copy transmissible state to performs transmission in packet units. Each base station transmits a new packet according to the instructions. When retransmission is requested, only the base station receiving the repeat request from the mobile station retransmits the packet.

The instructions for the transmission in packer units are carried out specifically as follows at the base station to add the unique number. The base station to add the unique number calculates $S_i(j)$ based on Eq (3) below, using the plurality of time-average propagation losses and adds an "identifier for instructions of transmission" to each base station in the ascending order of the base stations from the smallest $S_i(j)$ for the packets sent to its own station. When there are two base stations with the same $S_1(j)$, the base station to add the unique number adds the "identifier for instructions of transmission" to the base station with a smaller time-average propagation loss. The propagation loss in Eq (3) below can be replaced by either of a desired signal to interference power ratio (CIR), a received signal to interference power ratio (STR), a desired signal to noise power ratio (CNR), and a received signal to noise power ratio (SNR), which are indexes indicating the receiving quality.

[Eq. 3]

$$S_i(j) = \frac{L_i}{\sum_{i=1}^{N} L_i} \cdot j \tag{3}$$

In the equation, i represents a number of each base station and j the number of packets received after an update of $L_i$.

As an example, the following will describe the operation carried out after an update of the time-average propagation losses in a state in which there exist three base stations (i = 1-3) capable of transmitting packets to the mobile station. Let us also suppose that i = 1 indicates a base station in the packet copying and transmissible state, i = 2 and 3 base stations in the packet copy transmissible state, and the time-average propagation losses of the respective stations are as follows.

The propagation loss between the first base station (i = 1) and the mobile station: $L_1 = 1$

The propagation loss between the second base station (i = 2) and the mobile station: $L_2 = 2$

The propagation loss between the third base station (i = 3) and the mobile station: $L_3 = 3$

The first packet after the update of the time-average propagation losses is assumed to be the K-th packet. Since $S_i(j)$ is zero for all the stations at this point, the base station to add the unique number adds the identifiers so as to transmit the packet from the first base station with the smallest propagation loss.

The identifiers can be of one-bit length. Namely, instructions with one-bit identifiers can be given by making the base stations operate so as to transmit a packet with an identifier of "1" but to store a packet with an identifier of "0," without sending it. Values of $S_i(j)$ after the addition of the identifiers are as follows.

[Eq. 4]

$$S_1(1) = \frac{1}{6} \qquad S_2(0) = 0 \qquad S_3(0) = 0$$

Then the (K+1)th packet is fed. Since at this point $S_2(O)$ and $S_3(O)$ are zero, the base station to add the unique number adds the identifiers so as to send the packet from the second base station with the smaller propagation loss. Values of $S_i(j)$ at this point are as follows.

[Eq. 5]

$$S_1(1) = \frac{1}{6} \qquad S_2(1) = \frac{2}{6} \qquad S_3(0) = 0$$

At a time of input of the (K+2) th packet, only $S_3(O)$ is zero and minimum, and thus the base station to add the unique number adds the identifiers so as to send the packet from the third base station. Values of $S_i(j)$ at this point are as follows.

[Eq. 6]

$$S_1(1) = \frac{1}{6} \qquad S_2(1) = \frac{2}{6} \qquad S_3(1) = \frac{3}{6}$$

As described above, the base station to add the unique number makes a copy of an input packet and enables the identifier of permitting transmission of the packet, for a certain base station, based on Eq (3) above, in delivery of the packet copy. Fig. 27 presents the calculation results of Eq (3) and the identifier states for the (K+3)th to (K+10)th packets thereafter.

As shown in Fig. 27, at the time of input of the (K+3) th packet thereafter, $S_i(l)$ is minimum as described above, and thus the base station to add the unique number adds the identifiers so as to send the packet from the first base station.

At the time of input of the (K+4)th packet, $S_1(2)$ and $S_2(1)$ are equal, "2/6," and thus the base station to add the unique number adds the identifiers so as to send the packet from the first base station with the smaller propagation loss.

At the time of input of the (K+5)th packet, $S_2(1)$ is minimum, and thus the base station to add the unique number adds the identifiers so as to transmit the packet from the second base station.

At the time of input of the (K+6)th packet, $S_1(3)$ and $S_3(1)$ are equal, "3/6," and thus the base station to add the unique number adds the identifiers so as to transmit the packet from the first base station with the smaller propagation loss.

At the time of input of the (K+7)th packet, $S_3(1)$ is minimum, and thus the base station to add the unique number adds the identifiers so as to transmit the packet from the third base station.

At the time of input of the (K+8)th packet, $S_1(4)$ and $S_2(2)$ are equal, "4/6," and thus the base station to add the unique number adds the identifiers so as to transmit the packet from the first base station with the smaller propagation loss.

At the time of input of the (K+9)th packet, $S_2(2)$ is minimum, and thus the base station to add the unique number adds the identifiers so as to transmit the packet from the second base station.

At the time of input of the (K+10)th packet, $S_1(5)$ is minimum, and thus the base station to add the unique number adds the identifiers so as to transmit the packet from the first base station.

Then each base station transmits only the pocket with the identifier of 1 to the mobile station.

When the time-average propagation losses are updated, the base station to add the unique number resets to $j = 0$ to clear $S_i(j)$ and thereafter continues the execution of the above processing.

When the mobile station sends a request for retransmission, the mobile station selects a base station with the smallest propagation loss at that time and requests the selected base station to retransmit the packet. The reason why an arbitrary base station selected by the mobile station can execute retransmission of the packet is that each base station stores a packet copy delivered.

By the structure and operation as described above, each base station can perform appropriate packet transmission based on the time-average propagation losses, without executing the procedure of notification of packet arrival from the mobile station, and a retransmitting packet can be instantly transmitted from the base station with the smallest propagation loss at that point, whereby it becomes feasible to perform quick retransmission while reducing the interference with other cells or other mobile stations.

[Fifth Embodiment]

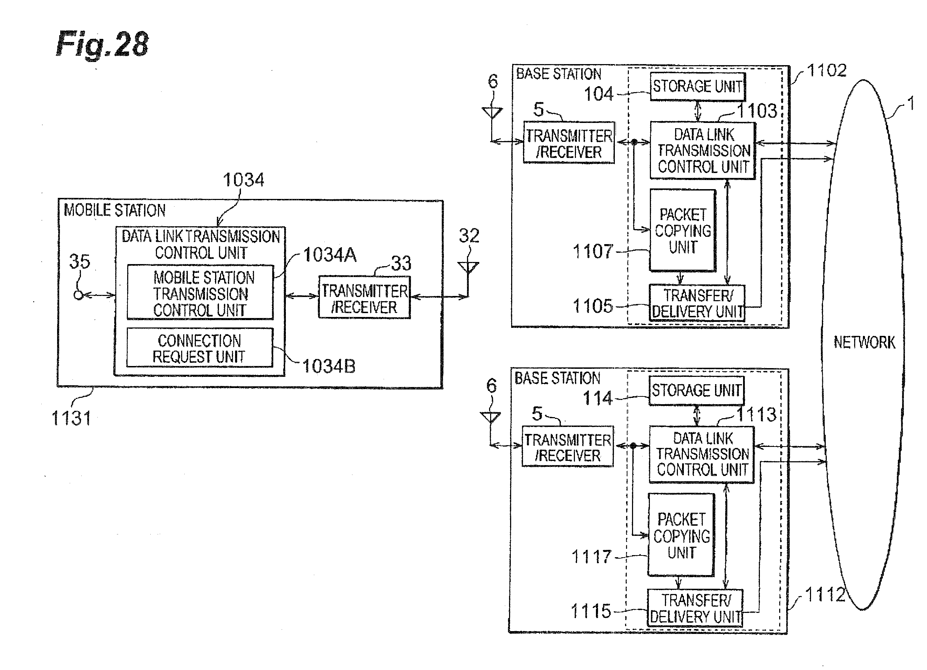

The fifth embodiment of the present invention will be described below with reference to Figs. 28 to 31. As shown in Fig. 28, the mobile communication system in the fifth embodiment is comprised of a mobile station 1131 and a plurality of base stations 1102, 1112, as the aforementioned mobile communication system of the first embodiment (Fig. 7) was, wherein the base stations are communicable with each other through the network 1.

Among these, the configuration of the mobile station 1131 is the same as that of the mobile station 131 in the first embodiment. The configuration of the base station 1102 is different from that of the base station 102 in the first embodiment in that a packet copying unit 1107 for copying a packet is added and the transfer unit 105 of Fig. 7 is replaced by a transfer/delivery unit 1105 for delivering a packet copy to another base station and transferring a packet to another base station performing the data link transmission control. The data link transmission control unit 1103 is different from that in the first embodiment in that it performs the data link transmission control comprising the automatic repeat request control for transmission/reception of a packet to or from the mobile station and transmits to the mobile station, control base station identification information for identification of the base station performing the data link transmission control, instead of the data link transmission control information. The base station 1112 has the same structure as the base station 1102.

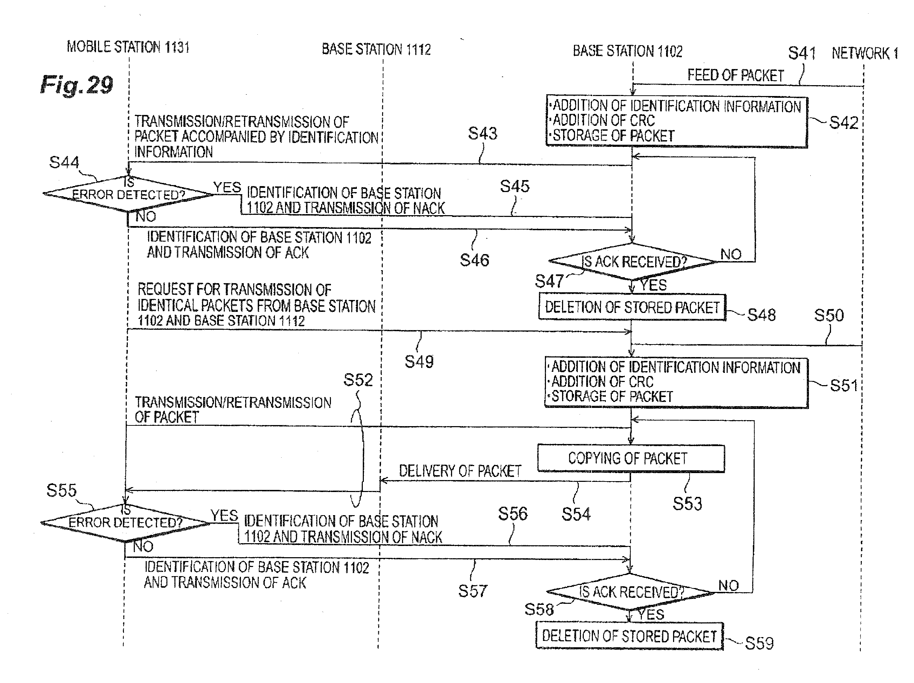

The following will describe the operation in the fifth embodiment. Let us suppose herein that at the initial stage the radio communication quality is good between the mobile station 1131 and the base station 1102, the radio communication quality is not good between the mobile station 1131 and the base station 1112, and thus the mobile station 1131 is in an initial state of being communicable only with the base station 1102. The operation in this initial state will be described along Fig. 29.

At the base station 1102, the data link transmission control unit 1103 accepts a packet from the network 1 at S41 in Fig. 29, and the data link transmission control unit 1103 performs the data link transmission control comprising the automatic repeat request control. At this point the data link transmission control unit 1103 adds identification information to each packet (S42). The identification information used in the present embodiment consists of packet identification information for enabling identification of the packet fed into the data link transmission control unit 1103 and control base station identification information for enabling identification of the control base station performing the data link transmission control (i.e., the base station performing the addition of identification information). The data link transmission control unit 1103 adds the CRC code or the like for the error detection of the received packet, to the packet, stores the packet after the addition (i.e., the packet accompanied by the identification information) in the storage unit 104 (S42), and outputs the packet to the transmitter/receiver 5. The transmitter/receiver 5 modulates the packet into a transmitting signal and thereafter transmits the transmitting signal through the base station antenna 6 to the mobile station 1131 (S43).

On the other hand, at the mobile station 1131, the transmitter/receiver 33 receives and demodulates the signal through the mobile station antenna 32 and feeds the packet obtained by the demodulation to the data link transmission control unit 1034. The data link transmission control unit 1034 performs the data link transmission control comprising the automatic repeat request control and also performs the error detection using the CRC code added to the packet, for the input packet (S44). When the detection results in finding an error in the packet, the data link transmission control unit 1034 identifies the number of the packet for a repeat request and the base station 1102 as the control base station, based on the identification information added, and then transmits a NACK signal to the base station 1102 on the basis of the result of the identification (S45). This results in notifying the data link transmission control unit 1103 of the repeat request for retransmission of the packet. This notification can be implemented by either one selected from the method of directly notifying the base station 1102, the method of notifying the base station 1102 through another base station, and so on. Then the data link transmission control unit 1103 determines that the input signal is not an ACK signal (S47), and retransmits the packet stored (S43).

When the error detection results in finding no error in the packet on the other hand, the data link transmission control unit 1034 identifies the base station 1102 as the control base station, based on the identification information added, and then transmits an ACK signal to the base station 1102 on the basis of the result of the identification (S46). This results in notifying the data link transmission control unit 1103 of an acknowledgment of arrival of the packet. Then the data link transmission control unit 1103 determines that the input signal is ACK signal (S47), and then deletes the packet stored for retransmission (S48).

When movement of the mobile station 1131 leads to deterioration of the communication quality with the base station 1102 having been communicating heretofore with the mobile station 1131, to the level equivalent to the communication quality with the adjacent base station 1102, the mobile station 1131 sends to the base station 1102, a request for transmission of identical packets from the base station 1102 and the base station 1112 (S49), as described in the aforementioned embodiment. In response to the request, with supply of a packet into the base station 1102 after that time (S50), the data link transmission control unit 1103 of the base station 1102 performs the same processing as at S42, for the packet (S51), transmits the packet through the transmitter/receiver 5 to the mobile station 1131 (S52), makes a copy of the packet at the packet copying unit 1107 (S53), and delivers the packet copy through the transfer/delivery unit 1105 to the data link transmission control unit 1113 of the base station 1112 (S54).

Since the data link transmission control unit 1113 is controlled so as to output the delivered packet to the transmitter/receiver 15 as it is, by the data link transmission control unit 1103, identical packets are transmitted from the base station 1102 and from the base station 1112 (S52).

At this step the data link transmission control unit 1113 can determine whether it should output the arriving packet as it is or perform the data link transmission control comprising the automatic repeat request control as described above, by detecting whether the arriving packet is accompanied by the identification information. Specifically, when the data link transmission control unit 1113 detects addition of the identification information to the input packet, it outputs the arriving packet to the transmitter/receiver 15 as it is. On the other hand, when the data link transmission control unit 1113 detects no identification information added to the input packet, it performs the data link transmission control comprising the automatic repeat request control.

The mobile station 1131 performs the error detection for the received packet in the same manner as described before (S55) and outputs a NACK or ACK signal to the base station 1102 (S56 and S57). The base station 1102 determines whether the input signal is ACK (S58), similarly as above, retransmits the packet in the case of NACK (S52), and deletes the stored packet in the case of ACK (S59).

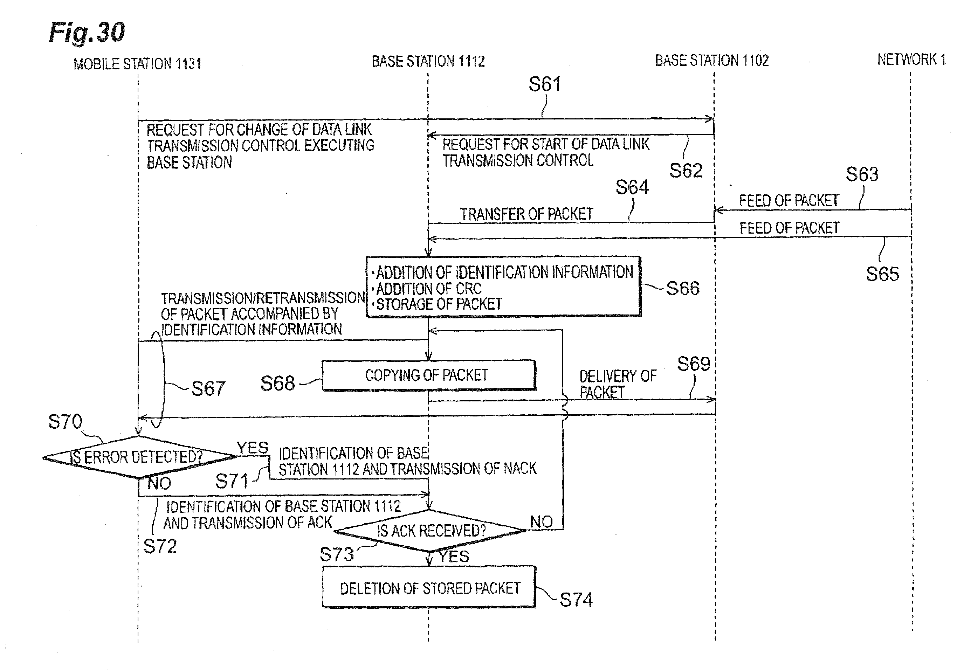

Next, let us suppose that the communication quality becomes deteriorated between the mobile station 1131 and the base station 1102 and the communication quality with the base station 1112 becomes better. The operation carried out upon transmission of packets from a plurality of base stations to the mobile station in this transition state will be described along Fig. 30.

The mobile station 1131 sends a notification of a request for changeover of the base station performing the data link transmission control, to the data link transmission control unit 1103 of the base station 1102 (S61 in Fig. 30). The notification can also be implemented by either of the method of directly notifying the base station 1102, the method of notifying the base station 1102 through another base station, and so on, as described previously.

Receiving the request for the change of the base station, the data link transmission control unit 1103 sends a request for a start of the data link transmission control over the mobile station 1131 through the transfer/delivery unit 1105 to the base station 1112 as a new base station (S62). Further, the system is set so that a packet fed to the data link transmission control unit 1103 after this point is transferred through the transfer/delivery unit 1105 to the base station 1112 as it is. Therefore, when the data link transmission control 1103 receives a packet (S63), the packet is transferred to the base station 1112 by the transfer/delivery unit 1105 as it is (S64).

The data link transmission control unit 1103 of the old base station continues to perform the data link transmission control only over the packets stored for retransmission, in much the same manner as the operation from S52 to S59 in Fig. 29. Namely, for these packets, the data link transmission control unit 1103 of the old base station continues to perform the retransmission control before completion of the arrival acknowledgment thereof. In this operation, identical packets are also transmitted from the base station 1102 and the base station 1112 to the mobile station 1131 in much the same manner as described before.

On the other hand, the data link transmission control unit 1113 of the base station 1112 as a new base station performs the data link transmission control comprising the automatic repeat request control over an arriving packet without identification information (a packet arriving through 564 or S55). At this stage the data link transmission control unit 1113 adds identification information to each packet, adds to the packet the CRC code or the like for the error detection of the received packet, stores the packet after the addition (i.e., the packet accompanied by the identification information) in the storage unit 114 (S66), and outputs the packet to the transmitter/receiver 15. The transmitter/receiver 15 modulates the packet into a transmitting signal and transmits the transmitting signal through the base station antenna 16 to the mobile station 1131 (S67).

The copying unit 1117 makes a copy of the packet accompanied by the identification information (S68), and the packet copy is delivered through the transfer/delivery unit 1115 to the data link transmission control unit 1103 of the base station 1102 (S69). Since the packet is accompanied by the identification information, the data link transmission control unit 1103 controls the transmitter/receiver 5 so as to output the packet as it is, and thus identical packets are transmitted from the base station 1102 and from the base station 1112 (S67).

The mobile station 1131 performs the error detection for the received packet in much the same manner as described before (S70), identifies the base station 1112, and outputs a NACK or ACK signal to the base station 1112 (S71 and S72). The base station 1112 determines whether the input signal is ACK (S73), retransmits the packet in the case of NACK (S67), and deletes the stored packet in the case of ACK (S74).

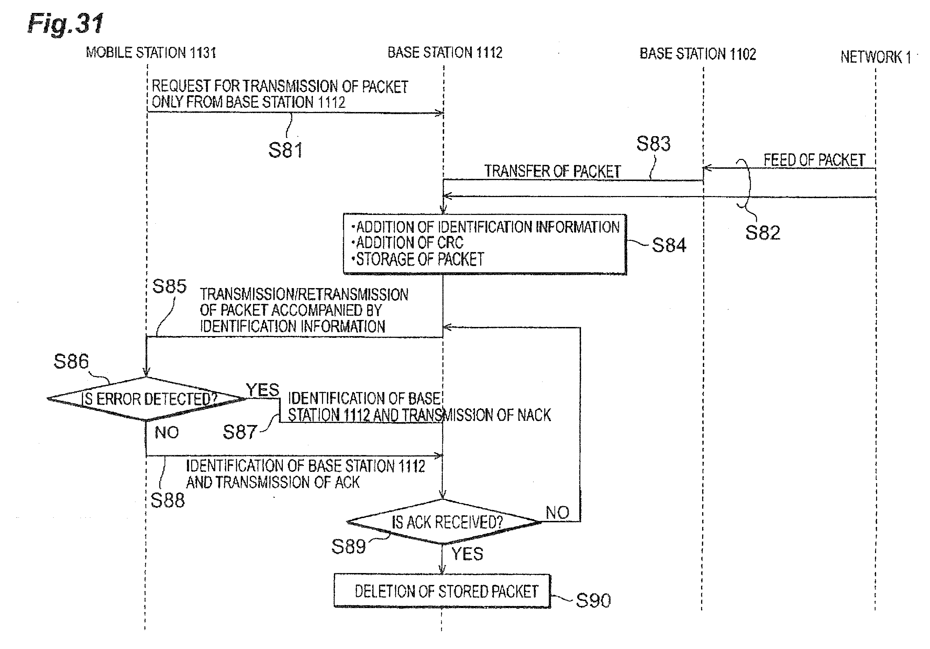

The following will describe the operation carried out when a single base station transmits a packet to the mobile station in a transition state in which the communication quality becomes deteriorated between the mobile station 1131 and the base station 1102 and the communication quality becomes better with the base station 1112, similar to the above, along Fig. 31.

As described in the foregoing embodiment, the data link transmission control unit 1113 of the base station 1112 receives a request for transmission of packet only from the base station 1112, from the mobile station 1131 (S81 in Fig. 31) and thus performs such control as not to perform copying of the packet. For this reason, when a packet is fed to the base station 1102 after that point (S82), the packet is transferred to the base station 1112 (S83) and the aforementioned processing is executed only at the base station 1112 (S84 to S90).

Namely, the data link transmission control unit 1113 of the base station 1112 adds identification information to each packet, adds to the packet the CRC code or the like for the error detection of the received packet, stores the packet after the addition (i.e., the packet accompanied by the identification information) in the storage unit 114 (S84), and outputs the packet to the transmitter/receiver 15. The transmitter/receiver 15 modulates the packet into a transmitting signal and thereafter transmits the transmitting signal through the base station antenna 16 to the mobile station 1131 (S85).

The mobile station 1131 performs the error detection for the received packet in much the same manner as described above (S86), identifies the base station 1112, and outputs a NRCK or ACK signal to the base station 112 (S87 and S88). The base station 1112 determines whether the input signal is ACK (S89), retransmits the packet in the case of NACK (S85), and deletes the stored packet in the case of ACK (S90).

As described above, the control base station performing the data link transmission control transmits to the mobile station the control base station identification information for identification of the control base station instead of the data link transmission control information wherehy the mobile station can identify the control base station on the basis of the control base station identification information and whereby the mobile station can perform the data link transmission control comprising the automatic repeat request control (e.g., a request for connection with a new base station or the like) with respect to the control base station. When the mobile stations and the base station perform the data link transmission control using the control base station identification information instead of the data link transmission control information as described above, it is feasible to reduce the data volume of the control information transmitted and received and decrease the traffic volume of the network.

The present embodiment described the configuration wherein the identification information always consisted of the information for identification of the base station and the information for discrimination of the packet, but the present invention can also be substantiated without increasing the number of bits of the identification information too much, by a configuration wherein the identification information consists of only the information for identification of the packet in a state in which only the data link transmission control unit of one base station executes the data link transmission control comprising the automatic repeat request control and wherein the identification information consists of the information for identification of the packet and the information for identification of the base station in a state in which the data link transmission control units of two or more base stations execute the data link transmission control comprising the automatic repeat request control.

[Sixth Embodiment]

Next, the sixth embodiment of the present invention will be described. In this sixth embodiment, a first method in which only data link transmission control information is transmitted from the first base station to the other base stations, and a second method in which data link transmission control information and packets are transmitted at the same time, or in which packets to which identification information has been added are transmitted, will be described in order. Furthermore, in the present embodiment, a case in which IP (Internet Protocol) packets are used will be described; however, the present embodiment can be used with any packets having a packet construction similar to that of these IP packets.

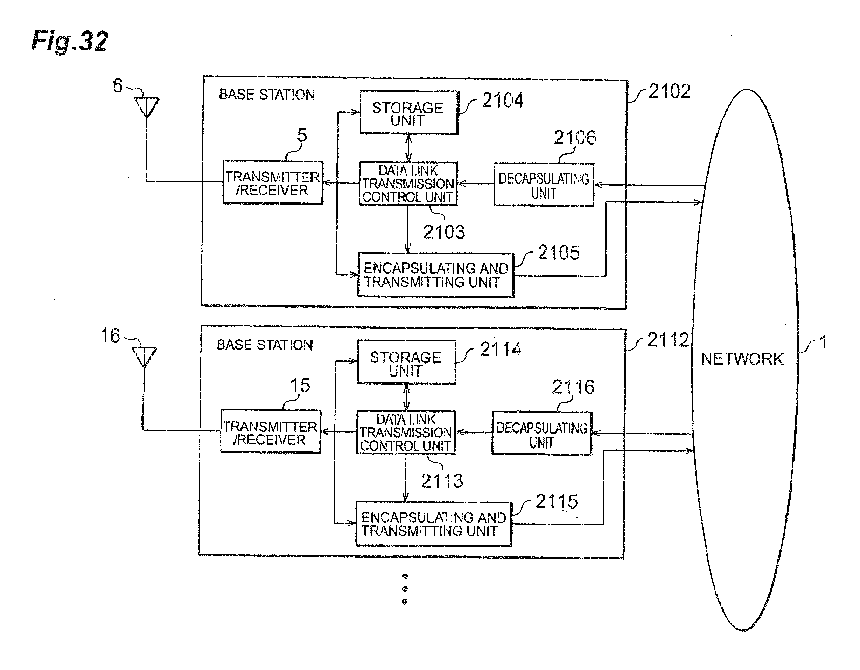

First, the first method will be described. Fig. 32 shows an example of the construction of the apparatus used to perform this first method. In the mobile communication system shown in Fig. 32, a plurality of base stations 2102, 2112 are arranged to allow mutual communications via a network 1.

The base station 2102 comprises a transmitter/receiver 5 which receives data from a wireless network and transmits data to this wireless network via a base station antenna 6, a data link transmission control unit 2103 which performs data link transmission control including the automatic repeat request control described in the first embodiment, and which controls the respective constituent units inside the base station 2102, an encapsulating and transmitting unit 2105 which transmits data link transmission control information to base stations of altered destinations in cases where a request for alteration of the base station is received, and which performs the encapsulation described below, a storage unit 2104 which functions as a temporary memory region for packet data or the like of the data link transmission control unit 2103, and a decapsulating unit 2106 which performs decapsulation (opening of the capsules) of the received encapsulated packets.

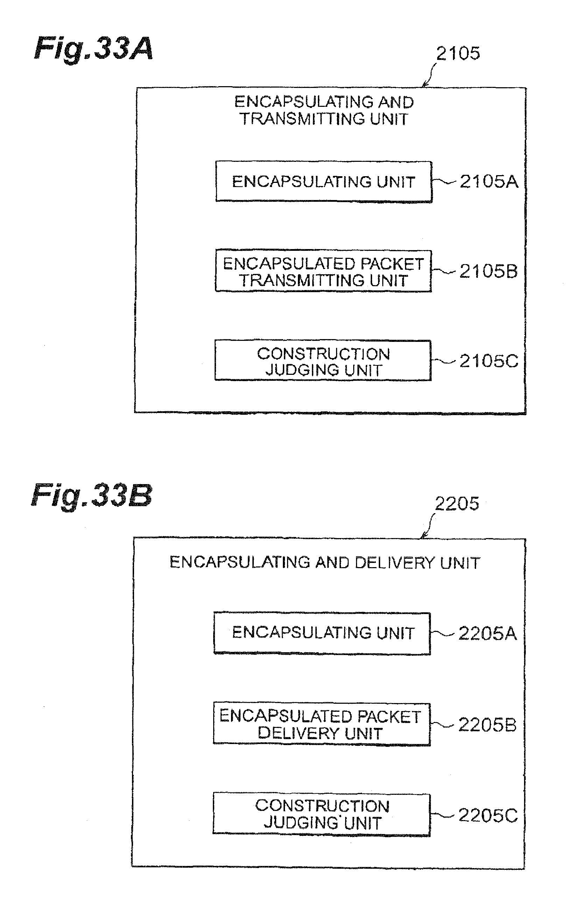

Among these units, the encapsulating and transmitting unit 2105 is constructed from the functional blocks shown in functional terms in Fig. 33A. Specifically, the encapsulating and transmitting unit 2105 comprises an encapsulating unit 2105A which encapsulates the data link transmission control information and the packets that are transmitted, an encapsulated packet transmitting unit 2105B which records the total value of the length of the data link transmission control information and the length of the packet that is transmitted, which expresses the length of the encapsulated packet obtained by encapsulation, in the header of each encapsulated packet, and transmits these encapsulated packets, and a construction judging unit 2105C which judges that the encapsulated packets are constructed containing data link transmission control information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

Furthermore, the other base station 2112 is also constructed in the same manner as the abovementioned base station 2102.

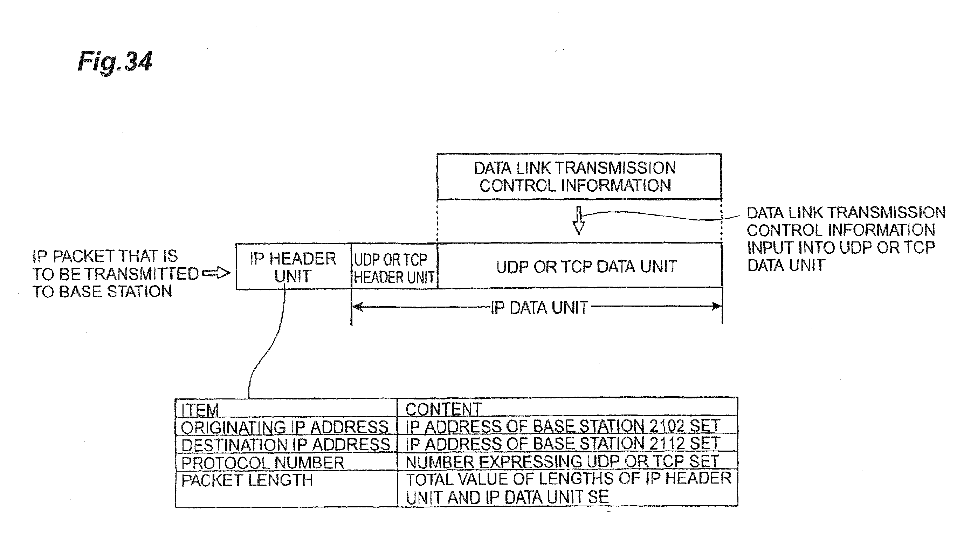

Next, the operation of the first method will be described. The data link transmission control unit 2103 of the base station 2102 outputs data link transmission control information to the encapsulating and transmitting unit 2105. As is shown in Fig. 34, this encapsulating and transmitting unit 2105 sets the IP address of the base station 2102 as the originating address of the IP header unit, and sets the IP address of the base station 2112 as the destination IP address. Furthermore, in order to transmit the data link transmission control information to the base station as UDP or TCP data, the encapsulating and control unit 2105 sets a number that expresses UDP or TCP as the protocol number, and sets the total value of the respective length of the IP header part and IP data part (UDP or TCP header part and UDP or TCP data part) as the packet length. Then, the data link transmission control information that is to be transmitted is input into the UDP or TCP data part, thus constructing the IP packet that is to be transmitted to the base station. The IP packet thus constructed is sent out to the network 1. The IP packet thus sent out reaches the base station 2112 in accordance with the set destination IP address.

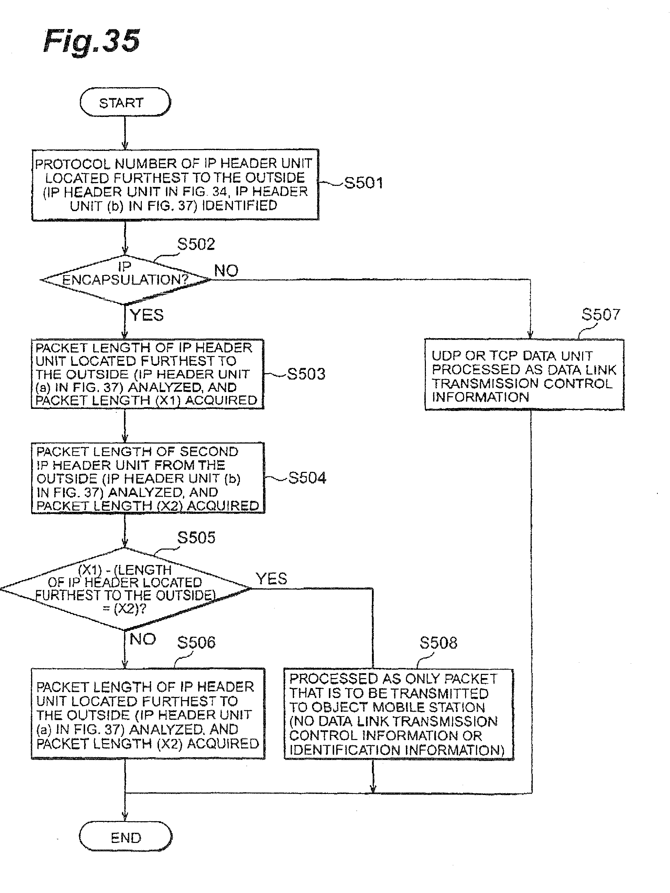

In the base station 2112, the IP packet that has arrived is input into the decapsulation unit 2116. This decapsulation unit performs processing according to the flow chart shown in Fig. 35. Furthermore, Fig. 35 also shows the processing procedure used in the second method, which will be described later.

First of all, the protocol numbers of the IP header part located furthest to the outside in the input packet is identified (S501 in Fig. 35). In the case of this example, the identified protocol number does not express IP encapsulation (a judgement of NO is made is S502); accordingly, the UDP or TCP data part in the IP data part is extracted and used as data link transmission control information (S507). This extracted data link transmission control information is input into the data link transmission control unit 2113. In this data link transmission control unit 2113, the data link transmission control described in the abovementioned embodiments is performed in accordance with the input data link transmission control information.

For example, in cases where information that specifies the mobile station such as the IP address, serial number or the like of the mobile station, and a number that tentatively identifies the latest packet, are contained in the data link transmission control information, the next number following this number is used for automatic repeat request control of the packet addressed to the mobile station. Furthermore, in cases where information that specified the mobile station and ACK information or stored packet deletion information from the mobile station is contained in the data link transmission control information, the packet corresponding to the ACK of this mobile station address stored in the storage unit 2114, or the packet corresponding to the deletion information, is deleted.

Next, the second method (a method in which data link transmission control information and packets are transmitted at the same time, or in which packets to which identification information has been added are transmitted) will be described. The second method is used in cases where packets stored as waiting for ACK and information that tentatively identifies these packets are transmitted to a hand-over destination base station in accordance with hand-over or site diversity during packet transmission, cases where packets held as waiting for transmission and information that tentatively identifies these packets are transmitted to a hand-over destination base station, cases where packets are transmitted together with information tentatively identifying these packets or control base station identification, or both, in order to transmit from a hand-over destination base station, or cases where information that tentatively identifies the packet, control base station identification information, information which indicates whether or not the packet is to be transmitted, or combinations of these different types of information, are delivered along with copied packets to a base station in a copied packet transmissible state.

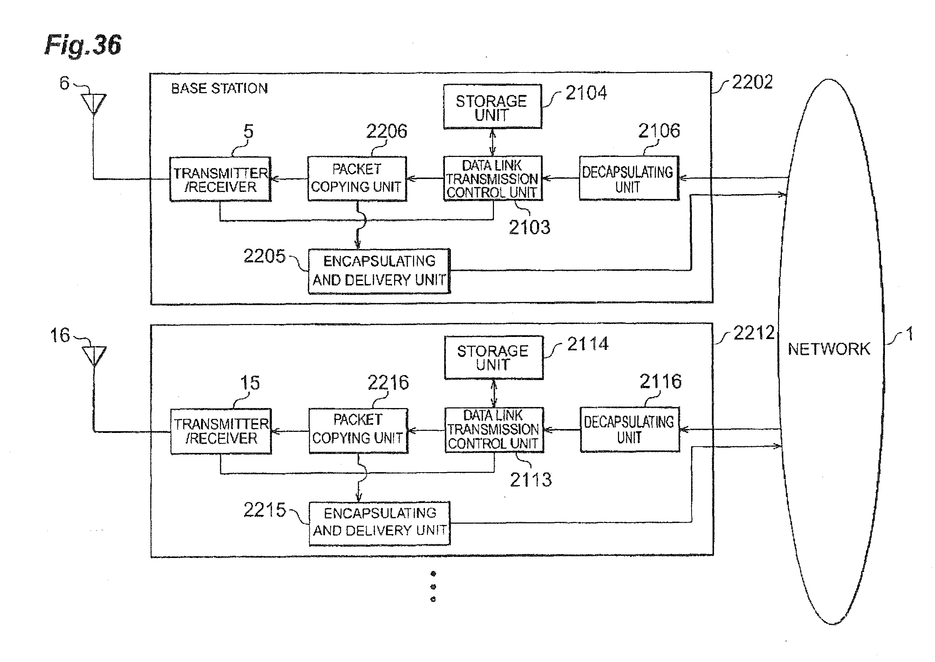

Fig. 36 shows an example of the construction of the apparatus used to perform the second method. In addition to the construction of the base station 2102 shown in Fig. 32, the base station shown in Fig. 36 is further equipped with a packet copying unit 2206 that copies packets, and is equipped with an encapsulating and delivery unit 2205, which delivers the copied packets to other base stations and performs the encapsulation that will be described later, instead of the abovementioned encapsulating and transmitting unit 2105.

Among these units, the encapsulating and delivery unit 2205 is constructed from the functional blocks shown in functional terms in Fig. 33B. Specifically, the encapsulating and delivery unit 2205 comprises an encapsulating unit 2205A which encapsulates the data link transmission control information and the packets that are delivered, an encapsulated packet delivery unit 2205B which records the total value of the length of the data link transmission control information and the length of the delivered packet, expressing the length of the encapsulated packet that is obtained by encapsulation, in the header of each encapsulated packet, and delivers these encapsulated packets, and a construction judging unit 2205C which judges that the encapsulated packets are constructed containing data link transmission control information in cases where the length obtained by subtracting the length of the header of the encapsulated packet from the length of the encapsulated packet that is recorded in the header of the delivered encapsulated packet does not equal the length of the delivered packet recorded in the header of the delivered packet.

Furthermore, the other base station 2212 is also constructed in the same manner as the abovementioned base station 2202.

Next, the operation of the second method will be described. Here, the Description is made, taking an example in which a packet with copied identification information added is delivered from the base station 2202 to the base station 2212.

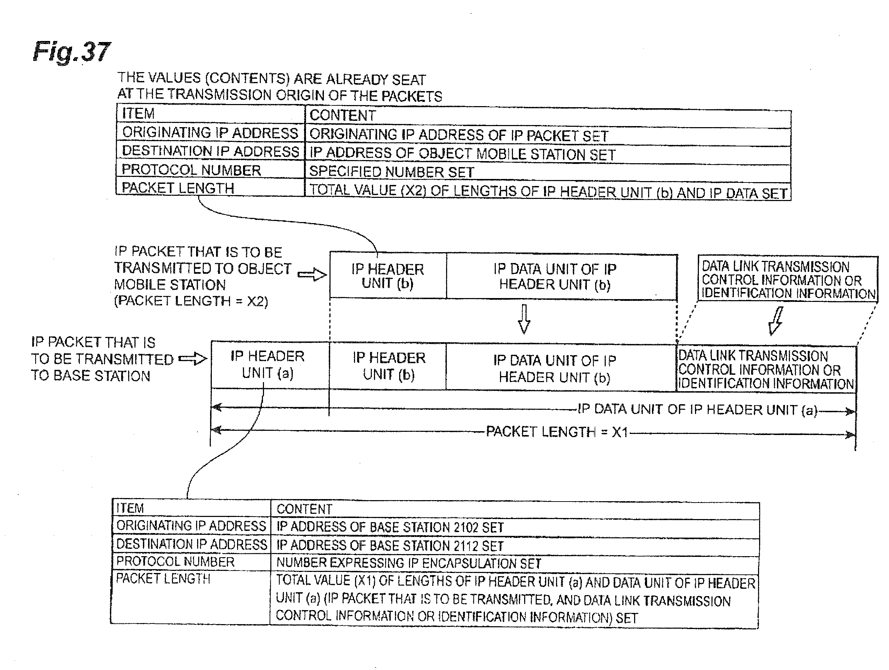

The data link transmission control unit 2103 of the base station 2202 inputs a packet to which identification information has been added into the packet copying unit 2206, This packet copying unit 2206 outputs the input packet to which identification information has been added to the transmitter/receiver 5, and also copies the packet and outputs [the copied packet] to the encapsulating and delivery unit 2205. As is shown in Fig. 37, this encapsulating and delivery unit 2205 sets the IP address of the base station 2202 as the originating IP address in the IP header part (a), and sets the IP address of the base station 2212 as the destination IP address. Furthermore, in order to transmit the IP packet that is transmitted to the object mobile station to other base stations, [the encapsulating and delivery unit 2205] sets a number that expresses IP encapsulation as the protocol number, and sets the total value of the respective lengths of the IP header part (a), IP packet that is transmitted to the object base station and identification information as the packet length.

Then, the IP packet that is to be transmitted to the object mobile station and the identification information are input into the IP data part of the IP header part (a), thus constructing the IP packet is to he transmitted to the base station. The IP packet thus constructed is sent out to the network 1. The IP packet thus sent out reaches the base station 2212 in accordance with the set destination IP address.

In the base station 2112, the IP packet that has arrived is input into the decapsulating unit 2116. This decapsulating unit 2116 performs processing tin accordance with the flow chart shown in Fig. 35 in the same manner as described above. First of all, the protocol number of the IP header part located furthest to the outside of the input packet is identified (S501 in Fig. 35). In the case of this example, the identified protocol number expresses IP encapsulation (i. e., a judgement of YES is made is S502); accordingly, the packet length $X1$ of the packet transmitted to the base station is acquired by analyzing the packet length of the IP header part located furthest to the outside (i. e., the IP header part (a) in Fig. 37) (S503). Next, the packet length $X2$ of the packet transmitted to the object mobile station is acquired by analyzing the length of the second IP header part from the outside (i. e., the IP header part (b) in Fig. 37) (S504). Then, in a case where the following equation (4) using the packet lengths $X1$ and $X2$ thus obtained and the length of the IP header part located furthest to the outside holds true (i. e, in a case where a judgement of YES is made in S505), it is judged that there is no identification information, i. e., that only a packet transmitted to the object base station is present in the IP data part of the IP header part (a).

$$(X1) - (\text{length of IP header located furthest to the outside}) = (X2) \ldots (4)$$

In this case, the IP data part of the IP header part (a) is extracted, and the following processing is performed [on this packet] as an IP packet that is to be transmitted to the object mobile station (S508). Specifically, the extracted IP packet that is to be transmitted to the object mobile station is input into the data link transmission control unit 2113, and the data link transmission control described in the abovementioned embodiments is performed with respect to the input IP packet in this data link transmission control unit 2113.

On the other hand, in cases where equation (4) does not hold true (i. e., in cases where a judgement of NO is made in S505), it is judged that identification information is present, and the following processing is performed (S506).

In this case, information with a length of X2 from the head of the IP data part of the IP header part (a) is separated and extracted as the IP packet that is to be transmitted to the object mobile station, and the remainder of the IP data part of the IP header part (a) is separated and extracted as identification information. The identification information and the extracted IP packet that is to be transmitted to the object mobile station are input into the data link transmission control unit 2113, and the data link transmission control described in the abovementioned embodiments is performed in this data link transmission control unit 2113 using the input IP packet and identification information.

Here, the cases of IP packets with the two different constructions shown in Figs. 34 and 37 were respectively described as packets transmitted or delivered to the base stations. However, by using the method described above, it is possible to distinguish cases in which packets that are to be transmitted or delivered from a certain base station to other base stations contain only data link transmission control information, cases in which such packets contain data link transmission control information and an IP packet that is to be transmitted to the object mobile station, and cases in which such packets contain only an IP packet that is to be transmitted to the object mobile station. Accordingly, control can be smoothly performed on the basis of the data link transmission control information and identification information.

According to the present invention, as described above, the base station executing the data link transmission control comprising the automatic repeat request control is changed over to another according to movement of the mobile station, whereby it becomes feasible to suppress increase of the transmission delay time and to increase the throughput from that before. Even if the base station performing the data link transmission control comprising the automatic repeat request control is changed over to another, the sequential data link transmission control information is transferred to a new base station and the new base station succeeds to the operation to perform retransmission of only packets or blocks without an acknowledgment of arrival, whereby degradation of throughput can be avoided.

According to the present invention, each base station stores packets, whereby it becomes feasible to decrease the delay time of retransmission and increase of the traffic in the network between base stations. It is also feasible to perform smooth packet transmission even during handover.

According to the present invention, in the case where the mobile station exists in a range at or below predetermined reception level where handover is to be made, identical packets are transmitted from a plurality of base stations and the base stations are switched when the mobile station leaves the foregoing range, whereby the time for the handover control is eliminated while realizing execution of the handover control at the base station closest to the mobile station, and whereby the delay of retransmission is reduced, which can realize more efficient data link transmission.

[Further Embodiments]

In an embodiment of the invention, a data link transmission control method of performing data link transmission control may comprise automatic repeat request control for transmission/reception of a packet between a mobile station and a plurality of base stations, wherein when during connection with a first base station, said mobile station sends a request for connection with a second base station to said first base station, said first base station transfers data link transmission control information to said second base station.

In an implementation of this embodiment, said first base station may transfer said data link transmission control information to said second base station at a timing identical with or different from a transfer timing at which the first base station transfers a packet addressed to said mobile station, to said second base station.

In an implementation of this embodiment, when said first base station receives a packet addressed to said mobile station after having transferred the data link transmission control information about said mobile station, or the packet addressed to said mobile station and the data link transmission control information to the second base station on the basis of the request for connection with the second base station from said mobile station, said first base station may transfer the received packet to said second base station.

In an implementation of this embodiment, when said second base station receives a packet addressed to said mobile station between a time immediately after the request for connection with said second base station from said mobile station and a time of reception of the data link transmission control information about said mobile station, or the packet addressed to said mobile station and the data link transmission control information from said first base station, said second base station may store the received packet in a memory.

In an implementation of this embodiment, when said second base station receives a repeat request for retransmission of a packet from said mobile station and has not received the packet addressed to said mobile station from said first base station yet, said second base station may transmit a transfer request for transfer of the packet addressed to said mobile station, to said first base station.

In an implementation of this embodiment, when said first base station receives the request for connection with the second base station from said mobile station, said first base station may transfer only the data link transmission control information on said mobile station, and when said first base station receives the transfer request for transfer of the packet addressed to said mobile station, from said second base station, said first base station may transfer the packet addressed to said mobile station, to said second base station.

In an implementation of this embodiment, packets may be transferred in units of packets or in units of blocks obtained by dividing each packet.

In an implementation of this embodiment, said first base station may encapsulate said data link transmission control information and packets that are transmitted, may record the total value of the length of said data link transmission control information and the length of the packet that is transmitted, expressing the length of the encapsulated packet obtained by encapsulation, in the header of each encapsulated packet, transmits these encapsulated packets, and may judge that the encapsulated packets are constructed containing data link transmission control information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

In an embodiment of the invention, a data link transmission control method of performing data link transmission control may comprise automatic repeat request control for transmission/reception of a packet between a mobile station and a plurality of base stations, wherein a base station performing the data link transmission control transmits to said mobile station, control base station identification information for identification of the base station performing the data link transmission control, instead of data link transmission control information, and wherein the mobile station identifies the base station performing said data link transmission control, based on said control base station identification information.

In an implementation of this embodiment, said base station may encapsulate said data link transmission control information and packets that are transmitted, may record the total value of the length of said data link transmission control information and the length of the packet that is transmitted, expressing the length of the encapsulated packet obtained by encapsulation, in the header of each encapsulated packet, transmits these encapsulated packets, and may judge that the encapsulated packets are constructed containing data link transmission control information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

In an embodiment of the invention, a mobile communication system may comprise a mobile station and a plurality of base stations and is configured to perform transmission/reception of information through a packet, wherein said mobile station comprises: mobile station transmission control means for performing data link transmission control comprising automatic repeat request control for transmission/reception of a packet to or from said base station; and connection request means for issuing a request for connection with a base station as a communicating station; wherein each said base station may comprise: base station transmission control means for performing data link transmission control comprising automatic repeat request control for transmission/reception of a packet to or from said mobile station; and transferring means for transferring data link transmission control information to a second base station, wherein when said base station transmission control means receives a request for connection with a second base station from said mobile station, said base station transmission control means makes said transferring means transfer the data link transmission control information to said second base station.

In an implementation of this embodiment, said transferring means may also transfer a packet addressed to said mobile station, to the second base station, and said base station transmission control means may make said transferring means transfer said data link transmission control information to said second base station at a timing identical with or different from a transfer timing at which said transferring means transfers the packet addressed to said mobile station, to said second base station.

In an implementation of this embodiment, when said base station transmission control means receives a packet addressed to said mobile station after having made said transferring means transfer the data link transmission control information about said mobile station, or the packet addressed to said mobile station and the data link transmission control information to the second base station on the basis of the request for connection with the second base station from said mobile station, said base station transmission control means may make said transferring means transfer the received packet to said second base station.

In an implementation of this embodiment, when said base station transmission control means receives a packet addressed to said mobile station between a time immediately after the request for connection with said base station from said mobile station and a time of reception of the data link transmission control information about said mobile station, or the packet addressed to said mobile station and the data link transmission control information from a base station previously connected with the mobile station, said base station transmission control means may store the received packet in a memory.

In an implementation of this embodiment, when said base station transmission control means receives a repeat request for retransmission of a packet from said mobile station and has not received the packet addressed to said mobile station from the previously connected base station yet, said base station transmission control means may transmit a transfer request for transfer of the packet addressed to said mobile station, to said previously connected base station.

In an implementation of this embodiment, when said base station transmission control means receives the request for connection with the second base station from said mobile station, said base station transmission control means may make said transferring means transfer only the data link transmission control information on said mobile station, and when said base station transmission control means receives the transfer request for transfer of the packet addressed to said mobile station, from said second base station, said base station transmission control means may make said transferring means transfer the packet addressed to said mobile station, to said second base station.

In an implementation of this embodiment said transferring means may transfer packets in units of packets or in units of blocks obtained by dividing each packet.

In an implementation of this embodiment said transmitting means may comprise encapsulating means for encapsulating said data link transmission control information and the packets that are transmitted, encapsulated packet transmitting means for recording the total value of the length of said data link transmission control information and the length of each packet that is transmitted, which expresses the length of the encapsulated packet that is obtained by encapsulation, in the header of each encapsulated packet, and transmitting these encapsulated packets, and construction judging means that judge that the encapsulated packets are constructed containing data link transmission control information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

In an embodiment of the invention, a mobile communication system may comprise a mobile station and a plurality of base stations and configured to perform transmission/reception of information through a packet, wherein each said base station may comprise: base station transmission control means for performing data link transmission control comprising automatic repeat request control for transmission/reception of a packet to or from said mobile station; and transmitting means for transmitting to said mobile station, control base station identification information for identification of the base station performing the data link transmission control, instead of data link transmission control information; and wherein said mobile station comprises: mobile station transmission control means for identifying the base station performing said data link transmission control, based on said control base station identification information, and performing data link transmission control comprising automatic repeat request control for transmission/reception of a packet to or from said base station; and connection request means for issuing a request for connection with a base station as a communicating station.

In an implementation of this embodiment, said transmitting means may comprise encapsulating means for encapsulating said control base station identification information and the packet that is transmitted, encapsulated packet transmitting means for recording the total value of the length of said control base station identification information and the length of the packet that is transmitted, which expresses the length of the encapsulated packet that is obtained by encapsulation, in the header of each encapsulated packet, and transmitting these encapsulated packets, and construction judging means that judge that the encapsulated packets are constructed containing control base station identification information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

In an embodiment of the invention, a data link transmission control apparatus mounted on a base station for performing transmission/reception of information through a packet to or from a mobile station, may comprise: transferring means for transferring to a second base station, data link transmission control information about data link transmission control comprising automatic repeat request control for transmission/reception of a packet; and base station transmission control means for, when receiving a request for connection with the second base station from said mobile station, making said transferring means transfer said data link transmission control information to said second base station.

In an implementation of this embodiment, said transferring means may also transfer a packet addressed to said mobile station, to the second base station, and said base station transmission control means may make said transferring means transfer said data link transmission control information to said second base station at a timing identical with or different from a transfer timing at which said transferring means transfers the packet addressed to said mobile station, to said second base station.

In an implementation of this embodiment, when said base station transmission control means receives a packet addressed to said mobile station after having made said transferring means transfer the data link transmission control information about said mobile station, or the packet addressed to said mobile station and the data link transmission control information to the second base station on the basis of the request for connection with the second base station from said mobile station, said base station transmission control means may make said transferring means transfer the received packet to said second base station.

In an implementation of this embodiment, when said base station transmission control means receives a packet addressed to said mobile station between a time immediately after the request for connection with the base station equipped with said data link transmission control apparatus, from said mobile station and a time of reception of the data link transmission control information about said mobile station, or the packet addressed to said mobile station and the data link transmission control information from a base station previously connected with the mobile station, said base station transmission control means may store the received packet in a memory.

In an implementation of this embodiment, when said base station transmission control means receives a repeat request for retransmission of a packet from said mobile station and has not received the packet addressed to said mobile station from the previously connected base station yet, said base station transmission control means may transmit a transfer request for transfer of the packet addressed to said mobile station, to said previously connected base station.

In an implementation of this embodiment, when said base station transmission control means receives the request for connection with the second base station from said mobile station, said base station transmission control means may make said transferring means transfer only the data link transmission control information on said mobile station, and when said base station transmission control means receives the transfer request for transfer of the packet addressed to said mobile station, from said second base station, said base station transmission control means may make said transferring means transfer the packet addressed to said mobile station, to said second base station.

In an implementation of this embodiment, said transferring means may transfer packets in units of packets or in units of blocks obtained by dividing each packet.

In an implementation of this embodiment, said transmitting means may comprise encapsulating means for encapsulating said data link transmission control information and the packets that are transmitted, encapsulated packet transmitting means for recording the total value of the length of said data link transmission control information and the length of each packet that is transmitted, which expresses the length of the encapsulated packet that is obtained by encapsulation, in the header of each encapsulated packet, and transmitting these encapsulated packets, and construction judging means that judge that the encapsulated packets are constructed containing data link transmission control information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

In an embodiment of the invention, a data link transmission control apparatus mounted on a base station for performing transmission/reception of information through a packet to or from a mobile station, may comprise: base station transmission control means for performing data link transmission control comprising automatic repeat request control for transmission/reception of a packet to or from said mobile station; and transmitting means for transmitting to said mobile station, control base station identification information for identification of the base station performing the data link transmission control, instead of data link transmission control information.

In an implementation of this embodiment, said transmitting means may comprise encapsulating means for encapsulating the control base station identification information and the packet that is transmitted, encapsulated packet transmitting means for recording the total value of the length of the control base station identification information and the length of the packet that is transmitted, which expresses the length of the encapsulated packet that is obtained by encapsulation, in the header of each encapsulated packet, and transmitting these encapsulated packets, and construction judging means that judge that the encapsulated packets are constructed containing control base station identification information in cases where the length obtained by subtracting the length of the header of the encapsulated packet from the length of the encapsulated packet that is recorded in the header of the transmitted encapsulated packet is not equal to the length of the transmitted packet that is recorded in the header of the transmitted packet.

In an embodiment of the invention, a data link transmission control method of performing data link transmission control may comprise automatic repeat request control for transmission/reception of a packet between a mobile station and a plurality of base stations, wherein a first base station may store and may make a copy of packet in which identification information specifying the packet has been added to packet addressed to said mobile station, wherein said first base station may deliver said packet copy to a second base station, wherein said second base station may store said delivered packet copy, and wherein one or more base stations comprising said first base station may transmit to said mobile station the packet accompanied by said identification information, or said delivered packet copy.

In an embodiment of the invention, a data link transmission control method of performing data link transmission control may comprise automatic repeat request control for transmission/reception of a packet between a mobile station and a plurality of base stations, wherein a first base station adds to a packet addressed to said mobile station, identification information for specifying said packet, wherein said first base station stores the packet accompanied by said identification information, and makes a copy of said packet, wherein said first base station delivers said packet copy to a second base station, wherein said second base station stores said delivered packet copy, and wherein one or more base stations comprising said first base station transmit to said mobile station the packet accompanied by said identification information, or said delivered packet copy.

In an implementation of this embodiment, said base stations may perform: deleting said packet on the basis of a timeout of a timer for said packet; deleting said packet on the basis of a notification that a packet identical with said packet has arrived at said mobile station; or, on the basis of a notification of identification information for specifying a packet to be deleted, deleting the packet corresponding to said identification information.

In an implementation of this embodiment, when said first base station notifies said second base station of said identification information for specifying the packet to be deleted, said first base station may employ one or a combination of two or more methods selected from a first method of providing a notification of the identification information every time a packet is deleted, a second method of providing a notification of identification information of a packet deleted last in a predetermined time, and a third method of, upon deletion of a specific packet determined based on a predetermined rule, providing a notification of identification information of said packet.

In an implementation of this embodiment, when said first base station receives a request from said mobile station that a new base station should be designated as a packet-delivered base station, said first base station may make a copy of the packet accompanied by said identification information under storage at said first base station, and delivers the packet copy to said new base station.

In an implementation of this embodiment, when said second base station receives a request from said mobile station that the second base station should be excluded from packet-delivered base stations, the second base station may delete the packet copy addressed to said mobile station under storage at the second base station.

In an implementation of this embodiment, when said first base station, said second base station, or both of said base stations receive and store a packet addressed to said mobile station, said base stations may send a notification of storage of the packet to said mobile station, wherein after reception of the notification, the mobile station may select one base station out of the base stations having provided the notification and issues a request for transmission of the packet to said base station, and wherein the base station receiving the request may transmit the packet.

In an implementation of this embodiment, when said first base station, said second base station, or both of said base stations receive the transmission request from the mobile station while storing a plurality of packets addressed to said mobile station, said base stations may transmit the packets to the mobile station and notify the mobile station of storage of the plurality of packets addressed to the mobile station.

In an implementation of this embodiment, when said mobile station changes a base station desired to transmit a packet addressed to said mobile station itself, said mobile station may notify an original base station before the change of discontinuation of subsequent transmission and may send to a new base station after the change, a request for transmission of a packet addressed to said mobile station itself and identification information of the first packet of a transmitted object.

In an implementation of this embodiment, said mobile station may measure receiving qualities of signals transmitted from a plurality of base stations, said mobile station may select a first base station desired to transmit a packet addressed to said mobile station itself, based on the receiving qualities for the respective base stations, and said mobile station may sends a request for transmission of the packet addressed to said mobile station itself, to the first base station thus selected.

In an implementation of this embodiment, said mobile station may measure receiving qualities of signals transmitted from a plurality of base stations, said mobile station may select a first base station desired to transmit a packet addressed to said mobile station itself, based on the receiving qualities for the respective base stations, said mobile station may notify the first base station thus selected, of the receiving qualities for the respective base stations, and, based on the receiving qualities for said respective base stations, said first base station may determine for each of the other base stations whether a packet to be delivered from the first base station is to be transmitted to said mobile station, and said first base station may provide instructions of transmission operation based on the result of the determination, to the other base stations.

In an implementation of this embodiment, when said mobile station receives identical packets from respective base stations, said mobile station may perform diversity reception of the packets.

In an implementation of this embodiment, said mobile station may measure receiving qualities of signals transmitted from a plurality of base stations, and, based on the receiving qualities for the respective base stations, said mobile station or each base station may send a request for a transition of a communication state to a base station desired to make the transition of the communication state into another communication state.

In an implementation of this embodiment, said communication states may compris: a first state in which no packet transmission/reception is carried out to or from the mobile station; a second state in which a packet addressed to said mobile station is provided with identification information for specifying said packet and in which the packet accompanied by the identification information can be transmitted to the mobile station; a third state in which a packet addressed to said mobile station is provided with identification information for specifying said packet, a copy is made from the packet accompanied by the identification information, the packet copy is delivered, and the packet accompanied by the identification information can be transmitted; and a fourth state in which the packet copy is received from a base station working in said third state and in which the packet copy can be transmitted to the mobile station.

In an implementation of this embodiment, said first base station may encapsulate said identification information and the packets that are delivered, may record the total value of the length of said identification information and the length of the delivered packet, which expresses the length of the encapsulated packet obtained by encapsulation, in the header of each encapsulated packet, and delivers these encapsulated packets, and, in cases where the length obtained by subtracting the length of the header of the encapsulated packet from the length of the encapsulated packet that is recorded in the header of the delivered encapsulated packet is not equal to the length of the delivered packet that is recorded in the header of the delivered packet, may judge that the encapsulated packets are constructed containing identification information.

In an embodiment of the invention, a mobile communication system may comprise a mobile station and a plurality of base stations and configured to perform transmission/reception of information through a packet and perform data link transmission control comprising automatic repeat request control, wherein each said base station may comprise: copying means for making a copy of packet in which identification information specifying the packet has been added to packet addressed to said mobile station; delivering means for delivering the packet copy to another base station; storing means for storing the packet accompanied by said identification information at said base station of its own or a packet delivered from another base station; and transmitting means for transmitting the packet accompanied by said identification information or said delivered packet to said mobile station.

In an embodiment of the invention, a mobile communication system may comprise a mobile station and a plurality of base stations and configured to perform transmission/reception of information through a packet and perform data link transmission control comprising automatic repeat request control, wherein each said base station may comprise: identification information adding means for adding to a packet addressed to said mobile station, identification information for specifying said packet; copying means for making a copy of said packet accompanied by said identification information; delivering means for delivering the packet copy to another base station; storing means for storing the packet accompanied by said identification information at said base station of its own or a packet delivered from another base station; and transmitting means for transmitting the packet accompanied by said identification information or said delivered packet to said mobile station.

In an implementation of this embodiment, said base station may further comprise: deleting means for deleting said packet stored by said storing means.

In an implementation of this embodiment, said base station may further comprise: deleted packet notifying means for notifying another base station of the identification information of said packet to be deleted, by either one method or a combination of two or more methods selected from a first method of, every time the base station deletes a packet, providing a notification of the identification information of the deleted packet, a second method of providing a notification of identification information of a packet deleted last in a predetermined time, and a third method of, upon deletion of a specific packet determined based on a predetermined rule, providing a notification of identification information of said packet.

In an implementation of this embodiment, said base station may further comprise: packet retransmitting means for, upon reception of a request for retransmission of a packet from said mobile station, retransmitting the packet in response to the request.

In an implementation of this embodiment, said base station may further comprise storage notifying means for, upon reception and storage of a packet addressed to said mobile station, sending a notification of the storage of the packet to the mobile station, wherein said transmitting means transmits the packet to the mobile station in response to a request from the mobile station, and wherein said mobile station may further comprise: selecting means for, upon reception of the notification, selecting one base station out of base stations sending the notification; and transmission request means for sending a request for transmission of the packet to the base station selected.

In an implementation of this embodiment, said base station may further comprise: notification control means performing such control that, when receiving a transmission request from the mobile station while storing a plurality of packets addressed to said mobile station, said notification control means makes said transmitting means transmit the packets to the mobile station and makes said storage notifying means send a notification of storage of the plurality of packets addressed to the mobile station, thereto.

In an implementation of this embodiment, said mobile station may further comprise: change occasion notifying means for, when the mobile station changes a base station desired to transmit a packet addressed to said mobile station itself, to another base station, sending a notification of discontinuation of subsequent transmission to the original base station before the change and sending to the new base station after the change, a request for transmission of a packet addressed to said mobile station of its own and identification information of the first packet of a transmitted object.

In an implementation of this embodiment, said mobile station may further comprise: measuring means for measuring receiving qualities of signals transmitted from a plurality of base stations; selecting means for selecting a first base station desired to transmit a packet addressed to said mobile station of its own, based on the receiving qualities for the respective base stations; and transmission request means for sending a request for transmission of a packet addressed to said mobile station of its own to the first base station selected.

In an implementation of this embodiment, said mobile station may further comprise: measuring means for measuring receiving qualities of signals transmitted from a plurality of base stations; selecting means for selecting a first base station desired to transmit a packet addressed to said mobile station of its own, based on the receiving qualities for the respective base stations; and receiving quality notifying means for notifying the first base station selected of the receiving qualities for the respective base stations, and wherein said base station further comprises: determining means for, when the base station of its own is selected as said first base station, determining for each of other base stations whether a packet to be delivered from the base station of its own is to be transmitted to said mobile station, based on the receiving qualities for said respective base stations; and instructing means for providing instructions of transmission operation based on the result of the determination, to the other base stations.

In an implementation of this embodiment, said mobile station may further comprise: diversity reception means for, upon reception of identical packets from respective base stations, performing diversity reception of the packets.

In an implementation of this embodiment, said mobile station may further comprise: measuring means for measuring receiving qualities of signals transmitted from a plurality of base stations; decision means for making a decision about in which communication state each base station is out of a plurality of predetermined communication states, based on the receiving qualities for the respective base stations; and state transition request means for sending a request for a transition of a communication state to a base station desired to make the transition of the communication state into another state, based on the result of the decision.

In an implementation of this embodiment, said plurality of predetermined communication states may comprise: a first state in which no packet transmission/reception is carried out to or from the mobile station; a second state in which a packet addressed to said mobile station is provided with identification information for specifying said packet and in which the packet accompanied by the identification information can be transmitted to the mobile station; a third state in which a packet addressed to said mobile station is provided with identification information for specifying said packet, a copy is made from the packet accompanied by the identification information, the packet copy is delivered, and the packet accompanied by the identification information can be transmitted; and a fourth state in which the packet copy is received from a base station working in said third state and in which the packet copy can be transmitted to the mobile station.

In an implementation of this embodiment, said delivering means may comprise encapsulating means for encapsulating said identification information and the packets that are delivered, encapsulated packet delivering means for recording the total value of the length of said identification information and the length of the packet that is delivered, which expresses the length of the encapsulated packet obtained by encapsulation, in the header of each encapsulated packet, and delivering these encapsulated packets, and construction judging means that judge that the encapsulated packets are constructed containing identification information in cases where the length obtained by subtracting the length of the header of the encapsulated packet from the length of the encapsulated packet that is recorded in the header of the delivered encapsulated packet is not equal to the length of the delivered packet that is recorded in the header of the delivered packet.

In an embodiment of the invention, a base station, together with a mobile station, may make up a mobile communication system configured to perform transmission/reception of information through a packet and perform data link transmission control comprising automatic repeat request control, said mobile communication system comprising a plurality of base stations, said base station may comprise: copying means for making a copy of packet in which identification information specifying the packet has been added to packet addressed to said mobile station; delivering means for delivering the packet copy to another base station; storing means for storing the packet accompanied by said identification information at the base station of its own and a packet delivered from another base station; and transmitting means for transmitting the stored packets to said mobile station.

In an embodiment of the invention, a base station, together with a mobile station, may make up a mobile communication system configured to perform transmission/reception of information through a packet and perform data link transmission control comprising automatic repeat request control, said mobile communication system comprising a plurality of base stations, said base station comprises: identification information adding means for adding to a packet addressed to said mobile station, identification information for specifying said packet; copying means for making a copy of the packet accompanied by said identification information; delivering means for delivering the packet copy to another base station; storing means for storing the packet accompanied by said identification information at the base station of its own and a packet delivered from another base station; and transmitting means for transmitting the stored packets to said mobile station. In an implementation of this embodiment, the base station may further comprise: determining means for, when the mobile station configured to select a first base station desired to transmit a packet addressed to the mobile station, based on receiving qualities of signals transmitted from a plurality of base stations, and notify the first base station of the receiving qualities for the respective base stations, selects the base station of its own as said first base station, determining for each of other base stations whether a packet to be delivered from the base station of its own is to be transmitted to said mobile station, based on the receiving qualities for said respective base stations; and instructing means for providing instructions of transmission operation based on the result of the determination, to the other base stations.

In an implementation of this embodiment, said delivering means may comprise encapsulating means for encapsulating said identification information and the packets that are delivered, encapsulated packet delivering means for recording the total value of the length of said identification information and the length of the packet that is delivered, which expresses the length of the encapsulated packet obtained by encapsulation, in the header of each encapsulated packet, and delivering these encapsulated packets, and construction judging means that judge that the encapsulated packets are constructed containing identification information in cases where the length obtained by subtracting the length of the header of the encapsulated packet from the length of the encapsulated packet that is recorded in the header of the delivered encapsulated packet is not equal to the length of the delivered packet that is recorded in the header of the delivered packet.

In an embodiment of the invention, a mobile station, together with a plurality of base stations, may make up a mobile communication system configured to perform transmission/reception of information through a packet and perform data link transmission control comprising automatic repeat request control, said mobile station may comprise: measuring means for measuring receiving qualities of signals transmitted from a plurality of base stations; selecting means for selecting a first base station desired to transmit a packet addressed to the mobile station of its own, based on the receiving qualities for the respective base stations; and transmission request means for sending a request for transmission of the packet addressed to the mobile station of its own to the first base station selected.

In an embodiment of the invention, a mobile station, together with a plurality of base stations, may make up a mobile communication system configured to perform transmission/reception of information through a packet and perform data link transmission control comprising automatic repeat request control, said mobile station may comprise: measuring means for measuring receiving qualities of signals transmitted from a plurality of base stations having a function of determining for each of other base stations whether a packet to be delivered from the base station of its own is to be transmitted to said mobile station, based on the receiving qualities for the respective base stations, and providing instructions of transmission operation based on the result of the determination, to the other base stations; selecting means for selecting a first base station desired to transmit a packet addressed to said mobile station of its own, based on the receiving qualities for the respective base stations; and receiving quality notifying means for notifying the first base station selected, of the receiving qualities for the respective base stations.

In an embodiment of the invention, a mobile station, together with a plurality of base stations, may make up a mobile communication system configured to perform transmission/reception of information through a packet and perform data link transmission control comprising automatic repeat request control, said mobile station may comprise: measuring means for measuring receiving qualities of signals transmitted from a plurality of base stations; decision means for making a decision about in which communication state each base station is out of a plurality of predetermined communication states, based on the receiving qualities for the respective base stations; and state transition request means for sending a request for a transition of a communication state to a base station desired to make the transition of the communication state into another state, based on the result of the decision.

In an implementation of this embodiment, said plurality of predetermined communication states may comprise: a first state in which no packet transmission/reception is carried out to or from the mobile station; a second state in which a packet addressed to said mobile station is provided with identification information for specifying said packet and in which the packet accompanied by the identification information can be transmitted to the mobile station; a third state in which a packet addressed to said mobile station is provided with identification information for specifying said packet, a copy is made from the packet accompanied by the identification information, the packet copy is delivered, and the packet accompanied by the identification information can be transmitted; and a fourth state in which the packet copy is received from a base station working in said third state and in which the packet copy can be transmitted to the mobile station.

In an implementation of this embodiment, the mobile station may further comprise diversity reception means for, upon reception of identical packets from respective base stations, performing diversity reception of the packets.

In an implementation of this embodiment, the mobile station may further comprise diversity reception means for, upon reception of identical packets from respective base stations, performing diversity reception of the packets.

In an implementation of this embodiment, the mobile station may further comprise diversity reception means for, upon reception of identical packets from respective base stations, performing diversity reception of the packets.

In an embodiment of the invention, a mobile station control program is provided to be executed by a computer mounted on a mobile station, together with a plurality of base stations, making up a mobile communication system configured to perform transmission/reception of information through a packet and perform data link transmission control comprising automatic repeat request control, said computer is configured to execute: a measuring step of measuring receiving qualities of signals transmitted from a plurality of base stations; a selecting step of selecting a first base station desired to transmit a packet addressed to said mobile station of its own, based on the receiving qualities for the respective base stations; and a transmission request step of sending a request for transmission of the packet addressed to said mobile station of its own to the first base station selected.

In an implementation of this embodiment, a computer-readable recording medium is provided wherein the mobile station control program is recorded.

In an embodiment of the invention, a mobile station control program is provided to be executed by a computer mounted on a mobile station, together with a plurality of base stations, making up a mobile communication system configured to perform transmission/reception of information through a packet and perform data link transmission control comprising automatic repeat request control, said computer is configured to execute: a measuring step of measuring receiving qualities of signals transmitted from a plurality of base stations having a function of determining for each of other base stations whether a packet to be delivered from the base station of its own is to be transmitted to said mobile station, based on the receiving qualities for the respective base stations, and providing instructions of transmission operation based on the result of the determination, to the other base stations; a selecting step of selecting a first base station desired to transmit a packet addressed to said mobile station of its own, based on the receiving qualities for the respective base stations; and a receiving quality notifying step of notifying the first base station selected, of the receiving qualities for the respective base stations.

In an implementation of this embodiment, a computer-readable recording medium is provided wherein the mobile station control program is recorded.

In an embodiment of the invention, a mobile station control program is provided to be executed by a computer mounted on a mobile station, together with a plurality of base stations, making up a mobile communication system configured to perform transmission/reception of information through a packet and perform data link transmission control comprising automatic repeat request control, said computer is configured to execute: a measuring step of measuring receiving qualities of signals transmitted from a plurality of base stations; a decision step of making a decision about in which communication state each base station is out of a plurality of predetermined communication states, based on the receiving qualities for the respective base stations; and a transition request step of sending a request for a transition of a communication state to a base station desired to make the transition of the communication state into another state, based on the result of the decision.

In an implementation of this embodiment, a computer-readable recording medium is provided wherein the mobile station control program is recorded.

**Claims**

1. A data link transmission control method of performing data link transmission control comprising automatic repeat request control for transmission/reception of a packet between a mobile station (131, 231) and a plurality of base stations (102, 112, 122, 202, 212, 222),
   wherein a first base station (102, 202) stores (S322) and makes (S322) a copy of packet in which identification information specifying the packet has been added to packet addressed to said mobile station (131, 231),
   wherein said first base station (102, 202) delivers (S323) said packet copy to a second base station (112, 212),
   wherein said second base station stores (S324) said delivered packet copy,
   and wherein one or more base stations (102, 112, 202, 212) comprising said first base station (102, 202) transmit (S328) to said mobile station (131, 231) the packet accompanied by said identification information, or said delivered packet copy;
   wherein said mobile station (231) measures (S461) receiving qualities of signals transmitted from a plurality of base stations (202, 212, 222), and wherein, based (S462) on the receiving qualities for the respective base stations (202, 212, 222), said mobile station (231) or each base station (202, 212, 222) sends (S463) a request for a transition of a communication state to a base station (202, 212, 222) desired to make the transition of the communication state into another communication state,
   wherein said communication states comprise:

   a first state in which no packet transmission/reception is carried out to or from the mobile station (231);
   a second state in which a packet addressed to said mobile station (231) is provided with identification information for specifying said packet and in which the packet accompanied by the identification information can be transmitted to the mobile station (231);
   a third state in which a packet addressed to said mobile station (231) is provided with identification information for specifying said packet, a copy is made from the packet accompanied by the identification information, the packet copy is delivered, and the packet accompanied by the identification information can be transmitted;
   and a fourth state in which the packet copy is received from a base station (202, 212, 222) working in said third state and in which the packet copy can be transmitted to the mobile station (231).

2. The data link transmission control according to Claim 1,
   wherein the first base station (202) adds (S322) to a packet addressed to said mobile station (231), identification information for specifying said packet, wherein said first base station (202) stores (S322) the packet accompanied by said identification information, and makes (S322) a copy of said packet.

3. The data link transmission control method according to Claim 1,
   wherein said base stations (202, 212, 222) perform: deleting said packet on the basis of a timeout of a timer for said packet;
   deleting (S337, S338) said packet on the basis of a notification (S333, S336) that a packet identical with said packet has arrived at said mobile station (231); or,

on the basis of a notification of identification information for specifying a packet to be deleted, deleting the packet corresponding to said identification information.

4. The data link transmission control method according to Claim 3,
wherein when said first base station (202) notifies (S336) said second base station (212) of said identification information for specifying the packet to be deleted, said first base station (202) employs one or a combination of two or more methods selected from a first method of providing a notification (A1) of the identification information every time a packet is deleted,
a second method of providing a notification (B5) of identification information of a packet deleted last in a predetermined time,
and a third method of, upon deletion of a specific packet determined based on a predetermined rule, providing a notification of identification information of said packet.

5. The data link transmission control method according to Claim 1,
wherein when said first base station (202) receives a request (S363) from said mobile station (231) that a new base station (212) should be designated as a packet-delivered base station, said first base station (202) makes (S364) a copy of the packet accompanied by said identification information under storage at said first base station, and delivers (S366) the packet copy to said new base station (212).

6. The data link transmission control method according to Claim 1,
wherein when said second base (212) station receives a request from said mobile station (231) that the second base station (212) should be excluded from packet-delivered base stations, the second base station (212) deletes (S375) the packet copy addressed to said mobile station (231) under storage at the second base station (212).

7. The data link transmission control method according to Claim 1,
wherein when said first base station (202), said second base station (212), or both of said base stations (202, 212) receive (S321) and store (S322, S324) a packet addressed to said mobile station (231), said base stations (202, 212) send a notification (S325a, S325b) of storage of the packet to said mobile station (231), wherein after reception of the notification, the mobile station (231) selects (S328) one base station out of the base stations (202, 212) having provided the notification and issues a request (S327) for transmission of the packet to said base station, and wherein the base station receiving the request transmits (S328) the packet.

8. The data link transmission control method according to Claim 7,
wherein when said first base station (202), said second base station (212), or both of said base stations (202, 212) receive the transmission request (S327) from the mobile station (231) while storing a plurality of packets addressed to said mobile station (231), said base stations (202, 212) transmit (S328) the packets to the mobile station (231) and notify (S328) the mobile station (231) of storage of the plurality of packets addressed to the mobile station (231).

9. The data link transmission control method according to Claim 1,
wherein when said mobile station (231) changes a base station desired to transmit a packet addressed to said mobile station (231) itself, said mobile station (231) notifies an original base station before the change of discontinuation of subsequent transmission and sends to a new base station after the change, a request for transmission of a packet addressed to said mobile station (231) itself and identification information of the first packet of a transmitted object.

10. The data link transmission control method according to Claim 1,
wherein said mobile station (131) measures (S441) receiving qualities of signals transmitted from a plurality of base stations (102, 112, 122),
wherein said mobile station selects (S442) a first base station (102) desired to transmit a packet addressed to said mobile station (131) itself, based on the receiving qualities for the respective base stations (102, 112, 122), and
wherein said mobile station (131) sends (S443) a request for transmission of the packet addressed to said mobile station (131) itself, to the first base station (102) thus selected.

11. The data link transmission control method according to Claim 1,
wherein said mobile station (131) measures (S451) receiving qualities of signals transmitted from a plurality of base stations (102, 112, 122),
wherein said mobile station selects (S452) a first base station (102) desired to transmit a packet addressed to said mobile station (131) itself, based on the receiving qualities for the respective base stations (102, 112, 122),

wherein said mobile station (131) notifies (S453) the first base station (102) thus selected, of the receiving qualities for the respective base stations (102, 112, 122),

wherein, based on the receiving qualities for said respective base stations (102, 112, 122), said first base station (102) determines for each of the other base stations (112, 122) whether a packet to be delivered from the first base station (102) is to be transmitted to said mobile station (131),

and wherein said first base station (102) provides instructions of transmission operation based on the result of the determination, to the other base stations (112, 122).

**12.** The data link transmission control method according to Claim 1,

wherein when said mobile station (131) receives identical packets from respective base stations (102, 112, 122), said mobile station (131) performs diversity reception of the packets.

**13.** The data link transmission control method according to Claim 1,

wherein said first base station (102, 202) encapsulates said identification information and the packets that are delivered,

records the total value of the length of said identification information and the length of the delivered packet, which expresses the length of the encapsulated packet obtained by encapsulation, in the header of each encapsulated packet,

and delivers these encapsulated packets, and,

in cases where the length obtained by subtracting the length of the header of the encapsulated packet from the length of the encapsulated packet that is recorded in the header of the delivered encapsulated packet is not equal to the length of the delivered packet that is recorded in the header of the delivered packet, judges (S505, S506) that the encapsulated packets are constructed containing identification information.

**14.** A mobile communication system comprising a mobile station (231) and a plurality of base stations (202, 212, 222) and configured to perform transmission/reception of information through a packet and perform data link transmission control comprising automatic repeat request control, wherein each said base station (202, 212, 222) comprises:

copying means (206, 216, 226) for making a copy of packet in which identification information specifying the packet has been added to packet addressed to said mobile station (231); delivering means (205, 215, 225) for delivering the packet copy to another base station (202, 212, 222);

storing means (204, 214, 224) for storing the packet accompanied by said identification information at said base station (202, 212, 222) of its own or a packet delivered from another base station (202, 212, 222); and transmitting means (207, 217, 227) for transmitting the packet accompanied by said identification information or said delivered packet to said mobile station (231);

wherein said mobile station (231) further comprises:

measuring means (234D) for measuring receiving qualities of signals transmitted from a plurality of base stations (202, 212, 222);

decision means for making a decision about in which communication state each base station (202, 212, 222) is out of a plurality of predetermined communication states, based on the receiving qualities for the respective base stations (202, 212, 222);

and state transition request means (234G) for sending a request for a transition of a communication state to a base station desired to make the transition of the communication state into another state, based on the result of the decision,

wherein said plurality of predetermined communication states comprise:

a first state in which no packet transmission/reception is carried out to or from the mobile station (231);

a second state in which a packet addressed to said mobile station (231) is provided with identification information for specifying said packet and in which the packet accompanied by the identification information can be transmitted to the mobile station;

a third state in which a packet addressed to said mobile station is provided with identification information for specifying said packet, a copy is made from the packet accompanied by the identification information, the packet copy is delivered, and the packet accompanied by the identification information can be transmitted; and a fourth state in which the packet copy is received from a base station working in said third state and in which the packet copy can be transmitted to the mobile station.

15. The mobile communication system according to Claim 14, wherein each said base station further comprises:

   identification information adding means for adding to a packet addressed to said mobile station, identification information for specifying said packet;
   copying means for making a copy of said packet accompanied by said identification information;
   delivering means for delivering the packet copy to another base station.

16. The mobile communication system according to Claim 14, wherein said base station (202, 212, 222) further comprises:

   deleting means (203B, 203C, 203D) for deleting said packet stored by said storing means.

17. The mobile communication system according to Claim 16, wherein said base station (202, 212, 222) further comprises:

   deleted packet notifying means (203E) for notifying another base station of the identification information of said packet to be deleted, by either one method or a combination of two or more methods selected from a first method of, every time the base station deletes a packet, providing a notification of the identification information of the deleted packet,
   a second method of providing a notification of identification information of a packet deleted last in a predetermined time, and
   a third method of, upon deletion of a specific packet determined based on a predetermined rule, providing a notification of identification information of said packet.

18. The mobile communication system according to Claim 14, wherein said base station (202, 212, 222) further comprises:

   packet retransmitting means (203G) for, upon reception of a request for retransmission of a packet from said mobile station (231), retransmitting the packet in response to the request.

19. The mobile communication system according to Claim 14, wherein said base station (202, 212, 222) further comprises storage notifying means (203H) for, upon reception and storage of a packet addressed to said mobile station (231), sending a notification of the storage of the packet to the mobile station (231), wherein said transmitting means (207, 217, 227) transmits the packet to the mobile station (231) in response to a request from the mobile station (231), and wherein said mobile station (231) further comprises: selecting means (234A) for, upon reception of the notification, selecting one base station out of base stations (202, 212, 222) sending the notification;
   and transmission request means (234B) for sending a request for transmission of the packet to the base station (202, 212, 222) selected.

20. The mobile communication system according to Claim 19, wherein said base station (202, 212, 222) further comprises:

   notification control means (203I) performing such control that, when receiving a transmission request from the mobile station (231) while storing a plurality of packets addressed to said mobile station (231), said notification control means (203I) makes said transmitting means (207, 217, 227) transmit the packets to the mobile station (231) and makes said storage notifying means (203H) send a notification of storage of the plurality of packets addressed to the mobile station (231), thereto.

21. The mobile communication system according to Claim 14, wherein said mobile station (231) further comprises:

   change occasion notifying means (234C) for, when the mobile station (231) changes a base station (202, 212, 222) desired to transmit a packet addressed to said mobile station (231) itself, to another base station (202, 212, 222), sending a notification of discontinuation of subsequent transmission to the original base station (202, 212, 222) before the change and sending to the new base station (202, 212, 222) after the change, a request for transmission of a packet addressed to said mobile station (231) of its own and identification information of the first packet of a transmitted object.

22. The mobile communication system according to Claim 14, wherein said mobile station (231) further comprises:

measuring means (234D) for measuring receiving qualities of signals transmitted from a plurality of base stations (202, 212, 222);

selecting means (234A) for selecting a first base station (202) desired to transmit a packet addressed to said mobile station (231) of its own, based on the receiving qualities for the respective base stations (202, 212, 222); and

transmission request (234B) means for sending a request for transmission of a packet addressed to said mobile station (231) of its own to the first base station (202) selected.

23. The mobile communication system according to Claim 14, wherein said mobile station (231) further comprises:

measuring means (234D) for measuring receiving qualities of signals transmitted from a plurality of base stations (202, 212, 222);

selecting means (234A) for selecting a first base station (202) desired to transmit a packet addressed to said mobile station (231) of its own, based on the receiving qualities for the respective base stations (202, 212, 222); and receiving quality notifying means (234E) for notifying the first base station (202) selected of the receiving qualities for the respective base stations (202, 212, 222),

and wherein said base station (202, 212, 222) further comprises:

determining means (203J) for, when the base station (202, 212, 222) of its own is selected as said first base station (202), determining for each of other base stations (212, 222) whether a packet to be delivered from the base station (202) of its own is to be transmitted to said mobile station (231), based on the receiving qualities for said respective base stations (202, 212, 222);

and instructing means (203K) for providing instructions of transmission operation based on the result of the determination, to the other base stations (212, 222).

24. The mobile communication system according to Claim 14, wherein said mobile station (231) further comprises:

diversity reception means for, upon reception of identical packets from respective base stations, performing diversity reception of the packets.

25. The mobile communication system according to Claim 14, wherein said delivering means (205, 215, 225, 2105, 2115) comprise

encapsulating means (2105A, 2205A) for encapsulating said identification information and the packets that are delivered,

encapsulated packet delivering means (2105B, 2205B) for recording the total value of the length of said identification information and the length of the packet that is delivered, which expresses the length of the encapsulated packet obtained by encapsulation, in the header of each encapsulated packet, and delivering these encapsulated packets, and

construction judging means (2105C, 2205C) that judge that the encapsulated packets are constructed containing identification information in cases where the length obtained by subtracting the length of the header of the encapsulated packet from the length of the encapsulated packet that is recorded in the header of the delivered encapsulated packet is not equal to the length of the delivered packet that is recorded in the header of the delivered packet.

26. A mobile station (231), together with a plurality of base stations (202, 212, 222), making up a mobile communication system configured to perform transmission/reception of information through a packet and perform data link transmission control comprising automatic repeat request control, said mobile station (231) comprising:

measuring means (234D) for measuring receiving qualities of signals transmitted from a plurality of base stations (202, 212, 222);

decision means for making a decision about in which communication state each base station (202, 212, 222) is out of a plurality of predetermined communication states, based on the receiving qualities for the respective base stations (202, 212, 222); and state transition request means (234G) for sending a request for a transition of a communication state to a base station desired to make the transition of the communication state into another state, based on the result of the decision,

wherein said plurality of predetermined communication states comprise:

a first state in which no packet transmission/reception is carried out to or from the mobile station (231);

a second state in which a packet addressed to said mobile station (231) is provided with identification information for specifying said packet and in which the packet accompanied by the identification information can be transmitted to the mobile station (231);

a third state in which a packet addressed to said mobile station (231) is provided with identification information for specifying said packet, a copy is made from the packet accompanied by the identification information, the packet copy is delivered, and the packet accompanied by the identification information can be transmitted; and

a fourth state in which the packet copy is received from a base station working in said third state and in which the packet copy can be transmitted to the mobile station (231).

27. The mobile station (231) according to Claim 26, further comprising diversity reception means for, upon reception of identical packets from respective base stations (202, 212, 222), performing diversity reception of the packets.

28. A mobile station control program to be executed by a computer mounted on a mobile station (231), together with a plurality of base stations (202, 212, 222), making up a mobile communication system configured to perform transmission/reception of information through a packet and perform data link transmission control comprising automatic repeat request control, said computer being configured to execute:

a measuring step of measuring receiving qualities of signals transmitted from a plurality of base stations (202, 212, 222);

a decision step (S361, S371, S381, S391) of making a decision about in which communication state each base station (202, 212, 222) is out of a plurality of predetermined communication states, based on the receiving qualities for the respective base stations (202, 212, 222); and

a transition request step (S362, S372, S382, S392) of sending a request for a transition of a communication state to a base station desired to make the transition of the communication state into another state, based on the result of the decision;

wherein said plurality of predetermined communication states comprise:

a first state in which no packet transmission/reception is carried out to or from the mobile station (231);

a second state in which a packet addressed to said mobile station (231) is provided with identification information for specifying said packet and in which the packet accompanied by the identification information can be transmitted to the mobile station (231);

a third state in which a packet addressed to said mobile station (231) is provided with identification information for specifying said packet, a copy is made from the packet accompanied by the identification information, the packet copy is delivered, and the packet accompanied by the identification information can be transmitted; and

a fourth state in which the packet copy is received from a base station working in said third state and in which the packet copy can be transmitted to the mobile station (231).

29. A computer-readable recording medium wherein the mobile station control program as set forth in Claim 28 is recorded.

**Fig.1**

**Fig.2**

| MOBILE STATION 31 | BASE STATION 12 | BASE STATION 2 | NETWORK 1 |

FEED OF PACKET — T1

T2 — TRANSMISSION OF PACKET (#1)

· ADDITION OF PACKET NUMBER (#1)
· ADDITION OF CRC
· STORAGE OF INPUT PACKET

ERROR DETECTION (ERROR FOUND) — T3

NACK(#1)

T4 — RETRANSMISSION OF PACKET (#1)

RETRANSMISSION OF #1

ERROR DETECTION (NO ERROR FOUND) — T5

ACK(#1)

COMMUNICATION QUALITIES
BASE STATION 12 > BASE STATION 2

DELETION OF STORED PACKET #1

T7

REQUEST FOR CHANGE OF BASE STATION — T6

TRANSFER OF "REQUEST FOR CHANGE OF BASE STATION"

FEED OF PACKET — T8

· ADDITION OF PACKET NUMBER (#2)
· ADDITION OF CRC
· STORAGE OF INPUT PACKET

T10 — TRANSMISSION OF PACKET (#2)

TRANSFER OF PACKET (#2)

T9

ERROR DETECTION (ERROR FOUND)

NACK(#2) — TRANSFER OF NACK (#2) — T12

T11 — T13

RETRANSMISSION OF #2

T14 — RETRANSMISSION OF PACKET (#2)

TRANSFER OF RETRANSMITTING PACKET (#2)

ERROR DETECTION (ERROR FOUND)

ACK(#2) — TRANSFER OF ACK (#2)

T15 — T16

DELETION OF STORED PACKET #2

EP 2 068 488 A2

## Fig.3

```
        ( START AT MOBILE STATION )
                    |
┌──────────────────────────────────────┐
│  MEASUREMENT OF RECEIVING QUALITIES OF │── S441
│ SIGNALS TRANSMITTED FROM PLURAL BASE STATIONS │
└──────────────────────────────────────┘
                    |
┌──────────────────────────────────────┐
│ SELECTION OF ONE BASE STATION MADE TO TRANSMIT │── S442
│  PACKET ADDRESSED TO THE MOBILE STATION │
└──────────────────────────────────────┘
                    |
┌──────────────────────────────────────┐
│  REQUEST FOR TRANSMISSION OF PACKET ADDRESSED │── S443
│ TO THE MOBILE STATION, TO ONE BASE STATION SELECTED │
└──────────────────────────────────────┘
                    |
                ( END )
```

# Fig.4

```
        ( START AT MOBILE STATION )
                    |
 ┌──────────────────────────────────────────────┐
 │   MEASUREMENT OF RECEIVING QUALITIES OF        │
 │ SIGNALS TRANSMITTED FROM PLURAL BASE STATIONS  │─S451
 └──────────────────────────────────────────────┘
                    |
 ┌──────────────────────────────────────────────┐
 │  SELECTION OF ONE BASE STATION MADE TO TRANSMIT │
 │   PACKET ADDRESSED TO THE MOBILE STATION        │─S452
 └──────────────────────────────────────────────┘
                    |
 ┌──────────────────────────────────────────────┐
 │ NOTIFICATION OF RECEIVING QUALITIES FOR RESPECTIVE │
 │  BASE STATIONS, TO ONE BASE STATION SELECTED    │─S453
 └──────────────────────────────────────────────┘
                    |
               (  END  )
```

# Fig.5

```
        ( START AT MOBILE STATION )
                    │
    ┌───────────────────────────────────────┐
    │  MEASUREMENT OF RECEIVING QUALITIES OF SIGNALS │ ─── S461
    │    TRANSMITTED FROM PLURAL BASE STATIONS       │
    └───────────────────────────────────────┘
                    │
    ┌───────────────────────────────────────┐
    │  DECISION ABOUT IN WHICH COMMUNICATION  │
    │     STATE EACH BASE STATION IS OUT OF   │ ─── S462
    │  PREDETERMINED COMMUNICATION STATES     │
    └───────────────────────────────────────┘
                    │
    ┌───────────────────────────────────────┐
    │  REQUEST FOR TRANSITION OF COMMUNICATION │
    │  STATE TO BASE STATION DESIRED TO MAKE   │ ─── S463
    │  TRANSITION OF COMMUNICATION STATE       │
    └───────────────────────────────────────┘
                    │
                ( END )
```

*Fig.6*

MOBILE STATION ~60

COMPUTER ~61

READING UNIT

~61A

~62

*Fig.7*

NETWORK

1

BASE STATION 102
STORAGE UNIT 103
DATA LINK TRANSMISSION CONTROL UNIT 104
TRANSFER UNIT 105
TRANSMITTER /RECEIVER 5
6

BASE STATION 112
STORAGE UNIT 113
DATA LINK TRANSMISSION CONTROL UNIT 114
TRANSFER UNIT 115
TRANSMITTER /RECEIVER 15
16

BASE STATION 122
STORAGE UNIT 123
DATA LINK TRANSMISSION CONTROL UNIT 124
TRANSFER UNIT 125
TRANSMITTER /RECEIVER 25
26

MOBILE STATION
DATA LINK TRANSMISSION CONTROL UNIT 34
MOBILE STATION TRANSMISSION CONTROL UNIT 34A
CONNECTION REQUEST UNIT 34B
TRANSMITTER /RECEIVER 33
32
35
131

**Fig.8**

EP 2 068 488 A2

# Fig.9

EP 2 068 488 A2

## Fig.10A

INPUT PACKET

PACKET/BLOCK CONFIGURATION
AT DATA LINK TRANSMISSION
CONTROL UNIT

ADDITION OF PACKET NUMBER

CRC

## Fig.10B

INPUT PACKET

PACKET/BLOCK CONFIGURATION
AT DATA LINK TRANSMISSION
CONTROL UNIT

ADDITION OF PACKET NUMBER

ADDITION OF BLOCK NUMBER

ONE BLOCK

CRC

CRC

CRC

# Fig.11

EP 2 068 488 A2

# Fig.12

203

| DATA LINK TRANSMISSION CONTROL UNIT |
|---|
| IDENTIFICATION INFORMATION ADDITION BLOCK | —203A |
| FIRST DELETION BLOCK | —203B |
| SECOND DELETION BLOCK | —203C |
| THIRD DELETION BLOCK | —203D |
| DELETED PACKET NOTIFICATION BLOCK | —203E |
| DELIVERY CONTROL BLOCK | —203F |
| PACKET RETRANSMISSION BLOCK | —203G |
| STORAGE NOTIFICATION BLOCK | —203H |
| NOTIFICATION CONTROL BLOCK | —203I |
| DETERMINATION BLOCK | —203J |
| INSTRUCTION BLOCK | —203K |

# Fig.13

234

**DATA LINK TRANSMISSION CONTROL UNIT**

| SELECTION BLOCK | —234A |

| TRANSMISSION REQUEST BLOCK | —234B |

| CHANGE OCCASION NOTIFICATION BLOCK | —234C |

| MEASUREMENT BLOCK | —234D |

| RECEIVING QUALITY NOTIFICATION BLOCK | —234E |

| JUDGING BLOCK | —234F |

| STATE TRANSITION REQUEST BLOCK | —234G |

## Fig.14A

## Fig.14B

| EVENT NAME | STATE TRANSITION OF CERTAIN BASE STATION | | STATE TRANSITION OF ANOTHER BASE STATION |
|---|---|---|---|
| EVENT A | ① | — | ⑥ |
| EVENT B | ② | — | ⑤ |
| EVENT C | ③ | — | ⑦ |
| EVENT D | ④ | — | ⑧ |
| EVENT E | ⑨ | — | ⑩ |

EP 2 068 488 A2

## Fig.15

## Fig.16

EP 2 068 488 A2

*Fig.17*

NETWORK 1      BASE STATION 212 OR BASE STATION 222      OTHER BASE STATION OR BASE STATION 202

START

S311

FEED OF PACKET

S312

TRANSFER OF PACKET

END

Fig.18

NETWORK 1    BASE STATION 202    BASE STATION 212    MOBILE STATION 231

**Fig.19A**

START BASED ON RECEPTION OF PACKET ARRIVAL ACKNOWLEDGMENT
↓
NOTIFICATION OF PACKET NUMBER (DELETION OF THE PACKET) — A1
↓
RETURN

**Fig.19B**

START BASED ON RECEPTION OF PACKET ARRIVAL ACKNOWLEDGMENT
↓
START OF DELETION TIMER — B1
↓
STORAGE OF PACKET NUMBER (DELETION OF THE PACKET) — B2
↓
IS NEW ARRIVAL ACKNOWLEDGMENT RECEIVED? — B3
— YES → (back to B2)
— NO ↓
TIMEOUT? — B4
— NO → (back to B3 loop)
— YES ↓
NOTIFICATION OF LATEST PACKET NUMBER — B5
↓
RETURN

**Fig.19C**

START BASED ON RECEPTION OF PACKET ARRIVAL ACKNOWLEDGMENT
↓
n=1 — C1
↓
STORAGE OF PACKET NUMBER (DELETION OF THE PACKET) — C2
↓
IS NEW ARRIVAL ACKNOWLEDGMENT RECEIVED? — C3
— NO → (loop back)
— YES ↓
n=n+1 — C4
↓
STORAGE OF PACKET NUMBER (DELETION OF THE PACKET) — C5
↓
n=10? — C6
— NO → (back)
— YES ↓
NOTIFICATION OF LATEST PACKET NUMBER — C7
↓
RETURN

67

*Fig.20*

EP 2 068 488 A2

Fig.21

## Fig.22

BASE STATION 202       BASE STATION 212       MOBILE STATION 231

START

S362

REQUEST FOR TRANSITION INTO "PACKET COPYING AND TRANSMISSIBLE STATE," AND NOTIFICATION OF BASE STATION NUMBER (BASE STATION 212) TO TURN INTO "PACKET COPY TRANSMISSIBLE STATE"

TRANSITION FROM EQ (1) TO EQ (2)?

YES

S361

NO

REQUEST FOR TRANSITION INTO "PACKET COPY TRANSMISSIBLE STATE"

S364

S363

S365

COPYING OF STORED PACKET

TRANSITION INTO "PACKET COPY TRANSMISSIBLE STATE"

DELIVERY OF THE PACKET COPY

S367

S368

S366

TRANSITION INTO "PACKET COPYING AND TRANSMISSIBLE STATE"

STORAGE OF THE PACKET

END

END

TRANSITION FROM "PACKET TRANSMISSIBLE STATE" INTO "PACKET COPYING AND TRANSMISSIBLE STATE"

TRANSITION FROM "IDLE STATE" INTO "PACKET COPY TRANSMISSIBLE STATE"

## Fig.23

BASE STATION 202        BASE STATION 212    MOBILE STATION 231

START

REQUEST FOR TRANSITION INTO "PACKET
TRANSMISSIBLE STATE," AND NOTIFICATION OF
BASE STATION NUMBER (BASE STATION 212)
TO TURN INTO "IDLE STATE"

S372

YES

TRANSITION
FROM EQ (2) TO EQ (1)?

S371  NO

REQUEST FOR TRANSITION INTO "IDLE STATE"

S374            S375

S373

TRANSITION INTO "PACKET
TRANSMISSIBLE STATE"

·TRANSITION INTO "IDLE STATE"
·DELETION OF STORED PACKET

END            END

TRANSITION FROM "PACKET COPYING AND
TRANSMISSIBLE STATE" INTO "PACKET
TRANSMISSIBLE STATE"

TRANSITION FROM "PACKET COPY TRANSMISSIBLE
STATE" INTO "IDLE STATE"

EP 2 068 488 A2

# Fig.24

MOBILE STATION 231

BASE STATION 212

BASE STATION 202

START

S381 TRANSITION FROM EQ (2) TO EQ (1)?

YES / NO

S382 REQUEST FOR TRANSITION INTO "IDLE STATE," AND NOTIFICATION OF BASE STATION NUMBER (BASE STATION 212) TO TURN INTO "PACKET TRANSMISSIBLE STATE"

S383a REQUEST FOR TRANSITION INTO "PACKET TRANSMISSIBLE STATE," AND NOTIFICATION OF STORED PACKET AND LATEST NUMBER

S383b REQUEST FOR TRANSITION INTO "PACKET COPYING AND TRANSMISSIBLE STATE," AND TRANSMISSION OF ONLY DIFFERENT PACKET OUT OF THOSE STORED AT TWO BASE STATIONS

S384
· TRANSITION INTO "IDLE STATE"
· DELETION OF STORED PACKET

END

S385 TRANSITION INTO "PACKET TRANSMISSIBLE STATE"

END

TRANSITION FROM "PACKET COPYING AND TRANSMISSIBLE STATE" INTO "IDLE STATE"

TRANSITION FROM "PACKET COPY TRANSMISSIBLE STATE" INTO "PACKET TRANSMISSIBLE STATE"

## Fig.25

BASE STATION 202          BASE STATION 212          MOBILE STATION 231

START

REQUEST FOR TRANSITION INTO "PACKET COPY TRANSMISSIBLE STATE," AND NOTIFICATION OF BASE STATION NUMBER (BASE STATION 212) TO TURN INTO "PACKET COPYING AND TRANSMISSIBLE STATE"

S392   YES

TRANSITION FROM EQ (1) TO EQ (2)?

S391   NO

REQUEST FOR TRANSITION INTO "PACKET COPYING AND TRANSMISSIBLE STATE," AND NOTIFICATION OF STORED PACKET AND LATEST NUMBER

S393

S394

TRANSITION INTO "PACKET COPY TRANSMISSIBLE STATE"

S395

TRANSITION INTO "PACKET COPYING AND TRANSMISSIBLE STATE" (STORAGE OF PACKET)

END          END

TRANSITION FROM "PACKET TRANSMISSIBLE STATE" INTO "PACKET COPY TRANSMISSIBLE STATE"

TRANSITION FROM "IDLE STATE" INTO "PACKET COPYING AND TRANSMISSIBLE STATE"

EP 2 068 488 A2

**Fig.26**

BASE STATION 202      BASE STATION 212      MOBILE STATION 231

START

IS THERE CHANGE OF BASE STATION HAVING MAXIMUM TIME-AVERAGE RECEIVED POWER OR TIME-AVERAGE RECEIVED POWER TO INTERFERENCE POWER RATIO?

REQUEST FOR TRANSITION INTO "PACKET COPY TRANSMISSIBLE STATE" TO BASE STATION 1, AND REQUEST FOR TRANSITION INTO "PACKET COPYING AND TRANSMISSIBLE STATE" TO BASE STATION 2

YES

S402

S401

NO

NOTIFICATION OF STORED PACKET AND LATEST NUMBER OR, TRANSMISSION OF ONLY DIFFERENT PACKET OUT OF THOSE STORED AT TWO BASE STATIONS

S404

S403

TRANSITION INTO "PACKET COPY TRANSMISSIBLE STATE"

TRANSITION INTO "PACKET COPYING AND TRANSMISSIBLE STATE" (STORAGE OF PACKET)

S405

END      END

EP 2 068 488 A2

# Fig.27

| NUMBER OF PACKET FED TO PACKET COPYING AND TRANSMISSIBLE BASE STATION | $S_i(j)$ | | | ADDED IDENTIFIERS | | |
|---|---|---|---|---|---|---|
| | FIRST BASE STATION (PACKET COPYING AND TRANSMISSIBLE BASE STATION) | SECOND BASE STATION (PACKET COPY TRANSMISSIBLE BASE STATION) | THIRD BASE STATION (PACKET COPY TRANSMISSIBLE BASE STATION) | FIRST BASE STATION (PACKET COPYING AND TRANSMISSIBLE BASE STATION) | SECOND BASE STATION (PACKET COPY TRANSMISSIBLE BASE STATION) | THIRD BASE STATION (PACKET COPY TRANSMISSIBLE BASE STATION) |
| K | $S_1(1)=\frac{1}{6}\times1=\frac{1}{6}$ | $S_2(0)=\frac{2}{6}\times0=0$ | $S_3(0)=\frac{3}{6}\times0=0$ | 1 | 0 | 0 |
| K+1 | $S_1(1)=\frac{1}{6}\times1=\frac{1}{6}$ | $S_2(1)=\frac{2}{6}\times1=\frac{2}{6}$ | $S_3(0)=\frac{3}{6}\times0=0$ | 0 | 1 | 0 |
| K+2 | $S_1(1)=\frac{1}{6}\times1=\frac{1}{6}$ | $S_2(1)=\frac{2}{6}\times1=\frac{2}{6}$ | $S_3(1)=\frac{3}{6}\times1=\frac{3}{6}$ | 0 | 0 | 1 |
| K+3 | $S_1(2)=\frac{1}{6}\times2=\frac{2}{6}$ | $S_2(1)=\frac{2}{6}\times1=\frac{2}{6}$ | $S_3(1)=\frac{3}{6}\times1=\frac{3}{6}$ | 1 | 0 | 0 |
| K+4 | $S_1(3)=\frac{1}{6}\times3=\frac{3}{6}$ | $S_2(1)=\frac{2}{6}\times1=\frac{2}{6}$ | $S_3(1)=\frac{3}{6}\times1=\frac{3}{6}$ | 1 | 0 | 0 |
| K+5 | $S_1(3)=\frac{1}{6}\times3=\frac{3}{6}$ | $S_2(2)=\frac{2}{6}\times2=\frac{4}{6}$ | $S_3(1)=\frac{3}{6}\times1=\frac{3}{6}$ | 0 | 1 | 0 |
| K+6 | $S_1(4)=\frac{1}{6}\times4=\frac{4}{6}$ | $S_2(2)=\frac{2}{6}\times2=\frac{4}{6}$ | $S_3(1)=\frac{3}{6}\times1=\frac{3}{6}$ | 1 | 0 | 0 |
| K+7 | $S_1(4)=\frac{1}{6}\times4=\frac{4}{6}$ | $S_2(2)=\frac{2}{6}\times2=\frac{4}{6}$ | $S_3(2)=\frac{3}{6}\times2=\frac{6}{6}$ | 0 | 0 | 1 |
| K+8 | $S_1(5)=\frac{1}{6}\times5=\frac{5}{6}$ | $S_2(2)=\frac{2}{6}\times2=\frac{4}{6}$ | $S_3(2)=\frac{3}{6}\times2=\frac{6}{6}$ | 1 | 0 | 0 |
| K+9 | $S_1(5)=\frac{1}{6}\times5=\frac{5}{6}$ | $S_2(3)=\frac{2}{6}\times3=\frac{6}{6}$ | $S_3(2)=\frac{3}{6}\times2=\frac{6}{6}$ | 0 | 1 | 0 |
| K+10 | $S_1(6)=\frac{1}{6}\times6=\frac{6}{6}$ | $S_2(3)=\frac{2}{6}\times3=\frac{6}{6}$ | $S_3(2)=\frac{3}{6}\times2=\frac{6}{6}$ | 1 | 0 | 0 |

EP 2 068 488 A2

# Fig.28

EP 2 068 488 A2

**Fig.29**

MOBILE STATION 1131  BASE STATION 1112  BASE STATION 1102  S41  NETWORK 1

FEED OF PACKET

·ADDITION OF IDENTIFICATION INFORMATION
·ADDITION OF CRC                                              ~S42
·STORAGE OF PACKET

TRANSMISSION/RETRANSMISSION OF
PACKET ACCOMPANIED BY IDENTIFICATION          S43
INFORMATION

S44

IS
ERROR DETECTED?      YES  IDENTIFICATION OF BASE STATION      S45
                          1102 AND TRANSMISSION OF NACK
            NO

IDENTIFICATION OF BASE STATION 1102
AND TRANSMISSION OF ACK                 S46

                                        IS ACK RECEIVED?    NO
                                   S47            YES

REQUEST FOR TRANSMISSION OF            DELETION OF STORED PACKET   ~S48   S50
IDENTICAL PACKETS FROM BASE STATION
1102 AND BASE STATION 1112

                        S49

                                        ·ADDITION OF IDENTIFICATION INFORMATION
                         S52            ·ADDITION OF CRC                            ~S51
TRANSMISSION/RETRANSMISSION            ·STORAGE OF PACKET
OF PACKET

                                        COPYING OF PACKET

                          DELIVERY OF PACKET
S55                                                    S53

IS
ERROR DETECTED?      YES  IDENTIFICATION OF BASE STATION      S56   S54
                          1102 AND TRANSMISSION OF NACK
            NO

IDENTIFICATION OF BASE STATION 1102
AND TRANSMISSION OF ACK                 S57

                                        IS ACK RECEIVED?    NO
                                   S58            YES

                                        DELETION OF STORED PACKET   ~S59

## Fig.30

MOBILE STATION 1131      BASE STATION 1112      BASE STATION 1102      NETWORK 1

S61

REQUEST FOR CHANGE OF DATA LINK TRANSMISSION CONTROL EXECUTING BASE STATION

REQUEST FOR START OF DATA LINK TRANSMISSION CONTROL

S62

S63

S64

TRANSFER OF PACKET

FEED OF PACKET

FEED OF PACKET

S65

- ADDITION OF IDENTIFICATION INFORMATION
- ADDITION OF CRC
- STORAGE OF PACKET

S66

TRANSMISSION/RETRANSMISSION OF PACKET ACCOMPANIED BY IDENTIFICATION INFORMATION

S69

S67     S68    COPYING OF PACKET     DELIVERY OF PACKET

S70

IS ERROR DETECTED?    YES    IDENTIFICATION OF BASE STATION 1112 AND TRANSMISSION OF NACK

NO    S71

IDENTIFICATION OF BASE STATION 1112 AND TRANSMISSION OF ACK

IS ACK RECEIVED?    NO

S72

S73    YES

DELETION OF STORED PACKET    S74

EP 2 068 488 A2

## Fig.31

MOBILE STATION 1131      BASE STATION 1112      BASE STATION 1102      NETWORK 1

REQUEST FOR TRANSMISSION OF PACKET
ONLY FROM BASE STATION 1112

S81

S83

FEED OF PACKET

TRANSFER OF PACKET

S82

·ADDITION OF IDENTIFICATION INFORMATION
·ADDITION OF CRC    S84
·STORAGE OF PACKET

S85   TRANSMISSION/RETRANSMISSION
OF PACKET ACCOMPANIED BY
IDENTIFICATION INFORMATION

S86

IS ERROR DETECTED?    YES   IDENTIFICATION OF BASE
STATION 1112 AND TRANSMISSION OF NACK

NO    S87

IDENTIFICATION OF BASE STATION 1112
AND TRANSMISSION OF ACK

S88

IS ACK RECEIVED?   NO

S89   YES

DELETION OF STORED PACKET    S90

EP 2 068 488 A2

*Fig.32*

EP 2 068 488 A2

## Fig.33A

2105

ENCAPSULATING AND
TRANSMITTING UNIT

ENCAPSULATING UNIT — 2105A

ENCAPSULATED PACKET
TRANSMITTING UNIT — 2105B

CONSTRUCTION
JUDGING UNIT — 2105C

## Fig.33B

2205

ENCAPSULATING AND DELIVERY UNIT

ENCAPSULATING UNIT — 2205A

ENCAPSULATED PACKET
DELIVERY UNIT — 2205B

CONSTRUCTION
JUDGING UNIT — 2205C

## Fig.34

IP PACKET THAT IS TO BE TRANSMITTED ⇒ TO BASE STATION

| IP HEADER UNIT | UDP OR TCP HEADER UNIT | UDP OR TCP DATA UNIT |

DATA LINK TRANSMISSION CONTROL INFORMATION

DATA LINK TRANSMISSION CONTROL INFORMATION INPUT INTO UDP OR TCP DATA UNIT

←—————IP DATA UNIT—————→

| ITEM | CONTENT |
|---|---|
| ORIGINATING IP ADDRESS | IP ADDRESS OF BASE STATION 2102 SET |
| DESTINATION IP ADDRESS | IP ADDRESS OF BASE STATION 2112 SET |
| PROTOCOL NUMBER | NUMBER EXPRESSING UDP OR TCP SET |
| PACKET LENGTH | TOTAL VALUE OF LENGTHS OF IP HEADER UNIT AND IP DATA UNIT SE |

# Fig.35

```
              ┌─────────┐
              │  START  │
              └─────────┘
                   │
                   ▼
    ┌───────────────────────────────┐
    │ PROTOCOL NUMBER OF IP HEADER UNIT │
    │  LOCATED FURTHEST TO THE OUTSIDE  │── S501
    │ (IP HEADER UNIT IN FIG. 34, IP HEADER │
    │  UNIT (b) IN FIG. 37) IDENTIFIED  │
    └───────────────────────────────┘
                   │
                   ▼        S502
                 ◇ IP ◇      NO
              ◇ ENCAPSULATION? ◇ ──────────────────────┐
                 ◇    ◇                                  │
                   │ YES                                 │
                   ▼                                     ▼              S507
    ┌───────────────────────────┐        ┌──────────────────────────┐
    │ PACKET LENGTH OF IP HEADER │        │  UDP OR TCP DATA UNIT     │
    │ UNIT LOCATED FURTHEST TO   │        │  PROCESSED AS DATA LINK   │
    │ THE OUTSIDE (IP HEADER UNIT│── S503  │  TRANSMISSION CONTROL     │
    │ (a) IN FIG. 37) ANALYZED, AND│       │  INFORMATION              │
    │ PACKET LENGTH (X1) ACQUIRED│        └──────────────────────────┘
    └───────────────────────────┘
                   │
                   ▼
    ┌───────────────────────────┐
    │ PACKET LENGTH OF SECOND    │
    │ IP HEADER UNIT FROM THE    │
    │ OUTSIDE (IP HEADER UNIT (b)│── S504
    │ IN FIG. 37) ANALYZED, AND  │
    │ PACKET LENGTH (X2) ACQUIRED│
    └───────────────────────────┘
                   │
                   ▼         S505
              ◇ (X1) - (LENGTH ◇     YES
          ◇ OF IP HEADER LOCATED ◇ ──────────┐
          ◇ FURTHEST TO THE OUTSIDE) ◇        │
              ◇   = (X2)?   ◇                 │
                   │ NO   S506                │       S508
                   ▼                          ▼
    ┌───────────────────────────┐    ┌──────────────────────────┐
    │ PACKET LENGTH OF IP HEADER │    │ PROCESSED AS ONLY PACKET  │
    │ UNIT LOCATED FURTHEST TO   │    │ THAT IS TO BE TRANSMITTED │
    │ THE OUTSIDE (IP HEADER UNIT│    │ TO OBJECT MOBILE STATION  │
    │ (a) IN FIG. 37) ANALYZED, AND│   │ (NO DATA LINK TRANSMISSION │
    │ PACKET LENGTH (X2) ACQUIRED│    │ CONTROL INFORMATION OR    │
    └───────────────────────────┘    │ IDENTIFICATION INFORMATION)│
                   │                  └──────────────────────────┘
                   │                          │
                   ▼                          ▼
              ┌─────────┐
              │   END   │
              └─────────┘
```

Fig.36

## Fig.37

THE VALUES (CONTENTS) ARE ALREADY SEAT
AT THE TRANSMISSION ORIGIN OF THE PACKETS

| ITEM | CONTENT |
|------|---------|
| ORIGINATING IP ADDRESS | ORIGINATING IP ADDRESS OF IP PACKET SET |
| DESTINATION IP ADDRESS | IP ADDRESS OF OBJECT MOBILE STATION SET |
| PROTOCOL NUMBER | SPECIFIED NUMBER SET |
| PACKET LENGTH | TOTAL VALUE (X2) OF LENGTHS OF IP HEADER UNIT (b) AND IP DATA SET |

IP PACKET THAT IS TO BE
TRANSMITTED TO OBJECT ⟹
MOBILE STATION
(PACKET LENGTH = X2)

| IP HEADER UNIT (b) | IP DATA UNIT OF IP HEADER UNIT (b) | | DATA LINK TRANSMISSION CONTROL INFORMATION OR IDENTIFICATION INFORMATION |

IP PACKET THAT IS
TO BE TRANSMITTED ⟹
TO BASE STATION

| IP HEADER UNIT (a) | IP HEADER UNIT (b) | IP DATA UNIT OF IP HEADER UNIT (b) | DATA LINK TRANSMISSION CONTROL INFORMATION OR IDENTIFICATION INFORMATION |

◄———————IP DATA UNIT OF IP HEADER UNIT (a)———————►
◄———————PACKET LENGTH = X1———————►

| ITEM | CONTENT |
|------|---------|
| ORIGINATING IP ADDRESS | IP ADDRESS OF BASE STATION 2102 SET |
| DESTINATION IP ADDRESS | IP ADDRESS OF BASE STATION 2112 SET |
| PROTOCOL NUMBER | NUMBER EXPRESSING IP ENCAPSULATION SET |
| PACKET LENGTH | TOTAL VALUE (X1) OF LENGTHS OF IP HEADER UNIT (a) AND DATA UNIT OF IP HEADER UNIT (a) (IP PACKET THAT IS TO BE TRANSMITTED, AND DATA LINK TRANSMISSION CONTROL INFORMATION OR IDENTIFICATION INFORMATION) SET |

EP 2 068 488 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP HEI10136426 B